# EUROPEAN PATENT SPECIFICATION

(11) **EP 2 827 306 B1**
(45) Date of publication and mention of the grant of the patent: **12.01.2022**
(21) Application number: 13761311.3
(22) Date of filing: 28.02.2013
(51) Int. Cl.: G07D 11/10, G07D 11/50, G07D 7/12

(54) **VALUABLE MEDIA PROCESSING DEVICE**
VERARBEITUNGSVORRICHTUNG FÜR WERTMEDIEN
DISPOSITIF DE TRAITEMENT DE SUPPORTS DE VALEUR

(30) Priority: 15.03.2012 JP 2012059153; 27.09.2012 JP 2012215157; 27.09.2012 JP 2012215159; 27.12.2012 JP 2012285711
(43) Date of publication of application: 21.01.2015
(73) Proprietor: Glory Ltd., Himeji-shi, Hyogo 670-8567 (JP)
(72) Inventor: NISHIDA, Shigenobu, Himeji-shi Hyogo 670-8567 (JP); IWAHARA, Tetuya, Himeji-shi Hyogo 670-8567 (JP); KAJITA, Shoji, Himeji-shi Hyogo 670-8567 (JP); SUZUKI, Masaaki, Himeji-shi Hyogo 670-8567 (JP); ARIKATA, Jun, Himeji-shi Hyogo 670-8567 (JP); SATO, Hirotaka, Himeji-shi Hyogo 670-8567 (JP); KOBAYASHI, Toshiyuki, Himeji-shi Hyogo 670-8567 (JP)
(74) Representative: SSM Sandmair
(86) International application number: PCT/JP2013/055554
(87) International publication number: WO 2013/137012

(56) References cited:
- EP-A1- 2 267 666
- EP-A1- 2 343 690
- JP-A- 2006 227 929
- JP-A- 2007 011 843
- US-A1- 2010 060 921

## Description

### TECHNICAL FIELD

The present invention relates to a valuable medium processing apparatus that processes valuable media, such as money and valuable securities. The present invention more particularly relates to a valuable medium processing apparatus that strictly and efficiently processes damaged valuable media.

### BACKGROUND ART

In financial institutions such as banks, various operations are performed, such as depositing and dispensing operations performed according to instructions from customers and revenue and expenditure for managing money handled within the bank. In recent years, considering the security, reliability, and labor saving, there is a trend to use money processing apparatuses to perform the operations in financial institutions so that money is handled not by human but by machine as far as possible. A money processing apparatus includes functions for performing various processes, such as a depositing process, dispensing process and managing process of coins, banknotes, and valuable securities including checks (hereinafter "valuable medium", collectively), for example. By using such a money processing apparatus, it is possible to perform various operations such as calculating the total sum of banknotes by automatically recognizing the denomination of the banknotes, managing the banknotes by storing them in a predetermined storage unit by denominations based on the recognition results, and dispensing the banknotes corresponding to designated denominations and amounts from among the stored banknotes.

Financial institutions may sometimes receive torn or partially lost banknotes and the like. Excessively damaged or stained valuable media which cannot be successfully transported when deposited into a money processing apparatus and those of which denomination and the like cannot be recognized are stored into a postbox (an external box) installed near the apparatus instead of depositing them in the money processing apparatus. Information about the banknotes stored in the postbox such as denomination is visually verified by a bank clerk, and the bank clerk manually inputs the information into the money processing apparatus (see Patent Document 1, for example).

### [Conventional Art Documents]

### [Patent Documents]

[Patent Document 1] Japanese Patent Application Laid-Open No. 2003-150793

EP 2 343 690 A1 relates to a paper sheet management system which includes a paper sheet handling apparatus having a plurality of stacking units, the paper sheet handling apparatus being configured to sort paper sheets and to stack the paper sheets in the respective stacking units, and a paper sheet management apparatus configured to store, in a database, paper sheet detailed information of the paper sheets sorted and stacked by the paper sheet handling apparatus; the paper sheet management apparatus; a paper sheet management method; and a paper sheet management program.

EP 2 267 666 A1 relates to a banknote handling apparatus that recognizes whether or not a banknote accepted is an unfit note based on a predetermined unfit-note determination criterion, and to a banknote handling method.

### DISCLOSURE OF INVENTION

### PROBLEMS TO BE SOLVED BY THE INVENTION

However, no money processing apparatus exists capable of strictly and efficiently processing excessively damaged or stained valuable media, which cannot be processed in a money processing apparatus, by a method suitable to the process. Accordingly, there is a need of a money processing apparatus capable of processing such valuable media. Specifically, considering the security, reliability, and labor saving, there is a need of a technique capable of sorting, storing, and managing valuable media that cannot be processed in a conventional money processing apparatus.

After the input operation of data on damaged valuable media, each data has to be checked whether it was inputted correctly. In this operation, for example, much labor and time are required for identifying which data corresponds to which damaged valuable medium. For money that are damaged to such an extent that authentication as to whether they are money is required, the authentication thereof cannot be performed in ordinary banks but can be performed only in the central bank (in Japan, the Bank of Japan). Accordingly, various laborious processes may become necessary to carry out preparation of predetermined documents provided by the central bank, management of the documents and damaged money within the bank office, presentation of the documents and damaged money to the central bank at a predetermined timing, and the like. For damaged money not requiring the authentication, it is necessary to perform a process for managing them within the bank and then transferring to other banks or exchanging them at the central bank into money that can be circulated in the market at a predetermined timing. Accordingly, it is also necessary to perform management of the timing of such a process in addition to the management of the type and the number of damaged money.

The present invention has been devised considering the problems explained above, and an object of the present invention is to provide a valuable medium processing apparatus for strictly and efficiently performing a process of excessively damaged or stained valuable media.

### MEANS TO SOLVE THE PROBLEMS

The above-mentioned problems are solved by the subject-matter of the independent claims. The dependent claims are directed to embodiments of advantage.

The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### ADVANTAGES OF THE INVENTION

According to the present invention, a valuable medium processing apparatus captures an image of a valuable medium, the captured image is displayed on a screen, and the operator is allowed to input data such as the denomination, value, and the like of the valuable media while verifying the displayed image. Accordingly, information on damaged valuable media, which cannot be recognized in a money processing apparatus, can be correctly input. Moreover, valuable media are stored within the apparatus and image data is stored in association with data such as the denomination and the value, and accordingly, in verifying the content of the data, the actual valuable media corresponding to the data can be securely and easily found. Accordingly, damaged valuable media can be strictly managed.

Moreover, according to the present invention, by simply depositing damaged valuable media which have been requested by customers to be exchange into normal money into the valuable medium processing apparatus, documents required for authentication and exchange are automatically selected and printed, and accordingly, the load of operations performed for the receiving process can be reduced. Furthermore, it is automatically determined whether a damaged valuable media satisfies conditions previously set in the receiving condition, and accordingly, the load of operations for the receiving process can be reduced and no documents are to be wastefully printed because the documents are printed only if the conditions in the receiving condition are satisfied.

Moreover, according to the present invention, it is enabled to change the storage location within the apparatus according to the state of the valuable media deposited into the apparatus, and accordingly, mixture of valuable media in various different conditions present in the same box can be prevented. Accordingly, the operator is enabled to efficiently perform a post process.

Furthermore, according to the present invention, valuable media, which cannot be processed in another money processing apparatus, are stored within the valuable medium processing apparatus and thus the number of the valuable media can be managed within the apparatus, and accordingly, the valuable media can be strictly managed. If the number and the storage period of the valuable media managed within the apparatus satisfy the previously set collection condition, the apparatus notices this state, and accordingly, the valuable media can be securely collected at an appropriate timing.

### BRIEF DESCRIPTION OF DRAWINGS

FIG. 1 is a drawing illustrating the entire configuration of a money processing system including a valuable medium processing apparatus according to a first embodiment of the present invention.
FIG. 2 is a functional block diagram of the money processing system illustrated in FIG. 1.
FIG. 3 is a drawing illustrating an internal configuration of the valuable medium processing apparatus included in the money processing system illustrated in FIG. 1.
FIG. 4 is an outline drawing illustrating an unfit banknote deposit unit of the valuable medium processing apparatus.
FIGS. 5A and 5B are drawings schematically illustrating a configuration and an operation of a restriction guide of the unfit banknote deposit unit illustrated in FIG. 4.
FIGS. 6A to 6C are drawings illustrating another operation of the restriction guide of the unfit banknote deposit unit illustrated in FIG. 4.
FIGS. 7Ato 7D are drawings illustrating an example of a sensor used in the unfit banknote deposit unit illustrated in FIG. 4.
FIGS. 8A and 8B are drawing schematically illustrating a structure and an operation of an unfit banknote feeding mechanism.
FIG. 9 is a functional block diagram of the valuable medium processing apparatus illustrated in FIG. 3.
FIG. 10 is a schematic flowchart of a depositing process performed by the valuable medium processing apparatus illustrated in FIG. 3.
FIG. 11 is a drawing illustrating an example of an operation screen displayed on an operation display unit.
FIG. 12 is a drawing illustrating an example of a display of image data and support information including grid-like lines displayed on the operation display unit.
FIG. 13 is a drawing illustrating an example of a display of image data of an unfit banknote and support information including grid-like lines displayed on the operation display unit.
FIG. 14 is a drawing illustrating an example of display of image data of a front surface and a back surface of an unfit banknote and deposit data displayed on the operation display unit.
FIG. 15 is a drawing illustrating an example of display of image data and a sample image of the image data displayed on the operation display unit.
FIG. 16 is a front view of a transport support sheet used in depositing an unfit banknote into the apparatus.
FIG. 17 is a side view of the transport support sheet illustrated in FIG. 16.
FIG. 18 is a drawing illustrating an example of display of an information input screen displayed on the operation display unit during an unfit banknote depositing process.
FIG. 19 is a schematic diagram illustrating a processing performed on an unfit banknote including an unfit banknote repair process.
FIG. 20 is a flowchart of a collection process performed by the valuable medium processing apparatus illustrated in FIG. 3.
FIG. 21 is a flowchart of a dispensing process performed by the valuable medium processing apparatus illustrated in FIG. 3.
FIG. 22 is a list illustrating kinds of banknotes.
FIGS. 23A to 23C are schematic diagrams illustrating a content of a process on a damaged banknote performed by using a valuable medium processing apparatus according to a second embodiment.
FIG. 24 is a drawing illustrating an example of a configuration of a system that includes the valuable medium processing apparatus according to the second embodiment.
FIG. 25 is a functional block diagram illustrating a configuration of the valuable medium processing apparatus according to the second embodiment.
FIG. 26 is a flowchart illustrating an outline of a process for receiving a damaged banknote.
FIG. 27 is a drawing illustrating an example of a screen displayed when it is determined that the damaged banknote does not satisfy the receiving condition.
FIG. 28 is a drawing illustrating an example of a screen displayed when it is determined that the damaged banknote does not satisfy the authentication conditions.
FIG. 29 is a drawing illustrating an example of a screen displayed when a document required for the process of a damaged banknote is selected automatically.
FIG. 30 is a drawing illustrating an example of a screen displayed in the process of verifying details of a damaged banknote image.
FIG. 31 is a drawing illustrating an example of a screen displayed in the process of verifying contents of the automatically selected document.
FIG. 32 is a drawing illustrating an example of a screen displaying results of determination concerning lacking documents and omissions.
FIG. 33A is a drawing illustrating an example of a screen displayed if a document has been determined to be incomplete, and FIG. 33B is a drawing illustrating an example of a screen displayed if the incompletion has been corrected.
FIG. 34 is a flowchart illustrating a storage operation for storing a check within the apparatus performed by the valuable medium processing apparatus illustrated in FIG. 3 and the like.
FIG. 35 is a flowchart illustrating a storage operation for storing a draft within the apparatus performed by the valuable medium processing apparatus illustrated in FIG. 3 and the like.
FIG. 36 is a block diagram illustrating an internal configuration of a valuable medium processing apparatus according to a third embodiment of the present invention.
FIG. 37 is a block diagram illustrating an internal configuration of the valuable medium processing apparatus having yet another configuration according to the third embodiment of the present invention.
FIG. 38 is a block diagram illustrating an internal configuration of the valuable medium processing apparatus having yet another configuration according to the third embodiment of the present invention.
FIG. 39 is a front view illustrating another configuration of a transport support sheet used in an unfit banknote processing method according to the third embodiment of the present invention.
FIG. 40 is a front view illustrating yet another configuration of a transport support sheet used in the unfit banknote processing method according to the third embodiment of the present invention. FIG. 41 is a front view illustrating yet another configuration of a transport support sheet used in the unfit banknote processing method according to the third embodiment of the present invention.
FIG. 42 is a flowchart illustrating an outline of a collection process performed by the valuable medium processing apparatus illustrated in FIG. 3 and the like.
FIG. 43 is a flowchart illustrating an outline of a process for collecting an unfit banknote.

### DETAILED DESCRIPTION OF EMBODIMENTS

Exemplary embodiments of a valuable medium processing apparatus according to the present invention will be described below with reference to the accompanying drawings.

### First Embodiment

The present embodiment will be described with reference to a case where valuable media such as coins, banknotes, and valuable securities including checks are processed by using a money processing system including the valuable medium processing apparatus according to the present invention. The valuable medium processing apparatus according to the present embodiment is capable of processing excessively damaged or stained valuable media and valuable media of old versions such as old version banknotes, and hereinbelow, an unfit banknote, i.e., a damaged banknote, is taken as the processing target to explain the specific examples of the process described below.

### Outline of the entire money processing system

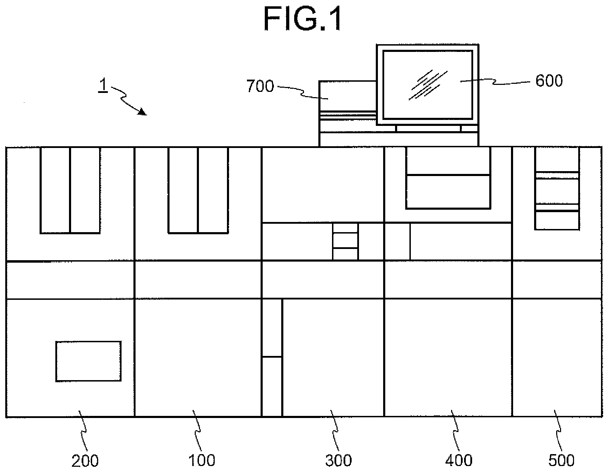

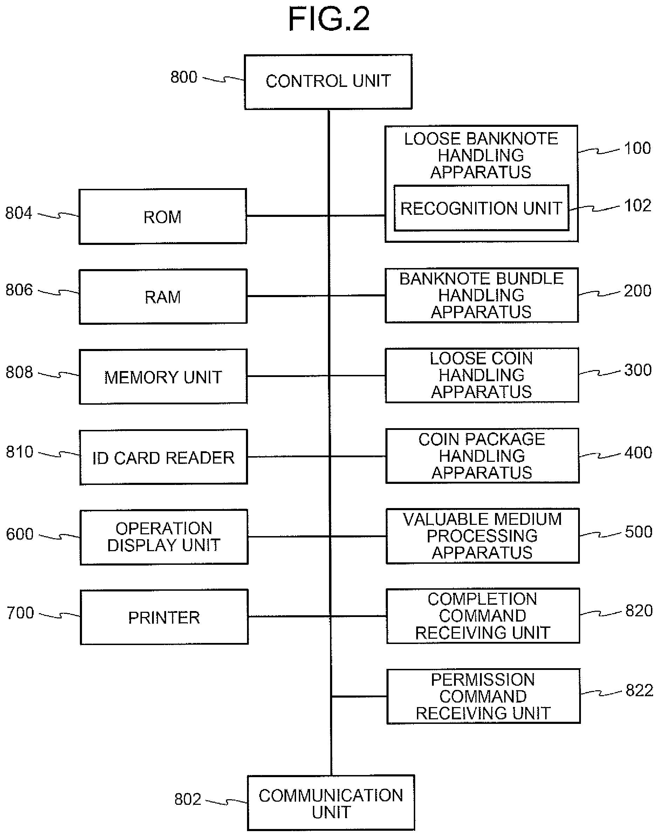

To begin with, the money processing system including the valuable medium processing apparatus according to the present embodiment will be described with reference to FIGS. 1 and 2. Referring to FIG. 1, a money processing system 1 includes a loose banknote handling apparatus 100, a banknote bundle handling apparatus 200, a loose coin handling apparatus 300, a coin package handling apparatus 400, an operation display unit 600, and a printer 700 in addition to a valuable medium processing apparatus 500. As illustrated in FIG. 1, the loose banknote handling apparatus 100, the banknote bundle handling apparatus 200, the loose coin handling apparatus 300, the coin package handling apparatus 400, and the valuable medium processing apparatus 500 are arranged side by side and in an integral manner.

The loose banknote handling apparatus 100 and the banknote bundle handling apparatus 200 are connected to each other so that banknotes can be transported between these apparatuses. The loose coin handling apparatus 300 and the coin package handling apparatus 400 are also connected to each other so that coins can be transported between these apparatuses. The operation display unit 600, which functions as an input device for inputting various information and as an output device for outputting various information on a display screen, and the printer 700 are installed on upper surfaces of the loose coin handling apparatus 300 and the coin package handling apparatus 400. Only one operation display unit 600 is shown in FIG. 1, however, a structure may be employed including two or more operation display units 600 so that either of them can be used depending on the content to be inputted or outputted, for example.

The loose banknote handling apparatus 100 is capable of storing loose banknotes inside thereof by denominations. A depositing process and a dispensing process of loose banknotes can be performed by using the loose banknote handling apparatus 100. A recognition unit 102 that performs recognition of banknotes is provided in a body of the loose banknote handling apparatus 100 as illustrated in FIG. 2. The recognition unit 102 performs recognition of denomination, fitness, authenticity, and the like. A banknote bundle forming unit (not illustrated) is provided in the banknote bundle handling apparatus 200. When a predetermined number of loose banknotes (e.g., 100 banknotes) are transported from the loose banknote handling apparatus 100 to the banknote bundle handling apparatus 200, the banknote bundle forming unit forms a banknote bundle from those loose banknotes. The banknote bundle formed by the banknote bundle forming unit is dispensed to an outside of the apparatus from the banknote bundle handling apparatus 200.

The loose coin handling apparatus 300 is capable of storing loose coins by denominations. A depositing process and a dispensing process of loose coins can be performed by using the loose coin handling apparatus 300. A coin package forming unit (not illustrated) is provided inside the coin package handling apparatus 400, and when plural loose coins (e.g., 50 coins) are transported from the loose coin handling apparatus 300 to the coin package handling apparatus 400, a coin package is formed by the coin package forming unit. The coin package formed by the coin package forming unit is dispensed from the coin package handling apparatus 400 to an outside of the apparatus.

In the loose banknote handling apparatus 100, if unfit banknotes and valuable media other than banknotes such as checks are deposited into the body of the loose banknote handling apparatus 100, the deposited banknotes or media cannot be stored inside the loose banknote handling apparatus 100 and discharged to the outside of the apparatus. The valuable media that cannot be handled by the loose banknote handling apparatus 100 are deposited into the valuable medium processing apparatus 500 and stored inside the body of the valuable medium processing apparatus 500.

FIG. 2 is a functional block diagram illustrating the money processing system 1 illustrated in FIG. 1. Referring to FIG. 2, the money processing system 1 includes a read only memory (ROM) 804, a random access memory (RAM) 806, and a memory unit 808, which are memory devices, an identification (ID) card reader 810, which is an input device for inputting ID information about an operator, a completion command receiving unit 820, a permission command receiving unit 822 for receiving a permission command issued after a completion command, a communication unit 802, and a control unit 800 including the components explained above, in addition to the loose banknote handling apparatus 100, the banknote bundle handling apparatus 200, the loose coin handling apparatus 300, the coin package handling apparatus 400, the valuable medium processing apparatus 500, the operation display unit 600, and the printer 700 illustrated in FIG. 1.

The control unit 800 is capable of performing a communication with an external apparatus, such as a host computer, via the communication unit 802. Setting information for the money processing system 1 and information about the status of processes of money by each apparatus constituting the money processing system 1 and the inventory amount are stored in the ROM 804, the RAM 806, and the memory unit 808. The ID card reader 810 reads information from an ID card carried by the operator. The control unit 800 verifies the authority and the like of the operator based on the ID information read from the ID card read by the ID card reader 810. The operation display unit 600 includes a touch panel, for example, and functions as an input device by which the operator gives various commands to each apparatus included in the money processing system 1, and also functions as an output device for displaying information about the status of processes of money by each apparatus constituting the money processing system 1, the inventory amount information, and the like. The printer 700 prints information on the status of processes of money and the inventory amount in each apparatus constituting the money processing system 1. The completion command receiving unit 820 for receiving a transaction completion command and the permission command receiving unit 822 for receiving a permission command that allows an unfit banknote to be deposited after a completion command from the completion command receiving unit 820 is received are used to designate a timing of depositing an unfit banknote discharged from the loose banknote handling apparatus 100 into the valuable medium processing apparatus 500.

### Structure of the valuable medium processing apparatus

Next, the valuable medium processing apparatus 500 constituting the money processing system 1 will be described. The valuable medium processing apparatus 500 is an apparatus for processing valuable media such as a banknote excessively damaged or stained (an unfit banknote) and cannot be received by the apparatus, an old version banknote that is issued a long time ago (an old version banknote), and a check. The valuable medium processing apparatus 500 is used for processing valuable media such as an unfit banknote and a check discharged to the outside of the apparatus without being stored in the loose banknote handling apparatus 100 illustrated in FIG. 1 as explained above.

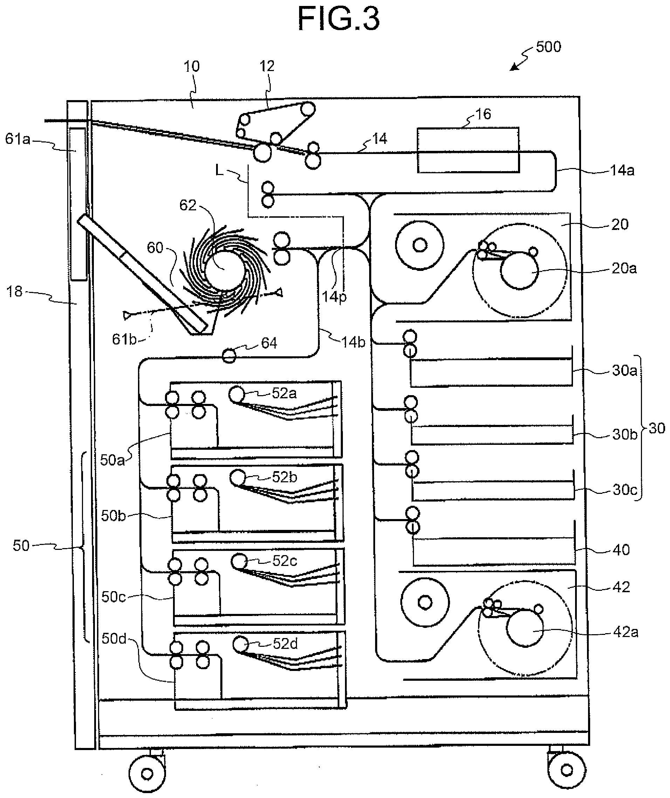

A structure of the valuable medium processing apparatus 500 will be described with reference to FIG. 3. In FIG. 3, the left side in the drawing denotes the front surface of the valuable medium processing apparatus 500 and the right side in the drawing denotes the back surface of the valuable medium processing apparatus 500.

Referring to FIG. 3, the valuable medium processing apparatus 500 includes a depositing unit 10 for depositing a valuable medium into the apparatus and a dispensing unit 60 for dispensing a new banknote stored inside the apparatus. The term "valuable medium (media)" herein refers to banknotes including an unfit banknote, an old version banknote, and the like, and specific valuable securities other than the banknotes. In the description below, the term "specific valuable securities" refers to previously set valuable securities such as checks and drafts. The depositing unit 10 and the dispensing unit 60 are provided on the apparatus front surface (the left side surface in FIG. 3) of the valuable medium processing apparatus 500. The depositing unit 10 includes a feeding mechanism 12 Valuable media deposited by the operator into the depositing unit 10 as a bundle are fed by the feeding mechanism 12 sheet by sheet into the apparatus body. As illustrated in FIG. 3, a transporting unit 14 is provided inside the body of the valuable medium processing apparatus 500, and the valuable media fed by the feeding mechanism 12 sheet by sheet from the depositing unit 10 are transported by the transporting unit 14 sheet by sheet.

The transporting unit 14 arranged downstream of the feeding mechanism 12 includes an imaging unit 16. The imaging unit 16 acquires image data by capturing an image of a valuable medium deposited into the body of the valuable medium processing apparatus 500. The transporting unit 14 includes an escrow unit 20. Valuable media deposited into the body of the valuable medium processing apparatus 500 are temporarily stored in the escrow unit 20. The escrow unit 20 is a tape winding type unit that winds up valuable media by sandwiching each of the valuable media between tapes. Specifically, the escrow unit 20 includes a drum 20a that is rotatable in both forward and reverse directions and capable of winding up and feeding out a pair of tapes. In this configuration, the valuable media transported from the transporting unit 14 to the escrow unit 20 are serially wound up by the drum 20a one by one by sandwiching each of the valuable media between the pair of tapes thereby storing the valuable media. By reversely rotating the drum 20a, the wound valuable media can be fed sheet by sheet to the transporting unit 14.

In the body of the valuable medium processing apparatus 500, a specific valuable-securities storage unit 30 for storing specific valuable securities such as checks and drafts and unfit banknote storage units 40 and 42 for storing an unfit banknote and an old version banknote, respectively, are provided. More specifically, the specific valuable-securities storage unit 30 is constituted by three storage units including a first storage unit 30a, a second storage unit 30b, and a third storage unit 30c. In the first storage unit 30a, checks and the like issued by other branches of the same bank as the branch bank in which the money processing system 1 is installed are stored. In the second storage unit 30b and the third storage unit 30c, checks and the like issued by a bank different from the bank in which the money processing system 1 is installed are stored. For example, in the second storage unit 30b, checks and the like issued at a location relatively close to the installation location of the money processing system 1 are stored, and in the third storage unit 30c, checks and the like issued at a location relatively distant from the installation location of the money processing system 1 are stored. The respective storage units 30a, 30b, and 30c of the specific valuable-securities storage unit 30 are stacker type storage units, and the checks and the like transported from the transporting unit 14 to the storage units 30a, 30b, and 30c are stored so as to be stacked onto checks and the like that have already been stored in the storage units 30a, 30b, and 30c.

Unfit banknotes and old version banknotes are stored in the unfit banknote storage units 40 and 42. The unfit banknote storage unit 40 is a stacker type storage unit. Unfit banknotes and old version banknotes transported from the transporting unit 14 to the unfit banknote storage unit 40 are stored so as to be stacked onto the unfit banknotes and old version banknotes that have already been stored in the unfit banknote storage unit 40. On the other hand, the unfit banknote storage unit 42 is a tape winding type storage unit. More specifically, the unfit banknote storage unit 42, similarly to the escrow unit 20, includes a drum 42a rotatable in both forward and reverse directions. The unfit banknotes and old version banknotes transported from the transporting unit 14 to the unfit banknote storage unit 42 are serially wound up by the drum 42a one by one by sandwiching the unfit banknotes and old version banknotes between the pair of tapes thereby storing the unfit banknotes and old version banknotes. By reversely rotating the drum 42a, the wound unfit banknotes and old version banknotes can be fed sheet by sheet to the transporting unit 14.

The unfit banknotes stored in the unfit banknote storage units 40 and 42 include banknotes in various states of the degree of the damage and the necessity of repair. For example, unfit banknotes that will later require a repair operation are stored in the stacking type unfit banknote storage unit 40. The unfit banknotes that require repair refer to torn or partially lost banknotes, for example, which are to be repaired before being presented to the central financial institutions, and the like.

As illustrated in FIG. 3, the valuable medium processing apparatus 500 has a structure in which the specific valuable-securities storage unit 30 for storing specific securities such as checks is provided above the unfit banknote storage units 40 and 42 for storing unfit banknotes and old version banknotes, and the escrow unit 20 is provided above the specific valuable-securities storage unit 30 and the unfit banknote storage units 40 and 42.

In the body of the valuable medium processing apparatus 500, a new-banknote storage unit 50 for storing new banknotes is provided. More specifically, the new-banknote storage unit 50 is constituted by four storage units including a first storage unit 50a, a second storage unit 50b, a third storage unit 50c, and a fourth storage unit 50d. New version 10,000-yen notes, new-version 1,000-yen notes, and new 5,000-yen notes are stored in the first storage unit 50a, the second storage unit 50b, and the third storage unit 50c, respectively. The operator can select the denomination of the new banknote to be stored in the fourth storage unit 50d. The storage units 50a, 50b, 50c, 50d are provided with feeding mechanisms 52a, 52b, 52c, 52d, respectively, and the new banknotes stored in the storage units 50a, 50b, 50c, 50d are fed respectively by the feeding mechanisms 52a, 52b, 52c, 52d to the transporting unit 14 sheet by sheet. The term "new banknotes" stored in the new-banknote storage unit 50 refers to brand-new notes distributed from the central bank to financial institutions such as banks and not having been circulated in the market yet. The new-banknote storage unit 50 is provided in a portion to the front of the specific valuable-securities storage unit 30 and the unfit banknote storage unit 40 (in the left portion in FIG. 3) as illustrated in FIG. 3.

The dispensing unit 60 is connected to the transporting unit 14, and the valuable media such as new banknotes are transported by the transporting unit 14 and dispensed in the dispensing unit 60 in a stacked state. The dispensing unit 60 is provided with an impeller 62. The valuable medium such as a new banknote transported from the transporting unit 14 to the impeller 62 is held between a pair of blades constituting the impeller 62 and delivered to the dispensing unit 60 by the impeller 62 rotating in the counterclockwise direction in FIG. 3. The valuable media such as new banknotes stacked in the dispensing unit 60 can be aligned by the impeller 62. The dispensing unit 60 is also provided with a shutter 61a. The operator can remove the valuable media such as new banknotes stacked in the dispensing unit 60 when the shutter 61a is in an open state. Further, the dispensing unit 60 includes an removal detection unit 61b. When the valuable media such as new banknotes stacked in the dispensing unit 60 are removed from the dispensing unit 60, the removal can be detected.

The transporting unit 14 for transporting the valuable media inside the body of the valuable medium processing apparatus 500 is constituted by a first transporting unit 14a and a second transporting unit 14b as illustrated in FIG. 3. The first transporting unit 14a transports the valuable media deposited from the depositing unit 10 into the apparatus body to the escrow unit 20, the specific valuable-securities storage unit 30, and the unfit banknote storage unit 40. On the other hand, the second transporting unit 14b transports the new banknotes stored in the new-banknote storage unit 50 to the dispensing unit 60. The valuable media transport path in the first transporting unit 14a and the new banknote transport path in the second transporting unit 14b are provided independently from each other. Specifically, the first transporting unit 14a is provided on the right side of a virtual line L illustrated in FIG. 3, and the second transporting unit 14b is provided on the left side of the virtual line L. The first transporting unit 14a and the second transporting unit 14b are connected to each other at a connection position 14p; however, they are independent from each other at other locations.

The second transporting unit 14b of the transporting unit 14 is provided with a simple recognition unit 64. The simple recognition unit 64 recognizes only the denomination of the new banknotes fed from the new-banknote storage unit 50 to the second transporting unit 14b. A door 18 is provided on the front surface (the surface on the left side in FIG. 3) of the valuable medium processing apparatus 500, and a person having a specific authority can open the door 18 and access the inside of the body of the valuable medium processing apparatus 500. By opening the door 18, new banknotes can be replenished into the new-banknote storage unit 50 and removed therefrom.

### Structure of the depositing portion

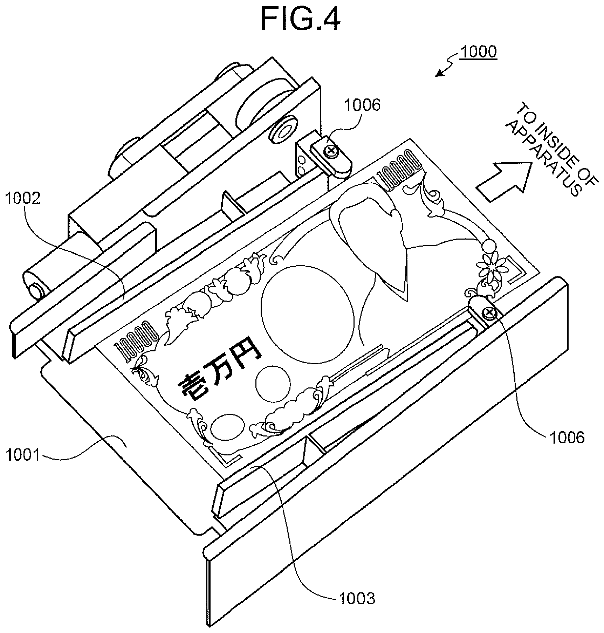

Next, a medium positioning device 1000 that restricts the position of the valuable medium fed into the body of the apparatus from the depositing unit 10 for depositing valuable media in the valuable medium processing apparatus 500 will be described. FIG. 4 is a perspective view illustrating an external appearance of the medium positioning device 1000. In the medium positioning device 1000, valuable media to be deposited into the apparatus are placed on a stage 1001. Restriction guides 1002 and 1003 movable according to the size of the valuable media are provided on both sides of the stage 1001, and the valuable media placed on the stage are positioned by the restriction guides 1002 and 1003. The restriction guides 1002 and 1003 for restricting motion of the valuable media fed into the apparatus body in a direction orthogonal to the feeding direction. In this process, the position of the respective restriction guides 1002 and 1003 can be automatically adjusted according to the size of the valuable media by using sensors 1006 provided to the restriction guides 1002 and 1003, and this configuration will be described below later.

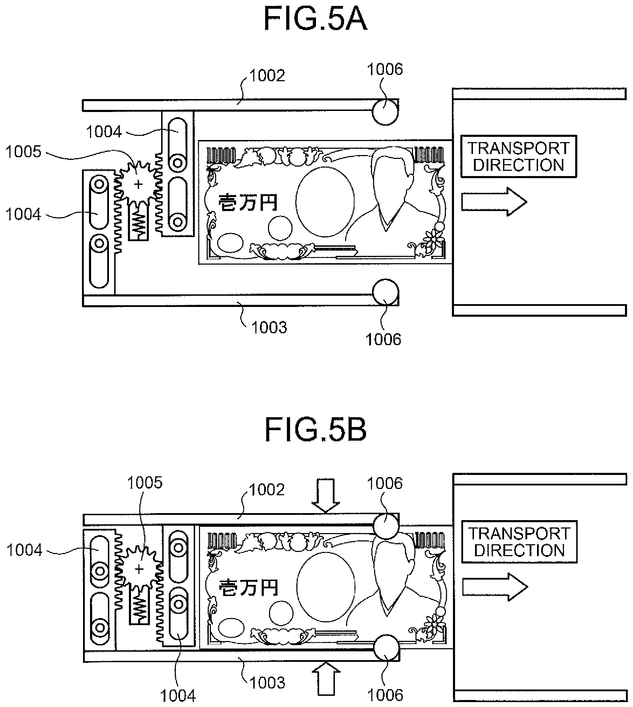

FIGS. 5A and 5B are schematic diagrams illustrating an outline of the structure and the operation of the medium positioning device 1000. The restriction guides 1002 and 1003 are respectively provided with a rack 1004 that protrudes toward the other guide. Moreover, one pinion 1005 is provided that engages with the two racks 1004. The two racks 1004 are moved as the pinion 1005 rotates. Moreover, the restriction guides 1002 and 1003 are moved so that they come close to or separate from each other by the same amount and are then stopped at a position determined according to the size of the valuable medium.

FIG. 5A illustrates an initial position at which the distance between the restriction guides 1002 and 1003 is largest. The restriction guides 1002 and 1003 are moved by the same distance from both sides according to the size of the valuable media placed on the stage 1001 illustrated in FIG. 4 to reduce the distance between the guides. Thus the valuable media are positioned in the center of the stage 1001 as illustrated in FIG. 5B. In addition to the function for positioning the valuable media at the time of feeding, the restriction guides 1002 and 1003 has a function for restricting motion of the valuable media in a direction perpendicular to the feeding direction. As explained above, valuable media can be positioned in the center of the stage 1001, and accordingly, the feeding of the valuable media by the feeding mechanism 12 into the apparatus body and the transport of the valuable media by the transporting unit 14 inside the apparatus body can be securely performed.

The medium positioning device 1000 includes the pinion 1005 that is engaged with the two racks 1004 provided for the respective guides, and accordingly, if either one of the restriction guides 1002 and 1003 is manually moved, the other restriction guide 1003 or 1002 can be moved by the same amount. Moreover, by rotating the pinion 1005 by using a driving device such as a motor (not illustrated), the restriction guides 1002 and 1003 can be moved automatically. In this process, if the rotating speed of the pinion 1005 is determined by using an encoder or the like, then the movements of the restriction guides 1002 and 1003 can be calculated according to the determination results.

In the valuable medium processing apparatus 500, the restriction guides 1002 and 1003 can be manually moved, the distance between the guides is calculated based on the movement of the guides, and if the calculated distance is different from the size of the valuable media designated as the processing target, then the valuable medium processing apparatus 500 notifies this fact to the operator and prompts the operator to perform verification. On the other hand, if the restriction guides 1002 and 1003 are automatically moved, the restriction guides 1002 and 1003 move according to the previously designated size of the valuable medium and then stop there. If the operator attempts to place a valuable medium whose size is different from that of the processing target valuable medium on the stage 1001, for example, the operator can find that the banknote has been incorrectly selected as the processing target.

For the method for moving the restriction guides 1002 and 1003 according to the size of the valuable medium, it is possible to employ a configuration in which the sensors 1006 provided to the restriction guides 1002 and 1003 are used as well as a configuration in which the distance between the guides is adjusted based on the movement of each guide. By detecting an edge of the valuable medium by using the sensors 1006 and stopping the restriction guides 1002 and 1003 according to the detection result, the position of the restriction guides 1002 and 1003 can be aligned to each valuable medium if the type of the valuable medium is not previously designated.

In an embodiment in which the position of the restriction guides 1002 and 1003 is automatically controlled, for example, the guides are moved starting from their initial positions and stopped when the distance between the guides matches the size of the valuable media. In another example, the guides are moved to a position at which the distance between the guides becomes shorter than the size of the valuable media by a predetermined distance, the guides are moved again so that the distance between the guides increases, and the guides are stopped at a position at which the distance between the guides matches the size of the valuable media. By moving the restriction guides 1002 and 1003 once to a position at which the distance between the guides becomes slightly shorter than the size of the valuable media, the valuable media are bent in the center from both edges restricted by the guides, and thus the valuable media can be aligned on both edges restricted by the restriction guides 1002 and 1003.

Moreover, in an embodiment in which the distance between the restriction guides 1002 and 1003 is shortened to a distance shorter than the size of the valuable media once and then enlarged again, after starting the movement of the enlargement, the guides are stopped according to the size of the valuable media. In another example, the distance between the guides is increased to a position at which the distance between the guides becomes larger than the size of the valuable media by a predetermined distance once and then the guides are moved so that the distance between the guides becomes shorter again and then stopped according to the size of the valuable media. Specifically, it is possible to control the moving of the restriction guides 1002 and 1003 so that the distance between the guides is reduced, then increased, and then reduced again to finally adjust the distance between the guides according to the size of the valuable media. The present embodiment is not limited to the above-described configuration in which the operation for reducing and increasing the distance between the guides once compared with the size of the valuable media is performed once, and it is possible to employ a configuration in which this operation is repeated for a predetermined number of times.

Further, the shape of the stage 1001 on which the valuable media restricted by the restriction guides 1002 and 1003 are placed is not limited to a flat shape, and the stage 1001 may be shaped so that the center of the stage is at a higher level than both edges thereof so as to allow plural valuable media placed on the stage 1001 to be bent in the center in the same direction when the distance between the guides is reduced, for example. By employing the stage 1001 shaped so that the valuable media are already slightly bent when they are brought into close contact with the stage 1001 thereon, the valuable media are bent so that the degree of bending becomes greater than the initial bending when the distance between the guides is reduced, and accordingly, the valuable media can be more securely aligned on their edges because all the valuable media are bent in the same direction.

For other configurations, in an embodiment in which the distance between the restriction guides 1002 and 1003 is reduced, it is possible to employ a configuration in which the guides are stopped at a position matching the size of the valuable media, then the distance between the guides is increased therefrom once, and then the distance between the guides is aligned with the size of the valuable media again. Moreover, it is possible to employ a configuration in which the operation of the restriction guides 1002 and 1003 is set according to the type of the valuable media by performing an operation in which the distance between the guides is shortened to a distance shorter than the size of the valuable media once for one type of valuable medium and performing an operation in which the distance between the guides is controlled to match the size of the valuable media once and then increased for the other type of valuable medium, for example.

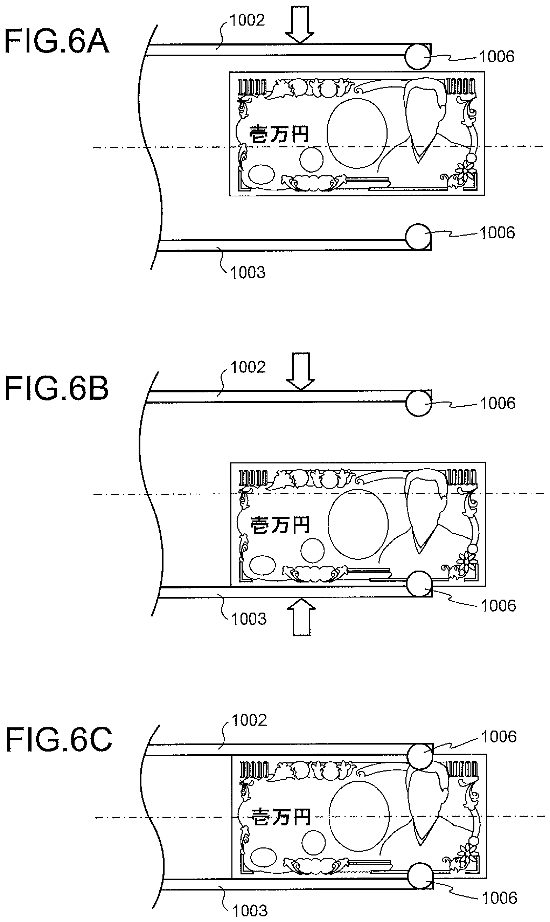

The method of moving the restriction guides 1002 and 1003 is not limited to a configuration in which both guides are moved by the same movement at the same time, and it is possible to employ a configuration in which the guides are moved one by one. FIGS. 6A to 6C are drawings illustrating an example of an operation of an embodiment in which the restriction guides 1002 and 1003 are movable independently from each other. First, one restriction guide 1002 located in the upper portion in FIG. 6A is only moved from an initial state illustrated in FIG. 6A in a direction of an arrow in the drawing, and then the valuable medium is moved toward the other restriction guide 1003 located in the lower portion in the drawing. After that, the restriction guide 1002 returns to the initial position as in the state illustrated in FIG. 6B. When the valuable medium is detected by the sensors 1006 of the restriction guides 1002 and 1003, the restriction guide 1002 determines that the distance between the guides has reached the size of the valuable medium and then stops and returns to the initial position.

Subsequently, as indicated by arrows in FIG. 6B, the restriction guides 1002 and 1003 are moved from both sides of the valuable medium to position the valuable medium in the center of the stage 1001 as illustrated in FIG. 6C. In this case, both the restriction guides 1002 and 1003 may be stopped when the valuable medium is detected by the sensors 1006 of both guides. Alternatively, the restriction guides 1002 and 1003 may be moved from their initial positions based on the size of the valuable medium calculated from the distance between the guides when the valuable medium is allowed by the restriction guide 1002 to abut onto the restriction guide 1003.

For the sensor 1006 used in the restriction guides 1002 and 1003, a transmission type sensor is used, for example. By using a transmission type sensor, the valuable medium blocking the light between a light emitting unit and a photodetecting unit can be detected.

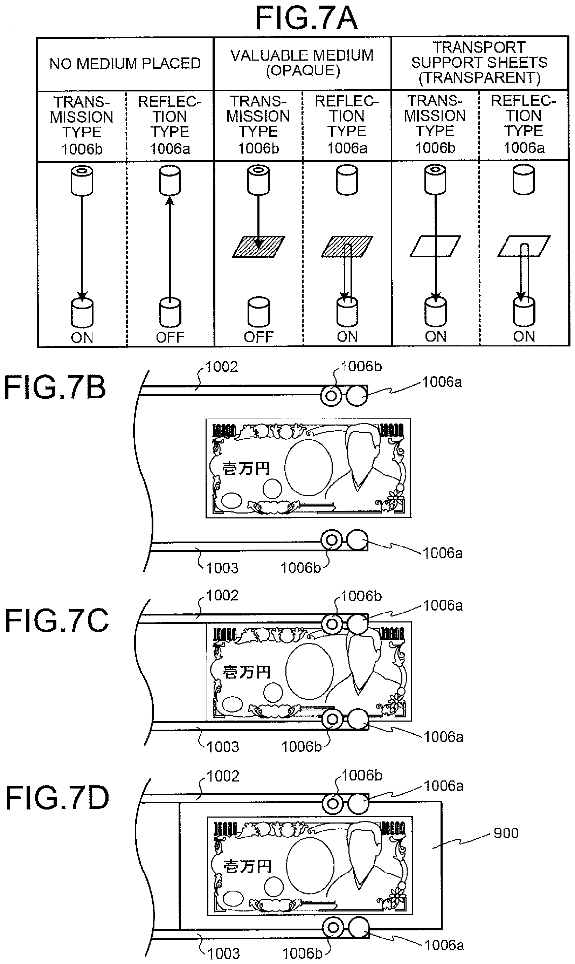

However, the type of the sensors 1006 and the method of using the sensors 1006 are not limited to the above-explained configurations. FIGS. 7A to 7D are schematic diagrams illustrating a method of using a reflection type sensor 1006a and a transmission type sensor 1006b for detection of the valuable medium. Referring to FIG. 7A, if no valuable medium has been placed on the stage 1001 and if a transparent valuable medium which transmits light has been placed on the stage 1001, a photodetecting unit of the transmission type sensor 1006b receives light from a light emitting unit and is turned ON, and if an opaque medium has been placed on the stage 1001, the photodetecting unit is turned OFF because the light from the light emitting unit is blocked. On the other hand, if an opaque valuable medium has been placed on the stage 1001, a photodetecting unit of the reflection type sensor 1006a receives light emitted from a light emitting unit and reflected from the valuable medium and is turned ON, and if no valuable medium has been placed on the stage 1001, the photodetecting unit is turned OFF. Moreover, in the reflection type sensor 1006a, the photodetecting unit is also turned ON if a transparent medium that reflects light has been placed on the stage 1001.

The valuable medium such as banknotes and checks processed by the valuable medium processing apparatus 500 are opaque. Accordingly, as illustrated in FIG. 7A, the reflection type sensor 1006a and the transmission type sensor 1006b can detect the valuable medium based on switching of their states between the ON state and the OFF state corresponding to the state in which no valuable medium has been placed on the stage 1001 and the state in which the valuable medium has been placed on the stage 1001.

In the valuable medium processing apparatus 500, if the valuable medium is an unfit banknote excessively damaged or stained and cannot be normally transported by the transporting unit 14, a transport support sheet is used. Specifically, the unfit banknote is transported in a state it is sandwiched between the two sheets of the transport support sheet. This allows the unfit banknote to be transported by the transporting unit 14 regardless of the state of the note. The transport support sheet will be described in detail below.

The transport support sheet is constituted by transparent or translucent sheets so that an image of the unfit banknote sandwiched between the two sheets can be captured, but, as illustrated in FIG. 7A, the edge of the sheets placed on the stage 1001 cannot be detected by the transmission type sensor 1006b and the sensor is in the ON state. On the other hand, because the transport support sheet reflects a part of the light, the reflection type sensor 1006a is turned in the ON state. Thus, the medium placed on the stage 1001 is detected because the reflection type sensor 1006a switches from the OFF state to the ON state, and it is recognized that the detected medium is a transparent transport support sheet because the transmission type sensor 1006b remains to be in the ON state at this timing.

Specifically, if only the reflection type sensor 1006a is used, which of an opaque valuable medium and a transparent transport support sheet the detected medium is cannot be correctly determined. In contrast, if only the transmission type sensor 1006b is used, whether no medium has been placed on the stage 1001 or the transparent transport support sheet has been placed on the stage 1001 cannot be correctly determined. Accordingly, in the medium positioning device 1000, by using both the reflection type sensor 1006a and the transmission type sensor 1006b, the state in which no medium exists on the stage 1001, the state in which an opaque valuable medium has been placed on the stage 1001, and the state in which the transparent transport support sheet has been placed on the stage 1001 can be respectively recognized as illustrated in FIG. 7A.

Specifically, in the medium positioning device 1000, each of the restriction guides 1002 and 1003 is provided with both the reflection type sensor 1006a and the transmission type sensor 1006b. Accordingly, as illustrated in FIG. 7B, if the restriction guides 1002 and 1003 are positioned at their initial positions and if each sensor 1006a and 1006b has been separated from the valuable medium or the transport support sheet, the detection result in the state illustrated in FIG. 7A in which no medium exists is obtained. On the other hand, in the state illustrated in FIG. 7C in which the restriction guides 1002 and 1003 sandwich the valuable medium from both side edges of the medium, the detection result corresponding to the valuable medium illustrated in FIG. 7A is obtained. Moreover, in the state illustrated in FIG. 7D in which the restriction guides 1002 and 1003 sandwich the transport support sheet from both side edges of the sheet, the detection result corresponding to the transport support sheet illustrated in FIG. 7 A is obtained. As a result, regardless of whether a valuable medium has been placed on the stage 1001 or the transport support sheet has been placed on the stage 1001, such a state can be correctly detected and the positions of the restriction guides 1002 and 1003 can be set according to the detected medium.

If the valuable medium or the transport support sheet has been placed in a skewed position with respect to the restriction guides 1002 and 1003, the reflection type sensor 1006a or the transmission type sensor 1006b of either one of the guides may detect the medium or the sheets. In this case also, by comparing results of detection by the sensor of the restriction guide 1002 and the sensor of the restriction guide 1003, the valuable medium or the transport support sheet placed on the stage 1001 in the skewed position can be recognized.

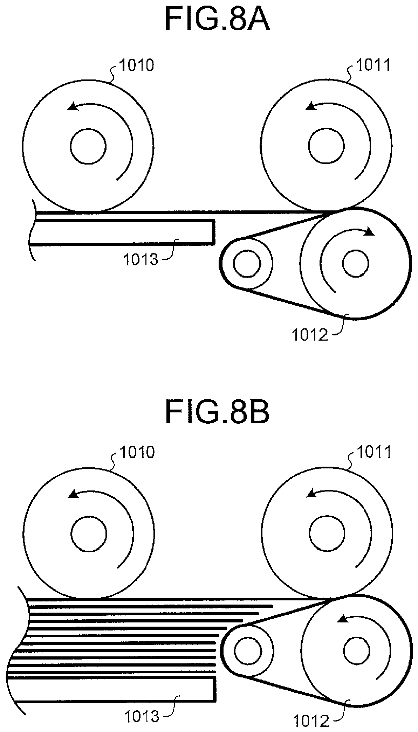

The valuable medium is placed on the stage 1001 of the depositing unit 10, and positioned in the center of the stage 1001 of the depositing unit 10 by the restriction guides 1002 and 1003. The valuable medium is then fed by the feeding mechanism 12 sheet by sheet into the apparatus body. FIGS. 8A and 8B are drawings schematically illustrating a structure and an operation of the feeding mechanism 12. The feeding mechanism 12 includes a picking roller 1010 for moving the valuable medium placed on the stage 1001 into a feeding direction (toward the right in the drawing), a feed roller 1011 for feeding the valuable medium into the apparatus body, a belt 1012 stretched around plural rollers below the feed roller 1011, and a support member 1013 for supporting the valuable medium from below. Referring to FIG. 8A, if one sheet of valuable medium only is to be fed, the picking roller 1010 and the feed roller 1011 are driven to be rotated in the counterclockwise direction in the drawing and the belt wound around the plural rollers is driven in the clockwise direction in the drawing. With this operation, one valuable medium can be securely fed into the apparatus body. If a bundle of plural sheets of valuable media is to be fed, as shown in FIG. 8B, the picking roller 1010 and the feed roller 1011 are driven in the counterclockwise direction in the drawing and the belt is also driven in the counterclockwise direction in the drawing. Specifically, the picking roller 1010 and the feed roller 1011 feed the first sheet of valuable medium into the apparatus body while the belt 1012 functions as a reverse belt for returning the second sheet of valuable medium and beyond onto the stage 1001 so that they are not fed into the apparatus body. With this configuration, the first sheet placed on the top of the bundle of valuable media can only be separated from the other valuable media and fed into the apparatus body. As explained above, in the feeding mechanism 12, the rotation direction of the belt 1012 is controlled according to the number of sheets, one or plural, of valuable media placed on the stage 1001 to securely feed the valuable media sheet by sheet into the apparatus body. The number of sheets of valuable media, i.e., one sheet or plural sheets, is recognized according to which of a single sheet loading mode or a bundle loading mode has been designated as the operation mode, and the operation mode will be described in detail below.

### Functions and operations of the valuable medium processing apparatus

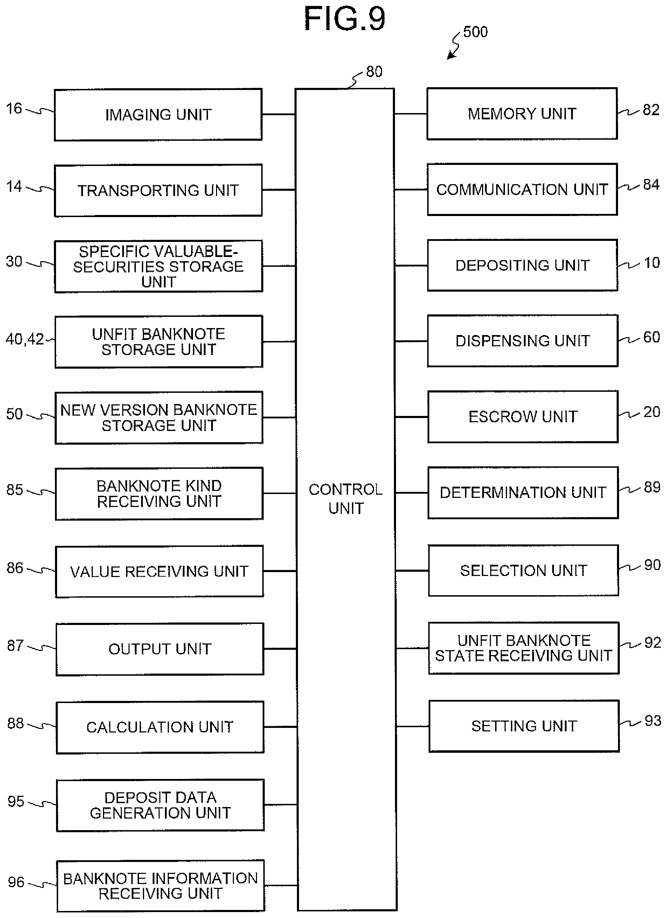

Next, functions of the valuable medium processing apparatus 500 will be explained assuming that the processing target valuable medium is a banknote. FIG. 9 is a functional block diagram of the valuable medium processing apparatus 500 illustrated in FIG. 3. Referring to FIG. 9, the valuable medium processing apparatus 500 includes a control unit 80, which controls components of the valuable medium processing apparatus 500. The imaging unit 16, the transporting unit 14, the specific valuable-securities storage unit 30, the unfit banknote storage units 40 and 42, the new-banknote storage unit 50, the depositing unit 10, the dispensing unit 60, the escrow unit 20, and the like illustrated in FIG. 3 are connected to the control unit 80. As explained above, the imaging unit 16 captures an image of the valuable medium deposited into the apparatus body of the valuable medium processing apparatus 500 to acquire image data of the medium, and image data acquired by the imaging unit 16 is transmitted to the control unit 80 and then stored in a memory unit 82. Moreover, the control unit 80 transmits command signals to each component of the transporting unit 14, the specific valuable-securities storage unit 30, the unfit banknote storage units 40 and 42, the new-banknote storage unit 50, the depositing unit 10, the dispensing unit 60, the escrow unit 20, and the like to control these components. In addition, the memory unit 82 and a communication unit 84 are connected to the control unit 80. The memory unit 82 stores therein setting information for the valuable medium processing apparatus 500 and information about the inventory amount and the like of the valuable media stored in the specific valuable-securities storage unit 30, the unfit banknote storage units 40 and 42, the new-banknote storage unit 50, and the like. Moreover, the control unit 80 performs the transmission and reception of signals to and from the control unit 800 of the money processing system 1 via the communication unit 84.

A banknote kind receiving unit 85 that receives the denomination and the time of issuance of an unfit banknote, a value receiving unit 86 that receives the value of an unfit banknote, an output unit 87 that outputs support information for determining the value in the form of grid-like lines described below for example, a calculation unit 88 that calculates a ratio of valid or invalid unfit banknotes to fit banknotes, a determination unit 89 that determines the kind of banknote, a selection unit 90 that performs a selection as to which of information about the entire transaction and information about each valuable medium is to be displayed on the operation display unit 600, an unfit banknote state receiving unit 92 that receives information about the state of an unfit banknote indicating whether repair of the unfit banknote is necessary, a setting unit 93 that sets a person having a specific authority, a deposit data generation unit 95 that generates deposit data from the image data acquired by the imaging unit 16, and a banknote information receiving unit 96 that receives banknote information are connected to the control unit 80. Details of the functions of each unit will be explained in detail below.

Next, operations of the valuable medium processing apparatus 500 illustrated in FIGS. 3 and 9 will be explained below. Each operation explained below is executed by the control unit 80 of the valuable medium processing apparatus 500 by controlling each component.

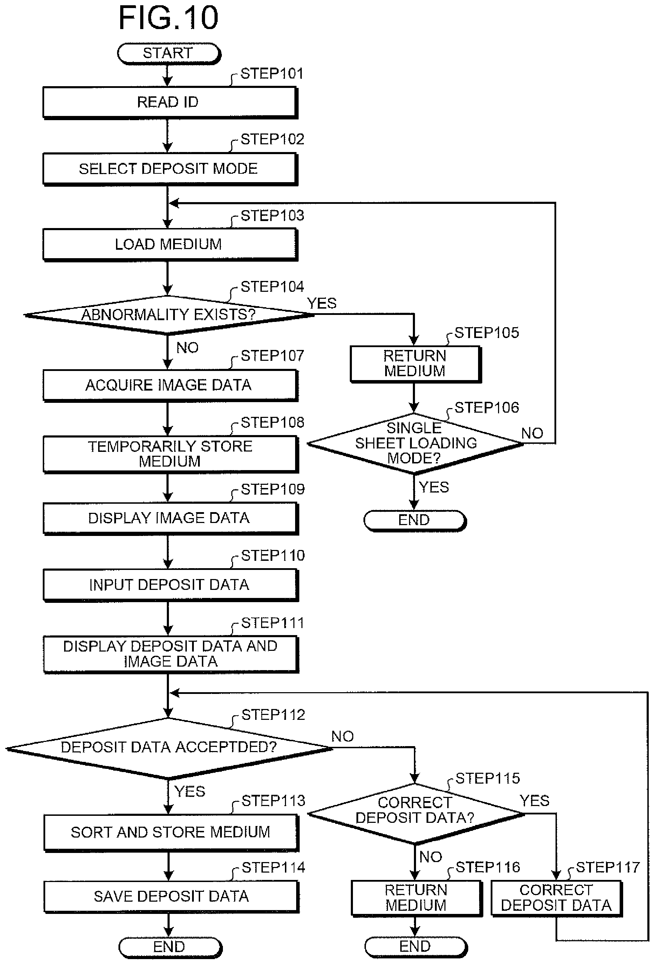

To begin with, an operation for depositing unfit banknotes and old version banknotes into the valuable medium processing apparatus 500 will be explained with reference to the flowchart of FIG. 10. Unfit banknotes and the old version banknotes that could not be stored within the apparatus body of the loose banknote handling apparatus 100 are deposited into the apparatus body of the valuable medium processing apparatus 500. Specifically, unfit banknotes and old version banknotes that could not be received by the loose banknote handling apparatus 100 are processed by the valuable medium processing apparatus 500.

At the start of the process, the operator causes the ID card reader 810 of the money processing system 1 illustrated in FIG. 2 to read his/her ID card (STEP 101). The control unit 800 of the money processing system 1 verifies the authority and the like of the operator based on the ID information read by the ID card reader 810 from the ID card. Then, the operator operates the operation display unit 600 of the money processing system 1 and selects a deposit mode (STEP 102). Specifically, three modes are displayed on the operation display unit 600 including a "single sheet loading mode" (a mode for placing one valuable medium at a time on the depositing unit 10 and loading it), a "bundle loading mode" (a mode for placing plural valuable media on the depositing unit 10 and loading them sheet by sheet), and a "reload mode" (a mode for placing unfit banknotes and the like again and loading it), and the operator selects one from among these three modes. After that, when unfit banknotes or old version banknotes are received in the depositing unit 10 of the valuable medium processing apparatus 500, the feeding mechanism 12 loads the unfit banknotes or the old version banknotes sheet by sheet into the apparatus body of the valuable medium processing apparatus 500 (STEP 103), and the loaded sheet is then transported by the first transporting unit 14a of the transporting unit 14. Subsequently, images of the unfit banknotes or the old version banknotes are captured by the imaging unit 16 to acquire image data of the notes. Then, the control unit 80 of the valuable medium processing apparatus 500 determines whether the unfit banknote or the old version banknote deposited into the apparatus body has any abnormality (STEP 104). If the unfit banknote or the old version banknote has no abnormality (a state in which the note cannot be received into the apparatus body, such as a transport error including skewed transport, double feeding, and the like) (NO at STEP 104), then the control unit 80 acquires image data of the unfit banknote or the old version banknote and the acquired image data is stored in the memory unit 82 or the like (STEP 107). The unfit banknote or the old version banknote having been determined to have no abnormality is transported to the escrow unit 20 to be temporarily held there (STEP 108). On the other hand, if the unfit banknote or the old version banknote deposited into the apparatus body has any abnormality (YES at STEP 104), then the unfit banknote or the old version banknote is transported by the first transporting unit 14a of the transporting unit 14 to the dispensing unit 60 and then returned to the outside of the apparatus (STEP 105). In this process, if the single sheet loading mode has been selected as the deposit mode (YES at STEP 106), the depositing operation in the valuable medium processing apparatus 500 ends. On the other hand, if the bundle loading mode or the reload mode has been selected as the deposit mode instead of the single sheet loading mode (NO at STEP 106), then the unfit banknotes or the old version banknotes received in the depositing unit 10 are loaded by the feeding mechanism 12 sheet by sheet into the apparatus body of the valuable medium processing apparatus 500 to then undergo the respective processes.

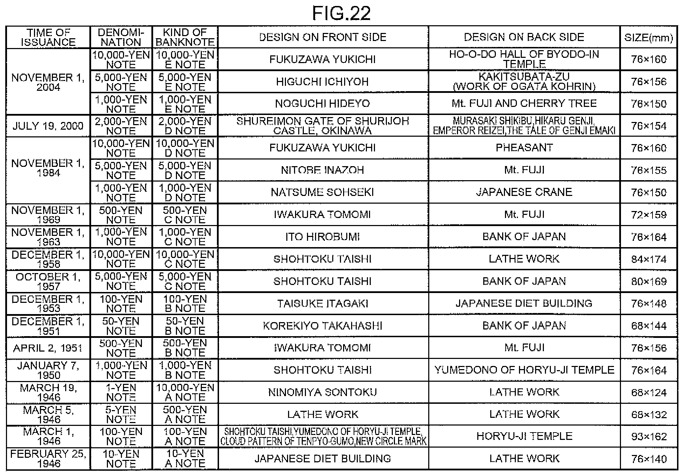

When the unfit banknote or the old version banknote has been temporarily stored in the escrow unit 20 (STEP 108), the image data of the unfit banknote or the old version banknote acquired by the imaging unit 16 is displayed on the operation display unit 600 (STEP 109). Based on the image data of the unfit banknote or the old version banknote displayed on the operation display unit 600, the operator inputs deposit data via the operation display unit 600 (STEP 110). The term "deposit data" herein refers to the kind, the value, and the like of banknotes. The kind of banknote refers to the denomination of a banknote and the type of banknote related to the version thereof (the new version or the old version), and specifically refers to an attribute of a banknote including both time of issuance (A to E) and denominations illustrated in FIG. 22. Among the various banknotes illustrated in FIG. 22, banknotes whose banknote kind is other than 2,000-yen D notes, 1,000-yen E notes, 5,000-yen E notes, and 10,000-yen E notes are referred to as "old version banknotes".

With respect to the value of a banknote, a fit banknote having no lost part has a value equivalent to the value denoted by the denomination of the banknote. On the other hand, the value of an unfit banknote partially torn and lost (i.e., a banknote of which the rectangular shape of the banknote has been lost or a banknote having a hole) is not equivalent to the value denoted by the denomination of the banknote depending on the degree of the loss, and accordingly, such unfit banknotes are routinely exchanged in financial institutions such as banks. More specifically, the criterion for determining the value of partially torn and lost banknotes is specified by the central bank (in Japan, the Bank of Japan), for example. If the ratio of the remaining area of a partially torn and lost banknote is 2/3 or larger, the value of such a banknote is equivalent to the value denoted by the denomination of the banknote, and if the ratio of the remaining area of a partially torn and lost banknote is 2/5 or larger and less than 2/3, the value of such a banknote is equivalent to the half of the value denoted by the denomination of the banknote. On the other hand, if the ratio of the remaining area of a partially torn and lost banknote is less than 2/5, the banknote is valueless and handled as having no value. Specifically, for a partially torn and lost 10,000-yen note, for example, if the ratio of the remaining area of the 10,000-yen note is 2/3 or larger, then the 10,000-yen note can be exchanged with a fit 10,000-yen note in banks or the like, and if the ratio of the remaining area of the 10,000-yen note is 2/5 or larger and less than 2/3, then the 10,000-yen note can be exchanged with a fit 5,000-yen note in banks or the like. In these cases, the values of the notes are 10,000 yen and 5,000 yen, respectively. On the other hand, if the greater part of a 10,000-yen note has been torn and lost and the ratio of the remaining area of the 10,000-yen note is less than 2/5, the value of the 10,000-yen note is regarded to be 0 and the 10,000-yen note cannot be exchanged with a fit banknote.

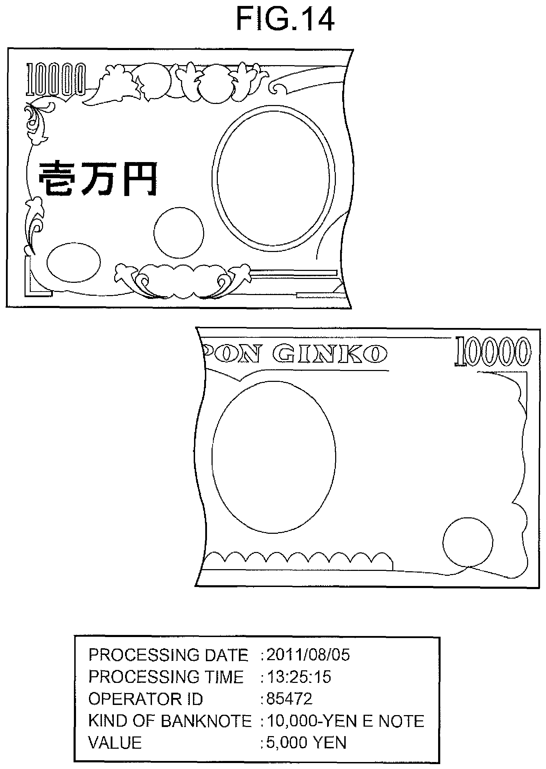

Returning to FIG. 10, after the operator has inputted the deposit data such as the kind of banknote and the value via the operation display unit 600 (STEP 110), the deposit data and the image data of the unfit banknote or the old version banknote are displayed side by side on the operation display unit 600 (STEP 111). In this case, the deposit data and the image data in association with each other as well as data displayed as illustrated in FIG. 14 described below are processed and then stored in the memory units 82 and 808.

Then, all the unfit banknotes or the old version banknotes received in the depositing unit 10 are loaded into the apparatus body of the valuable medium processing apparatus 500 and stored in the escrow unit 20, and then a display prompting the operator to finalize the deposit data is displayed on the operation display unit 600. After the operator has input a command for finalizing by accepting the deposit data (YES at STEP 112), the unfit banknotes or the old version banknotes temporarily stored in the escrow unit 20 are transported, sheet by sheet, by the first transporting unit 14a of the transporting unit 14, and then are sorted to be stored in the unfit banknote storage units 40 and 42 (STEP 113). The inputted deposit data is then stored in the memory unit 808 of the money processing system 1 or the memory unit 82 of the valuable medium processing apparatus 500 (STEP 114). On the other hand, if the operator has corrected the deposit data (YES at STEP 115) instead of finalizing the deposit data (NO at STEP 112), the inputted deposit data is corrected (STEP 117). Then, a display prompting the operator to finalize the corrected deposit data is displayed on the operation display unit 600. On the other hand, if the deposit data has not been corrected and a command for returning the unfit banknote or the old version banknote is inputted via the operation display unit 600 (NO at STEP 115), the unfit banknote or the old version banknote temporarily stored in the escrow unit 20 is transported by the first transporting unit 14a of the transporting unit 14 to the dispensing unit 60 to be returned to the outside of the apparatus (STEP 116). In this manner, the operation for depositing unfit banknotes and old version banknotes into the valuable medium processing apparatus 500 is completed.

### Process on the deposit data

As illustrated in FIG. 10, it is important, when performing the deposit process for depositing an unfit banknote into the valuable medium processing apparatus 500, to correctly perform the process of acquiring image data of the unfit banknote and displaying the image data and the process for inputting the deposit data based on the image data (STEP 110). The input data including the deposit data is associated with the image data to be processed and stored in the memory units 82 and 808. A specific configuration of the process for inputting the deposit data will be explained with reference to FIGS. 9 and FIGS. 11 to 15.

Referring to FIG. 9, the valuable medium processing apparatus 500 includes the banknote kind receiving unit 85, the value receiving unit 86, the output unit 87, and the calculation unit 88. The banknote kind receiving unit 85, the value receiving unit 86, the output unit 87, and the calculation unit 88 are connected to the control unit 80 of the valuable medium processing apparatus 500 so that various information received by the banknote kind receiving unit 85 and the value receiving unit 86 is transmitted to the control unit 80. Moreover, when a command is given by the control unit 80 to the output unit 87, the output unit 87 outputs support information for supporting the operator in performing a process of determining the value of an unfit banknote (in other words, reference information useful for the operator) as described below. Each of the banknote kind receiving unit 85, the value receiving unit 86, the output unit 87, and the calculation unit 88 will be explained below.

When an unfit banknote is received in the depositing unit 10 in the valuable medium processing apparatus 500, the unfit banknote is fed by the feeding mechanism 12 into the apparatus body and is transported by the transporting unit 14. Then, an image of the unfit banknote fed into the apparatus body is captured by the imaging unit 16 and thus data of the captured image of the unfit banknote is acquired. In the present embodiment, images of both the front and back surfaces of the banknote are captured by the imaging unit 16 and thus image data of each of the front and the back surfaces are acquired. The unfit banknote of which the images have been captured by the imaging unit 16 is then transported to the escrow unit 20 to be temporarily stored in the escrow unit 20. When the unfit banknote is temporarily stored in the escrow unit 20, image data of the unfit banknote is displayed on the operation display unit 600. Based on the image data of the unfit banknote displayed on the operation display unit 600, the operator inputs deposit data via the operation display unit 600. Specifically, the kind, the value, and the like of the banknote (unfit banknote) are inputted as the deposit data.

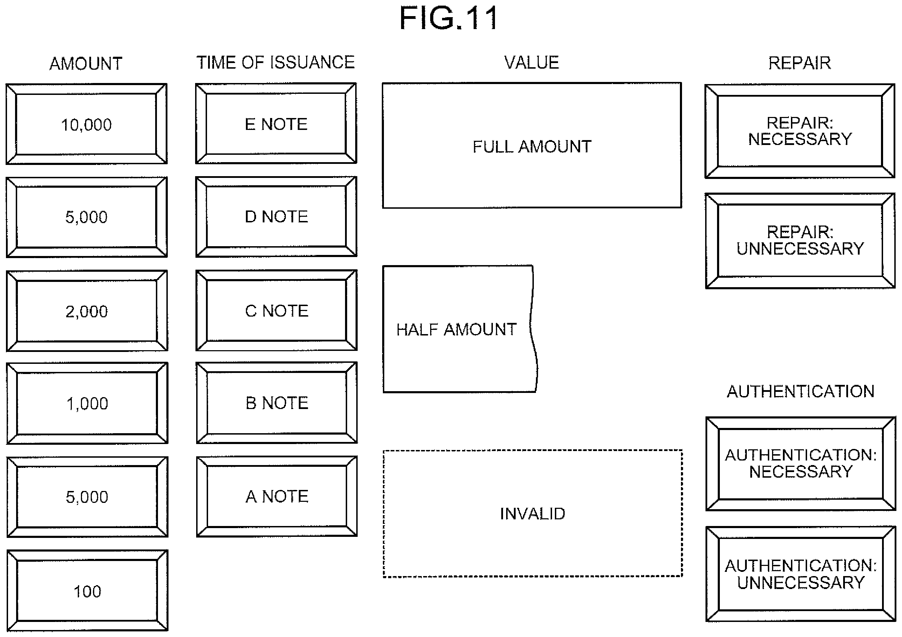

When the operator inputs the deposit data via the operation display unit 600, the image data of the unfit banknote of which the images have been captured by the imaging unit 16 is displayed on the operation display unit 600 constituted by a touch panel and also an operation screen illustrated in FIG. 11 is displayed. Information for selecting the denomination, the time of issuance, and the value of the unfit banknote, whether the unfit banknote requires repair, and whether authentication is necessary is displayed on the operation screen. The operator first inputs the denomination of the unfit banknote received in the depositing unit 10 (indicated as "AMOUNT" in FIG. 11). Specifically, when the operator touches each denomination (amount) portion displayed on the operation display unit 600 with the finger, the amount of the unfit banknote is selected. In this operation, if the denomination of the unfit banknote has already been determined based on the image data of the unfit banknote acquired by the imaging unit 16 by performing a process such as optical character recognition (OCR) by the control unit 80, the denomination (amount) matching the determination result among the display of denominations (amounts) displayed on the operation display unit 600 is highlighted with color so that the matching denomination (amount) can be displayed distinguishably from the other denominations.

Next, the operator selects the time of issuance of the unfit banknote received in the depositing unit 10. Specifically, when the operator touches any of alternative portions including "A note" to "E note" displayed on the operation display unit 600, it leads to automatic selection of the time of issuance of the unfit banknote. The alternatives including A note to E note displayed on the operation display unit 600 correspond to the dates of issuance of the unfit banknotes in FIG. 22. Specifically, if the operator has selected a "10,000-yen note" for the amount and "E note" for the time of issuance, information indicating that the kind of banknote is 10,000-yen E note (the date of issuance is November 1, 2004) is inputted. The banknote kind of the unfit banknote inputted in this manner via the operation display unit 600 is received by the banknote kind receiving unit 85.

Next, the operator selects the value of the unfit banknote received in the depositing unit 10 via the operation display unit 600. Specifically, the operator touches one of the alternatives "full amount", "half amount", and "invalid" displayed on the operation display unit 600 with the finger to select the value of the unfit banknote. The value of the unfit banknote inputted via the operation display unit 600 is received by the value receiving unit 86. Moreover, the operator inputs information about whether to perform repair of the unfit banknote received in the depositing unit 10 via the operation display unit 600. Specifically, the operator touches the screen at either an alternative "repair: necessary" or an alternative "repair: unnecessary" displayed on the operation display unit 600 with the finger to select whether to perform repair of the unfit banknote. Moreover, the operator inputs information about whether to perform authentication of the unfit banknote received in the depositing unit 10 via the operation display unit 600. Specifically, the operator touches the screen at either an alternative "authentication: necessary" or an alternative "authentication: unnecessary" displayed on the operation display unit 600 with the finger to select whether to perform authentication of the unfit banknote.

With respect to the selection of items on the operation screen, when the information about the denomination of the banknote is received in the process of receiving the kind of banknote by the banknote kind receiving unit 85, only alternatives corresponding to the denomination from among plural candidates for new version banknotes and old version banknotes are displayed on the operation display unit 600. Specifically, when the operator selects "2,000-yen note" via the screen illustrated in FIG. 11 as the denomination (amount), for example, "D note" only is displayed as the time of issuance from among the candidates "A note" to "E note", and the other candidates "A note" to "C note" and "E note" become disabled. This is because "2,000-yen D note" only exists for the kind of banknote of a 2,000-yen note as illustrated in FIG. 22. Similarly, when the operator selects "10,000-yen note" via the screen illustrated in FIG. 11 as the denomination (amount), for example, "C note", "D note", and "E note" only are displayed as the time of issuance from among the candidates "A note" to "E note", and the other candidates "A note" and "B note" become disabled. This is because " 10,000-yen C note", " 10,000-yen D note", and " 10,000-yen E note" only exist for the kind of banknote of 10,000-yen notes as illustrated in FIG. 22. As explained above, when the information about the denomination of the banknote is received via the display screen of the operation display unit 600 illustrated in FIG. 11, only alternatives corresponding to the denomination are displayed on the operation display unit 600 from among plural candidates for new version banknotes and old version banknotes. Thus, the operator can perform the selection of the kind of banknote quickly and securely.

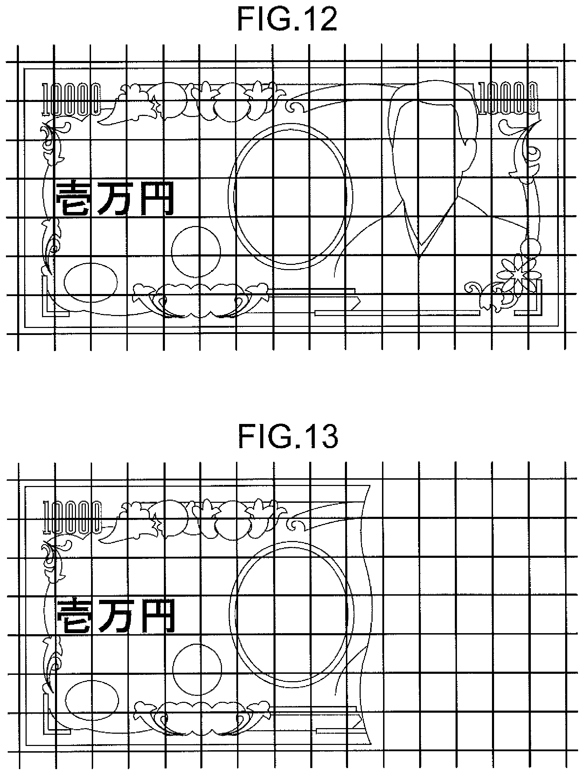

Moreover, in the present embodiment, the output unit 87 outputs the image data of the unfit banknote acquired by the imaging unit 16 and the support information for supporting the operator to perform a process for determining the value of the unfit banknote, and the outputted information is displayed on the operation display unit 600. The support information for supporting the operator to perform a process for determining the value of the unfit banknote herein refers to grid-like lines provided in longitudinal and lateral directions at predetermined intervals as illustrated in FIG. 12, for example. The operator refers to the above-described grid-like lines to determine the ratio of the valid or invalid area of the banknote in the image data of the unfit banknote acquired by the imaging unit 16 to the entire area of an undamaged banknote. If the ratio of the valid area of the unfit banknote is 2/3 or larger of the entire area, the unfit banknote is determined to have the value equivalent to the full denomination of the note, and accordingly, the operator selects "full amount" as the value. Similarly, if the ratio of the valid area is 2/5 or larger and less than 2/3, the unfit banknote is determined to have the value equivalent to half the denomination of the note, and accordingly, the operator selects "half amount" as the value. On the other hand, if the ratio of the remaining area of the banknote is less than 2/5, the banknote is determined to have been invalid because it has no value, and accordingly, the operator selects "invalid" as the value. As explained above, the support information including the grid-like lines illustrated in FIG. 12 supports the operator in inputting the value of the banknote via the operation display unit 600. For the grid-like lines illustrated in FIG. 12, plural types of the grid-like lines are prepared for each kind of banknotes, and the grid-like lines corresponding to the kind of banknote is displayed on the operation display unit 600 when the banknote kind of the banknote is received by the banknote kind receiving unit 85.

FIG. 13 illustrates a display content displayed when image data of an unfit banknote of which an approximately half part has been torn and lost is displayed on the operation display unit 600. Referring to FIG. 13, also for the approximately half torn and lost unfit banknote, the support information including the grid-like lines are displayed on the operation display unit 600 so that they correspond to the entire area of a fit banknote corresponding to the banknote kind of the unfit banknote. By referring to the grid-like lines rendered so as to cover the entire unfit banknote, the operator can quickly and securely determine the degree of loss of the unfit banknote.

The unfit banknotes deposited into the valuable medium processing apparatus 500 are generally in various face/back orientations and longitudinal orientations. Accordingly, the pieces of image data acquired by the imaging unit 16 when the unfit banknotes are fed into the apparatus are also oriented in various face/back orientations and longitudinal orientations. However, because the image data of the face side and the back side are acquired separately from each other, the image of the face side or the image of the back side can be selected and used regardless of the orientation of the unfit banknote. Moreover, if the pieces of image data are oriented in different longitudinal orientations, the image data can be easily aligned in the same longitudinal orientations by rotating the image data. Accordingly, as illustrated in FIG. 13, the face or back orientation and the longitudinal orientation of the image data displayed on the operation display unit 600 can be selected so that the image data can be viewed and confirmed easily by the operator as an image of an appropriately oriented banknote regardless of the side and the orientation of the actual unfit banknote of which the image is captured by the imaging unit 16.

In the valuable medium processing apparatus 500, the face/back orientation and the longitudinal orientation of the actual unfit banknote stored in the unfit banknote storage units 40 and 42 can be set to be the same as those of the image data. For example, if the pieces of image data of the face side of the unfit banknotes are used so that the top side is oriented upward, a reversing mechanism included in the apparatus that aligns the unfit banknotes in the face/back orientation and in the longitudinal orientation is used and the unfit banknotes are aligned and stored in the unfit banknote storage units 40 and 42, so that the top sides of the face side up banknotes are oriented upward. Due to this, in comparing the unfit banknotes removed from the unfit banknote storage unit 40 or 42 with the image data displayed on the operation display unit 600, it becomes unnecessary to turn the actual unfit banknotes upside down or change the holding state of the note in the longitudinal orientation according to the image data displayed on the screen as necessary in the conventional techniques, and thus the comparison operation can be easily performed. The method of reversing the unfit banknotes is not limited to the one that uses a dedicated reversing mechanism, and it is possible to employ a configuration in which the unfit banknotes are reversed by switchback transport that uses transport paths branched in three directions.

Referring to FIG. 9, the calculation unit 88 connected to the control unit 80 calculates a ratio of the valid or invalid area of the unfit banknote in the image data of the unfit banknotes acquired by the imaging unit 16 to the entire area of an undamaged banknote. More specifically, the calculation unit 88 compares the number of pixels of the image data of the unfit banknotes acquired by the imaging unit 16 and the number of pixels of the image data of a fit banknote (undamaged banknote) for the banknote kind of the unfit banknotes acquired by the imaging unit 16, for example, to calculate the ratio of the valid or invalid area of the unfit banknote. The output unit 87 also outputs the ratio calculated by the calculation unit 88 as well as the support information including the grid-like lines. To describe this more specifically, if an image of an approximately half torn and lost unfit banknote as illustrated in FIG. 13 is captured by the imaging unit 16 and the image data thereof is acquired and stored in the escrow unit 20, for example, then the image data of the unfit banknote and the support information including the grid-like lines are displayed on the operation display unit 600 and also the ratio of the valid area of the unfit banknote calculated by the calculation unit 88 is also displayed. For example, information indicating "Ratio of valid area: 58%" is displayed on the operation display unit 600, for example. The operator can refer to the information about the ratio of the valid or invalid area of the unfit banknote calculated by the calculation unit 88 explained above in inputting the value of the banknote via the operation display unit 600. In addition to the ratio of area, the value of the unfit banknote corresponding to the area can be displayed on the operation display unit 600. Specifically, in addition to the display "Ratio of the valid area: 58%", information indicating "Equivalent to half the amount" is displayed, for example. The display on the screen will be explained in detail below later.

After the operator has inputted the deposit data via the operation display unit 600, the output unit 87 outputs the image data of the unfit banknote acquired by the imaging unit 16 and the banknote kind of the unfit banknote received by the banknote kind receiving unit 85 as illustrated in FIG. 14, and the outputted information is displayed on the operation display unit 600. Specifically, after the operator has inputted the deposit data via the operation display unit 600, the deposit data (image voucher) and the image data of the unfit banknote are displayed on the operation display unit 600 side by side. The deposit data includes the banknote kind of the banknote received by the banknote kind receiving unit 85 and the value of the unfit banknote received by the value receiving unit 86. Moreover, if images of both the face and the back sides of the banknote have been captured by the imaging unit 16, the image data of each of the face side and the back side of the unfit banknote is displayed on the operation display unit 600. Due to this configuration, the operator can easily recognize input errors, if any, by visually verifying the display on the operation display unit 600 after inputting the deposit data, and accordingly, incorrect inputs of the kind of banknote and the value of unfit banknotes can be prevented.

Referring to FIG. 14, the deposit data includes information such as the date of process, the processing time, the operator ID (information read from the ID card carried by the operator and having been read by the ID card reader 810), the banknote kind of the unfit banknote, and the value of the banknote. Specifically, the banknote kind of the unfit banknote in the deposit data illustrated in FIG. 14 is the kind of banknote inputted by the operator by inputting the denomination and the time of issuance of the unfit banknote via the display screen of the operation display unit 600 illustrated in FIG. 11 and received by the banknote kind receiving unit 85, and the value of the unfit banknote in the deposit data illustrated in FIG. 14 is the value of the unfit banknote inputted by the operator by inputting the value of the unfit banknote via the operation display unit 600 illustrated in FIG. 11 and received by the value receiving unit 86. As explained above, the deposit data displayed on the operation display unit 600 includes the kind of banknote and the value of the unfit banknote received by the banknote kind receiving unit 85.

It is possible to employ a configuration in which image data of one sheet of unfit banknote and deposit data of the unfit banknote are displayed on the operation display unit 600 Alternatively, it is possible to employ a configuration in which pieces of image data of all unfit banknotes acquired by the imaging unit 16 for one transaction and respective pieces of deposit data (image vouchers) corresponding to the respective pieces of the image data of the unfit banknotes are displayed as a list on the operation display unit 600.

Moreover, as another example, it is possible to provide the selection unit 90 (see FIG. 9) that selects whether to display image data of unfit banknotes acquired by the imaging unit 16 for one sheet at a time or to display a list of image data of all the unfit banknotes for one transaction, and display the image data of the unfit banknotes and the deposit data corresponding to the image data on the operation display unit 600 by a method selected by the selection unit 90. If it has been selected to display the list of unfit banknotes, the number of unfit banknotes to be simultaneously displayed on the screen can be designated by operating on the selection unit 90.

Moreover, it is possible to employ a configuration in which either one of the deposit data and the image data of the unfit banknote only is displayed on the screen of the operation display unit 600 and the display is switched between the deposit data and the image data instead of displaying both the deposit data (including the banknote kind of the unfit banknote received by the banknote kind receiving unit 85) and the image data of the unfit banknote side by side on one screen.

Moreover, as illustrated in FIG. 9, the valuable medium processing apparatus 500 according to the present embodiment is provided with the determination unit 89 that determines the banknote kind of the unfit banknote (the denomination and the time of issuance) based on the image data of the unfit banknote acquired by the imaging unit 16. If the banknote kind of the unfit banknote determined by the determination unit 89 is different from the banknote kind of the unfit banknote inputted by the operator and received by the banknote kind receiving unit 85, the operation display unit 600 displays the deposit data of the unfit banknote so that the difference can be recognized. The deposit data of the unfit banknote of which the kind of banknote received from the operator is different from the kind of banknote determined by the determination unit 89 is displayed in a color different from the color of the deposit data of the unfit banknote for which the above-described kinds of banknote match each other. Specifically, if the banknote kind of the unfit banknote determined by the determination unit 89 matches the banknote kind of the unfit banknote received by the banknote kind receiving unit 85, the background of the deposit data is displayed in white, for example. On the other hand, if the banknote kind of the unfit banknote determined by the determination unit 89 is different from the banknote kind of the unfit banknote received by the banknote kind receiving unit 85, the background of the deposit data is displayed in red, for example, to give warning to the operator. Moreover, if the result of determination by the determination unit 89 is different from the result of input by the operator, a message prompting the operator to verify the result is displayed on the operation display unit 600, as well as the method of display of the deposit data is changed.

It is possible to employ a configuration in which the value of the unfit banknote is automatically calculated by the control unit 80 based on information about the banknote kind of the unfit banknote determined by the determination unit 89 and the valid area or the invalid area of the unfit banknote calculated by the calculation unit 88. If the value of the unfit banknote inputted by the operator by inputting the value of the unfit banknote via the operation screen of the operation display unit 600 illustrated in FIG. 11 and received by the value receiving unit 86 is different from the value automatically calculated by the control unit 80, to give a warning to the operator, the background of the deposit data displayed on the operation display unit 600 is displayed in a color different from the color of the background of the deposit data used if the values of both unfit banknotes is the same. In addition, a message prompting the operator to perform verification is displayed on the operation display unit 600.

As explained above, if there is possibility that an error exists in the deposit data having been completely inputted by the operator, the message prompting the operator to perform verification is displayed on the operation display unit 600, and accordingly, the operator can verify the deposit data twice at the timings of "selection of the kind of banknote and the value of the unfit banknote" and the "completion of the input". With this configuration, errors in inputting deposit data can be securely prevented.

As explained above, according to the present embodiment, the valuable medium processing apparatus 500 is provided which includes the depositing unit 10 for depositing an unfit banknote into the apparatus body, the imaging unit 16 for capturing an image of the unfit banknote fed by the depositing unit 10 into the apparatus body and acquiring image data of the unfit banknote, the banknote kind receiving unit 85 for receiving the banknote kind of the unfit banknote, the value receiving unit 86 for receiving the value of the unfit banknote, and the output unit 87 for outputting the support information for supporting the process of determining the value of the unfit banknote corresponding to the image data of the unfit banknote acquired by the imaging unit 16 and the kind of banknote received by the banknote kind receiving unit 85. By outputting the support information for supporting the operator to perform the process of determining the value of the unfit banknote as explained above, and the outputted support information can be displayed on the operation display unit 600, for example, together with the image data, accordingly, even a person who is not an expert operator who can determine the value of banknotes can precisely determine the value of a partially torn and lost unfit banknote by referring to the outputted support information.

The information outputted from the output unit 87 is information for supporting the operator to perform the process for determining the ratio of the valid area or the invalid area of the unfit banknote in the image data acquired by the imaging unit 16 to the entire area of the banknote of the kind of banknote received by the banknote kind receiving unit 85. More specifically, grid-like lines provided in the longitudinal and lateral directions at predetermined intervals are used as the support information as illustrated in FIG. 12 and the like. Note that information other than the grid-like lines illustrated in FIG. 12 and the like but with which the ratio of area can be calculated can be used if the information can support the operator to determine the ratio of the valid area or the invalid area of the unfit banknote.

Moreover, as explained above, the ratio of the valid area or the invalid area of the unfit banknote image acquired by the imaging unit 16 to the entire area of the banknote of the banknote kind received by the banknote kind receiving unit 85 is automatically calculated by the calculation unit 88, and the output unit 87 also outputs the ratio calculated by the calculation unit 88. Accordingly, the operator can determine the value of the unfit banknote by referring to the ratio calculated by the calculation unit 88 as well as the support information.

Moreover, according to the present embodiment, the valuable medium processing apparatus 500 is provided which includes the depositing unit 10 for depositing an unfit banknote into the apparatus body, the imaging unit 16 for capturing an image of the unfit banknote fed by the depositing unit 10 into the apparatus body and acquiring image data of the unfit banknote, the banknote kind receiving unit 85 for receiving the banknote kind of the unfit banknote, and the output unit 87 for outputting the image data of the unfit banknote acquired by the imaging unit 16 and the deposit data inputted by the operator (specifically, the banknote kind of the unfit banknote received by the banknote kind receiving unit 85). With this configuration, by outputting the image data of the unfit banknote and the banknote kind of the unfit banknote received by the banknote kind receiving unit 85, and the outputted information can be displayed on the operation display unit 600, for example, accordingly, the operator can easily find an error by visual verification by collating the inputted contents and the image data of the unfit banknote, and thus errors in inputting the banknote kind of the unfit banknote can be prevented.

In the present embodiment, the information outputted by the output unit 87 of the valuable medium processing apparatus 500 is displayed on the operation display unit 600; however, the present embodiment is not limited to this configuration. It is possible to employ a configuration in which the valuable medium processing apparatus 500 itself is provided with a display unit (specifically, on a front surface or an upper surface of a housing of the valuable medium processing apparatus 500) and the information outputted by the output unit 87 is displayed on the display unit, for example. The information may be outputted to an external terminal or to the printer 700.

It is also possible to employ a configuration in the valuable medium processing apparatus 500 according to the present embodiment in which after the banknote kind of the unfit banknote is received by the banknote kind receiving unit 85 and the value of the unfit banknote is received by the value receiving unit 86, a new banknote corresponding to the kind of banknote and the value of the received unfit banknote is transported from the new-banknote storage unit 50 to the dispensing unit 60 and then dispensed from the dispensing unit 60 to the outside of the apparatus. In this configuration, when the unfit banknote is received in the depositing unit 10 of the valuable medium processing apparatus 500, a new banknote corresponding to the value of the unfit banknote loaded into the apparatus body of the valuable medium processing apparatus 500 can be dispensed from the valuable medium processing apparatus 500.

It is also possible to employ a configuration in the valuable medium processing apparatus 500 according to the present embodiment in which if the value of the unfit banknote received by the value receiving unit 86 is 0, the unfit banknote determined to have no value is transported from the escrow unit 20 to the dispensing unit 60 and then dispensed from the dispensing unit 60 to the outside of the apparatus instead of storing the unfit banknote in the unfit banknote storage units 40 and 42.

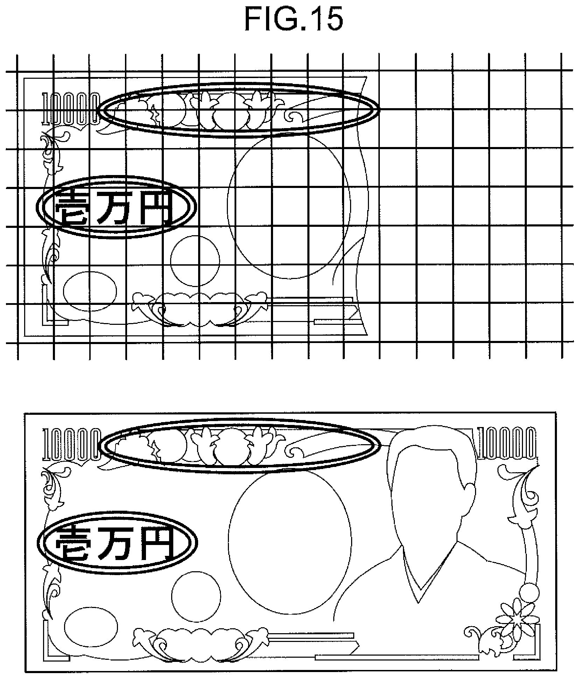

It is also possible to employ a configuration in the valuable medium processing apparatus 500 according to the present embodiment in which after the operator has inputted the deposit data via the operation display unit 600, a sample image of a banknote corresponding to the kind of banknote received by the banknote kind receiving unit 85 (specifically, a 10,000-yen fit banknote illustrated in FIG. 15 in the lower portion) is displayed on the operation display unit 600 side by side with the image data of the unfit banknote acquired by the imaging unit 16. With this configuration, by visually comparing the image data of the unfit banknote acquired by the imaging unit 16 with the sample image of the banknote, the operator can determine whether the kind of banknote inputted by the operator via the operation display unit 600 is correct or not. In other words, if the kind of banknote inputted by the operator via the operation display unit 600 is incorrect, then the image data of the unfit banknote acquired by the imaging unit 16 and the sample image of the banknote would be different from each other, and accordingly, the operator can find the errors in the input of the kind of banknote.

In the present embodiment, the imaging unit 16 captures images of both the face side and the back side of the banknote, and it is also possible to employ a configuration in which if the image data of the face side of the unfit banknote and the image data of the back side of the unfit banknote are to be displayed on the operation display unit 600, then sample images of both the face side and the back side of the banknote are displayed on the operation display unit 600. For banknotes of which the kind of banknote (specifically, the time of issuance) is difficult to determine by verifying the face side of the banknote, such as the 10,000-yen D note or the 10,000-yen E note, errors by the operator in inputting the kind of banknote can be more securely prevented by displaying the sample image of the back side. The display on the screen will be explained in detail below later.

In the configuration in which the sample images of the banknote corresponding to the kind of banknote received by the banknote kind receiving unit 85 are displayed on the operation display unit 600, a specific portion of the sample images of the banknote may be displayed differently from the other portions. Moreover, the specific portion in the image data of the unfit banknote acquired by the imaging unit 16 can also be displayed differently from the other portions. Specifically, referring to FIG. 15, a specific portion of the image data of the unfit banknote acquired by the imaging unit 16 and the sample image of the banknote can also be displayed on the operation display unit 600 in a state in which the portion is surrounded by a double circle. In this configuration, the specific portion surrounded by the double circle in the image data of the unfit banknote acquired by the imaging unit 16 and the sample image of the banknote is a portion having a distinct characteristic and therefore helpful in determining the kind of banknote . Specifically, when comparing the image data of the unfit banknote acquired by the imaging unit 16 and the sample image of the banknote, the operator can perform the determination as to whether the kind of banknote inputted via the operation display unit 600 is correct in a short period of time by verifying the specific portion surrounded by the double circle focusing thereon by using the image data of the unfit banknote acquired by the imaging unit 16 and the sample image of the banknote.

In the above description, the case where the unfit banknote is deposited into the apparatus body of the valuable medium processing apparatus 500 is described; however, the present invention is not limited to this. For example, a process similar to the above-described process can be performed even if a valuable medium other than an unfit banknote (specifically, a banknote other than an unfit banknote, a check, a draft, and the like) has been deposited into the valuable medium processing apparatus 500. Specifically, the image data acquired by the imaging unit 16 and the support information for supporting the operator to perform a process of determining the value of the valuable medium corresponding to the kind of banknote received by the banknote kind receiving unit 85 are outputted by the output unit 87 regardless of the type of the valuable medium. It is also possible in the present embodiment to employ a configuration in which the image data acquired by the imaging unit 16 and the kind of banknote received by the banknote kind receiving unit 85 are outputted by the output unit 87.

### Transport support sheet

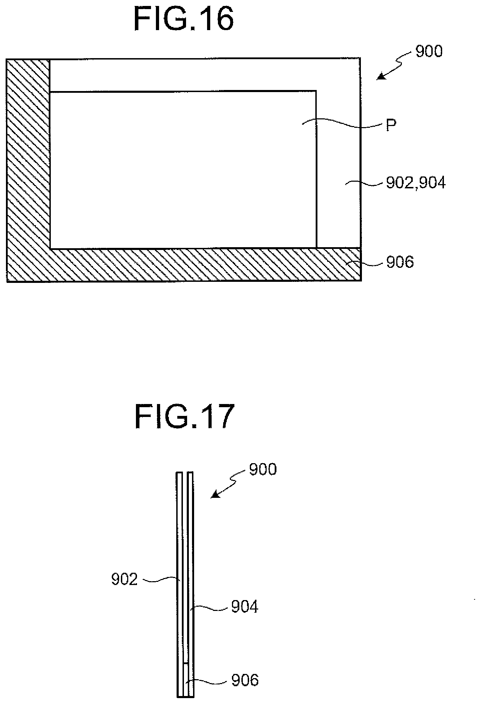

In the present embodiment, an excessively damaged unfit banknote, among unfit banknotes discharged from the loose banknote handling apparatus 100, is sandwiched in the transport support sheet (carrier sheet) 900 illustrated in FIG. 16 and the like before being deposited into the apparatus body of the valuable medium processing apparatus 500. The unfit banknote is deposited into the apparatus body of the valuable medium processing apparatus 500 while being sandwiched in the transport support sheet 900 and stored in the unfit banknote storage units 40 and 42 while still being sandwiched in the transport support sheet 900. The above-described configuration will be explained in detail below with reference to FIGS. 9, 16, and 17.

The transport support sheet 900 will be explained in detail with reference to FIGS. 16 and 17. FIG. 16 is a front view of the transport support sheet 900 and FIG. 17 illustrates the transport support sheet 900 illustrated in FIG. 16 viewed from the side thereof. In FIGS. 16 and 17, the unfit banknote sandwiched in the transport support sheet 900 is indicated by a reference sign P.

The transport support sheet 900 is constituted by a pair of sheets 902 and 904 that sandwich and hold the unfit banknote. The sheets 902 and 904 are stuck to each other in an attachment area 906 (indicated as a diagonally shaded region in FIG. 16). At least one surface of the pair of sheets 902 and 904 is transparent or translucent. Specifically, infrared ray (IR) cut films that transmit visible light are used as the pair of sheets 902 and 904. With this configuration, when the unfit banknote sandwiched in the transport support sheet 900 is transported by the transporting unit 14 in the apparatus body of the valuable medium processing apparatus 500 and an image thereof is acquired by the imaging unit 16, a visible light image of the unfit banknote can be acquired while the unfit banknote is sandwiched in the transport support sheet 900. If the pair of sheets 902 and 904 is respectively transparent or translucent, visible light images of both sides of the unfit banknote sandwiched in the transport support sheet 900 can be acquired. Moreover, the transporting unit 14 is provided with a transport control sensor for detecting the valuable medium and controlling the transport of the valuable medium, and by detecting the IR cut film by using the transport control sensor, troubles such as errors in branching between transport paths or jams that may occur while transporting the unfit banknote by using the transporting unit 14 can be prevented.

In the present embodiment, as a portion to be detected by the transport control sensor of the transporting unit 14, a portion that shields light of a specific wavelength, such as an IR cut film, is provided in at least one region or on the entire surface of the pair of sheets 902 and 904; however, the present embodiment is not limited to this configuration. It is possible to employ another configuration in which a portion to be detected which reflects light of a specific wavelength is provided in at least one region or on the entire surface of the pair of sheets 902 and 904.

It is not necessary that the pair of sheets 902 and 904 of the transport support sheet 900 is transparent or translucent. A material that does not transmit light may also be used for the pair of sheets 902 and 904. In this case, although image data of the unfit banknote sandwiched in the transport support sheet 900 cannot be acquired by the imaging unit 16, information about the unfit banknote (the kind of banknote and the value) sandwiched in the transport support sheet 900 can be written on the sheet 902 or 904 before depositing into the valuable medium processing apparatus 500. When collecting the unfit banknote from inside the apparatus body of the valuable medium processing apparatus 500, the information about the unfit banknote can be quickly confirmed.

In the present embodiment, if the single sheet loading mode has been selected and if an unfit banknote sandwiched in the transport support sheet 900 is deposited into the apparatus body of the valuable medium processing apparatus 500 sheet by sheet and is then stored in the unfit banknote storage units 40 and 42, the unfit banknote deposited into the apparatus body of the valuable medium processing apparatus 500 is temporarily held in the transport path of the transporting unit 14 and when the operator gives a verification command via the operation display unit 600, the unfit banknote temporarily held in the transport path of the transporting unit 14 is stored in the unfit banknote storage units 40 and 42. On the other hand, if the bundle loading mode has been selected and if the unfit banknotes sandwiched in the transport support sheet 900 is deposited into the apparatus body of the valuable medium processing apparatus 500 in a bundle and are then stored in the unfit banknote storage units 40 and 42, the unfit banknotes deposited into the apparatus body of the valuable medium processing apparatus 500 are transported to the escrow unit 20 to be temporarily held there, and when the operator gives a verification command via the operation display unit 600, the unfit banknotes temporarily stored in the escrow unit 20 are stored in the unfit banknote storage units 40 and 42.

Moreover, in the present embodiment, image data of the unfit banknote sandwiched in the transport support sheet 900 is acquired by the imaging unit 16 while transporting the unfit banknote inside the apparatus body of the valuable medium processing apparatus 500 by using the transporting unit 14. The image data acquired by the imaging unit 16 is used in a process of recognizing the unfit banknote sandwiched in the transport support sheet 900.

As explained above, according to the present embodiment, a method of processing an unfit banknote is provided, which includes a process for holding the unfit banknote in the transport support sheet 900, a process for depositing the unfit banknote sandwiched in the transport support sheet 900 into the apparatus body of the valuable medium processing apparatus 500, and a process for transporting the unfit banknote that is sandwiched in the transport support sheet 900, deposited into and stored in the apparatus body of the valuable medium processing apparatus 500. According to the above-described unfit banknote processing method, a partially torn and lost unfit banknote can be stored and managed inside the apparatus body of the valuable medium processing apparatus 500. Moreover, the transport support sheet 900 used in the unfit banknote processing method is provided in the present embodiment.

In the present embodiment, recognition of an unfit banknote deposited into the apparatus body of the valuable medium processing apparatus 500 and sandwiched in the transport support sheet 900 is performed by capturing an image of the unfit banknote by using the imaging unit 16.

In the present embodiment, the transport support sheet 900 includes the pair of sheets 902 and 904 which sandwich and hold an unfit banknote. The transport support sheet according to the present embodiment is not limited to a configuration in which an unfit banknote is sandwiched therebetween. In another example, it is possible to employ a configuration in which transport the support sheet is attached to an unfit banknote, the unfit banknote to which the transport support sheet is attached is deposited into the apparatus body of the valuable medium processing apparatus 500, and the unfit banknote to which the transport support sheet is attached is transported and stored in the apparatus body of the valuable medium processing apparatus 500. Even with this configuration, partially torn and lost unfit banknotes can be stored and managed inside the apparatus body of the valuable medium processing apparatus 500.

In the present embodiment, it is also possible to employ a configuration in which at least one surface of the pair of sheets 902 and 904 of the transport support sheet 900 is transparent or translucent. With this configuration, an image of the unfit banknote sandwiched in the transport support sheet 900 can be captured with the imaging unit 16. Moreover, it is possible to employ a configuration in which both surfaces of the pair of sheets 902 and 904 are transparent or translucent and a portion to be detected which shields or reflects light of a specific wavelength (specifically, an IR cut film, for example) is provided in at least one region of one of the pair of sheets 902 and 904. In this configuration, the transport control sensor provided in the transporting unit 14 detects the portion of the transport support sheet 900, and thereby troubles such as errors in branching between transport paths or jams that may occur while transporting the unfit banknote sandwiched in the transport support sheet 900 by using the transporting unit 14 can be prevented.

In the above description, the valuable medium sandwiched in the transport support sheet 900 is described by using an unfit banknote as an example, however, the valuable medium is not limited to this example. As paper sheets sandwiched in the transport support sheet 900, banknotes other than unfit banknotes, checks, drafts, and the like may also be used. In the present embodiment, it is also possible to employ a configuration in which paper sheets are sandwiched between different types of the transport support sheet 900, specifically, in the transport support sheet 900 of different sizes, according to the type of the valuable media (banknotes, checks, drafts, and the like) to be deposited into the apparatus body of the valuable medium processing apparatus 500.

### Unfit banknote repair operation

The state of an unfit banknote cannot be stored in the loose banknote handling apparatus 100 and thus discharged to the outside of the apparatus body of the loose banknote handling apparatus 100 is classified into a repair-necessary state, in which the degree of damage of the note is high and repair using cellophane tapes or the like is necessary, and a repair-unnecessary state, in which the banknote has not been so damaged that repair is unnecessary. Unfit banknotes can be exchanged with fit banknotes by presenting them to the central bank (in Japan, the Bank of Japan), and for excessively damaged unfit banknotes in the repair-necessary state, it is necessary to repair them before presenting them to the central bank. Specifically, when an unfit banknote in the repair-necessary state is stored inside the apparatus body of the valuable medium processing apparatus 500, the operator then performs an operation for first removing the unfit banknote from the apparatus body of the valuable medium processing apparatus 500, then repairing the unfit banknote, and then re-depositing the repaired unfit banknote into the apparatus body of the valuable medium processing apparatus 500 as a banknote in the repair-unnecessary state. When the number of the unfit banknotes in the repair-unnecessary state stored in the apparatus body of the valuable medium processing apparatus 500 has reached a predetermined number, the operator performs an operation for removing the unfit banknotes from inside the apparatus body of the valuable medium processing apparatus 500 and then presenting them to the central bank. This configuration will be explained in detail below with reference to FIG. 9.

Referring to FIG. 9, the valuable medium processing apparatus 500 according to the present embodiment, is provided with the unfit banknote state receiving unit 92 and the setting unit 93. The unfit banknote state receiving unit 92 and the setting unit 93 are connected to the control unit 80 of the valuable medium processing apparatus 500 so that information received by the unfit banknote state receiving unit 92 and information set by the setting unit 93 are transmitted to the control unit 80. Hereinbelow, each of the unfit banknote state receiving unit 92 and the setting unit 93 will be explained in detail.

The unfit banknote state receiving unit 92 receives information about the state of the unfit banknote. The states of unfit banknotes received by the unfit banknote state receiving unit 92 include the repair-necessary state which is a state requiring repair of the unfit banknote and the repair-unnecessary state which is a state not requiring repair of the unfit banknote. Examples of a method for allowing the state of the unfit banknote to be received by the unfit banknote state receiving unit 92 include a method for performing a receiving process by manual operation and a method for automatically performing a receiving process.

In the method for allowing the state of the unfit banknote to be received by the unfit banknote state receiving unit 92 by manual operation, in inputting deposit data via the operation screen of the operation display unit 600 illustrated in FIG. 11 after the unfit banknote has been deposited into the apparatus body of the valuable medium processing apparatus 500 and an image thereof is captured by the imaging unit 16, the operator can input the state of the unfit banknote by touching the screen at either an alternative "repair: necessary" or an alternative "repair: unnecessary" displayed on the operation display unit 600. Specifically, if the operator has touched the screen at the alternative "repair: necessary" via the operation display unit 600 illustrated in FIG. 11, information describing that the unfit banknote is in the repair-necessary state is received by the unfit banknote state receiving unit 92. On the other hand, if the operator has touched the screen at the alternative "repair: unnecessary" via the operation display unit 600 illustrated in FIG. 11, information describing that the unfit banknote is in the repair-unnecessary state is received by the unfit banknote state receiving unit 92.

A method that allows the state of the unfit banknote to be automatically received by the unfit banknote state receiving unit 92 will be described below. If it is detected by the sensors 1006 of the medium positioning device, the transport control sensor included in the transporting unit 14, the imaging unit 16, and the like that the unfit banknote deposited by the depositing unit 10 into the apparatus body has been sandwiched in the transport support sheet 900, then information describing that the unfit banknote is in the repair-necessary state is received by the unfit banknote state receiving unit 92. On the other hand, if it is detected that the unfit banknote has not been sandwiched in the transport support sheet 900, then information describing that the unfit banknote is in the repair-unnecessary state is received by the unfit banknote state receiving unit 92.

Alternatively, it is possible to employ a configuration in which the control unit 80 automatically determines which of the repair-necessary state and the repair-unnecessary state the unfit banknote deposited into the apparatus body of the valuable medium processing apparatus 500 is in based on the image data of the unfit banknote acquired by the imaging unit 16.

In the valuable medium processing apparatus 500 according to the present embodiment, the unfit banknotes deposited by the depositing unit 10 into the apparatus body are sorted based on the information on the state of the unfit banknotes received by the unfit banknote state receiving unit 92 and stored in the unfit banknote storage units 40 and 42. Specifically, if the state of the unfit banknote received by the unfit banknote state receiving unit 92 is the repair-necessary state, then the unfit banknote is stored in the stacker type unfit banknote storage unit 40, and if the state of the unfit banknote received by the unfit banknote state receiving unit 92 is the repair-unnecessary state, then the unfit banknote is stored in the tape winding type unfit banknote storage unit 42. With this configuration, among the unfit banknotes deposited by the depositing unit 10 into the apparatus body, the unfit banknotes in different states in the repair-necessary state and repair-unnecessary state can be sorted and separately stored in the unfit banknote storage unit 40 or 42. The unfit banknote in the repair-necessary state is stored in the unfit banknote storage unit 40 because if an unfit banknote in the repair-necessary state is stored in the tape winding type unfit banknote storage unit 42, there is a possibility of causing troubles of further damaging the unfit banknote and bringing about jams while the unfit banknote is sandwiched between a pair of tapes and is wound up by the drum 42a. Accordingly, excessively damaged unfit banknotes in the repair-necessary state are transported to and stored in the unfit banknote storage unit 40 in a simply stacked manner. Moreover, because it is necessary to perform a repair operation on the unfit banknotes in the repair-necessary state later, the unfit banknotes in the repair-necessary state are stored in the stacker type unfit banknote storage unit 40 so that all the unfit banknotes in repair-necessary state can be easily removed from the storage unit at the start of the repair operation.

After the unfit banknote in the repair-necessary state is stored in the stacker type unfit banknote storage unit 40, the operator removes the unfit banknote stored in the unfit banknote storage unit 40 from inside the apparatus body and performs a repair operation for repairing the unfit banknote by using cellophane tapes and the like. Only operators with a specific authority can remove the unfit banknotes in the repair-necessary state stored in the stacker type unfit banknote storage unit 40 from inside the apparatus body. More specifically, the operator causes the ID card reader 810 to read his/her ID card. The operator is authenticated based on the ID information stored in the ID card and read by the ID card reader 810, and thereby the unfit banknote stored in the unfit banknote storage unit 40 can be removed from inside the apparatus body of the valuable medium processing apparatus 500. The information about the operator having the specific authority can be set via the setting unit 93. More specifically, the information about the operator having the specific authority is set via the setting unit 93 by inputting the ID information and the authority of the operator who can remove the unfit banknote from inside the apparatus body of the valuable medium processing apparatus 500 via the operation display unit 600.

As explained above, the unfit banknote in the repair-necessary state stored in the stacker type unfit banknote storage unit 40 is removed from inside the apparatus body of the valuable medium processing apparatus 500, repaired by the operator, and deposited again from the depositing unit 10 into the apparatus body as an unfit banknote in the repair-unnecessary state. The unfit banknote now in the repair-unnecessary state is stored in the tape winding type unfit banknote storage unit 42. In this process, images of both the unfit banknote deposited into the apparatus body of the valuable medium processing apparatus 500 for the first time and the unfit banknote re-deposited into the apparatus body of the valuable medium processing apparatus 500 again after repair are captured by the imaging unit 16, and thereby both image data of the unfit banknote before repair and image data of the repaired unfit banknote can be acquired. In the memory unit 808 of the money processing system 1 and the memory unit 82 of the valuable medium processing apparatus 500, the image data of the unfit banknote before repair and the image data of the repaired unfit banknote are stored in association with each other. As explained above, because the image data of the unfit banknote before and after repair are stored in the memory unit 808 and the memory unit 82 in association with each other, it is easy to trace any incorrectness and the like recognized during the repair of the unfit banknote. Information such as serial numbers or the like of the unfit banknote can be used to verify that the image data before and after the repair are image data of the same unfit banknote.

It is not limited to a configuration in which both image data before the repair and image data after the repair are stored when a repaired unfit banknote is re-deposited into the valuable medium processing apparatus 500 again and image data of the unfit banknote has been acquired, and it is possible to employ a configuration in which only the image data after the repair is stored in the memory unit 808 and the memory unit 82. In this configuration, when the unfit banknote in the repair-necessary state stored in the stacker type unfit banknote storage unit 40 is removed from inside the apparatus body of the valuable medium processing apparatus 500, the image data of the unfit banknote before repair stored in the memory unit 808 and the memory unit 82 is automatically erased.

As explained above, in the present embodiment, the valuable medium processing apparatus 500 is provided which includes the depositing unit 10 for depositing unfit banknotes into the apparatus body, the plural unfit banknote storage units 40 and 42 for storing the unfit banknotes, and the unfit banknote state receiving unit 92 for receiving information about the state of the unfit banknotes. In addition, the unfit banknotes deposited by the depositing unit 10 into the apparatus body are sorted and stored in the corresponding unfit banknote storage unit 40 or 42 based on the information on the state of the unfit banknotes received by the unfit banknote state receiving unit 92. According to the above-described valuable medium processing apparatus 500, the unfit banknotes deposited into the apparatus body are sorted based on the information about the state of the received unfit banknotes and stored in the corresponding unfit banknote storage unit 40 or 42. The storage destination can be changed according to the state of the unfit banknote deposited into the apparatus body, and accordingly, mixed storage of unfit banknotes in various different states can be prevented and the operator can efficiently perform a post-process.

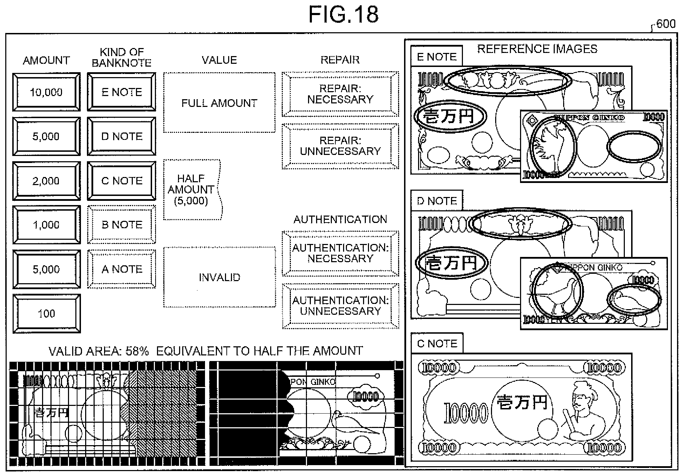

Next, an example of a display on the screen displayed on the operation display unit 600 when inputting deposit data of the unfit banknote before and after the unfit banknote is repaired will be explained. FIG. 18 is a drawing illustrating an example of a screen displayed when a 10,000-yen unfit banknote is deposited. As explained above with reference to FIGS. 11 to 15, buttons and the like indicating information necessary to be inputted as the deposit data, such as the amount (denomination), kind of banknote, value, and whether repair is necessary or not, are displayed on the screen. On the screen, enabled buttons and disabled buttons are displayed in a distinguishable manner from one another. Due to this, the operator can input all the deposit data by performing the selection while verifying only the enabled buttons starting from the upper-left portion on the screen.

Specifically, the image data of the unfit banknote which is the target of input of the deposit data is displayed in the lower portion of the screen, and the operator visually verifies the image data of this unfit banknote. After recognizing that this unfit banknote is a 10,000-yen note, the operator selects a button corresponding to 10,000 yen from among buttons for the amounts in the left portion on the screen. It is possible to adopt a configuration in which, if the determination unit 89 has determined that this unfit banknote is highly likely a 10,000-yen note, the button corresponding to 10,000-yen note is highlighted distinguishably from buttons corresponding to the other denominations and sample images of 10,000-yen note are displayed in the right portion on the screen as reference images to support the operator for the determination. If the denomination cannot be determined by the determination unit 89, images of each denomination are displayed in the right portion on the screen to support the operator for the determination.

After the denomination is selected in this manner, in order to support the operator to select the kind of banknote, sample images of each kind of banknotes corresponding to the selected amount are displayed in the right portion on the screen. Specifically, referring to FIG. 18, if the button corresponding to the amount of 10,000 yen has been selected, then enabled buttons for the C note to the E note are highlighted as buttons for the kind of banknote corresponding to the 10,000-yen note, and also sample images corresponding to each kind of banknotes are displayed in the right portion on the screen as reference images. In this process, sample images of both front and back sides are displayed for the kind of banknote for which the determination is difficult by referring to the image of the front side only but the determination becomes easier by using the image of the back side, i.e., for the D note and the E note. The images of both front and back sides of the unfit banknote are displayed in the lower portion of the screen, and the operator can easily determine the banknote kind of the unfit banknote by comparing these images. Moreover, in this process, if the kind of banknote can be easily distinguished by comparing the images on the left or the right of the watermark portion on the back side as in the D note and the E note for the 10,000-yen note, for example, this portion is surrounded by double circles as a feature part.

Subsequently, after the kind of banknote has been selected via the screen illustrated in FIG. 18, the screen shifts to a screen for selecting the value of the unfit banknote. The automatically calculated ratio of the remaining area and the value corresponding to the ratio are displayed in a portion above the images of the unfit banknote, and the operator can select the value based on this information. Moreover, grid-like lines for supporting the operator for the determination of the value are displayed on the images of the unfit banknote. On the screen, the displayed grids are distinguished from one another among grids in which the corresponding portion of the banknote remains in the entire area of each such grid, grids for lost portions in which no portion of the banknote is included, and grids in which a portion of the unfit banknote is included in a part of each grid. Accordingly, the operator can verify the ratio of the automatically calculated remaining area by calculating the remaining area based on the number of each type of grids.

After the kind of banknote has been thus selected, the information about whether repair is necessary and the information about whether authentication is necessary are selected. In this process also, information about conditions for requiring repair or authentication is displayed on the screen or sample images of the banknote that require repair or authentication are displayed on the screen to support the operator for the determination.

As explained above, the information for supporting the operator for the determination is displayed on the screen, and accordingly, the operator can easily and securely input the deposit data for the unfit banknote. The operations for inputting the amount, the kind of banknote, and the value are not limited to a configuration in which the operator touches the screen on the buttons for the amount, kind of banknote, or the like, and it is possible to employ a configuration in which the operator touches sample images displayed on the screen for performing the selection. Specifically, a configuration can be also employed in which, from among the sample images displayed in the right portion on the screen, the operator selects and touches an image determined to be the same as the unfit banknote displayed in the lower portion of the screen to select the denomination and the kind of banknote.

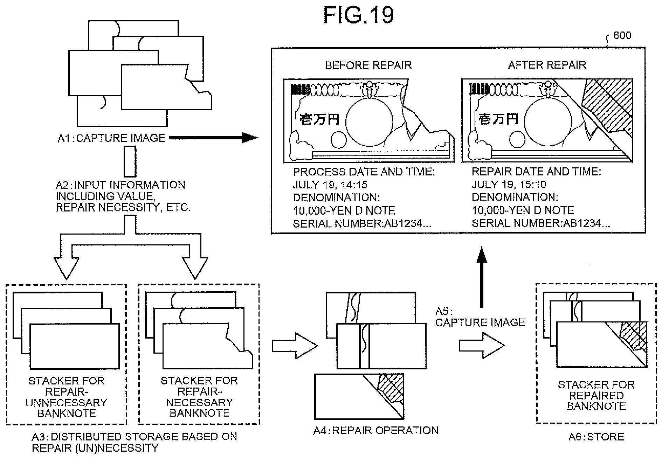

Next, an outline of processes performed when an unfit banknote is received for repair is explained. FIG. 19 is a schematic diagram illustrating an outline of the processes performed on the unfit banknote. At first, when the unfit banknote is deposited into the valuable medium processing apparatus 500, an image of the deposited unfit banknote is captured by the imaging unit 16 and image data is acquired (A1). Subsequently, the operator inputs the information about the value of the unfit banknote and the information about whether the unfit banknote requires repair, via the operation display unit 600, as the deposit data as explained above with reference to FIG. 18 (A2). If the unfit banknote does not require repair, the unfit banknote is stored in the tape winding type unfit banknote storage unit 42, while if the unfit banknote requires repair, the unfit banknote is stored in the stacker type unfit banknote storage unit 40 so that the unfit banknote can be easily removed for the repair operation (A3). In this process, a repair target flag, which indicates that the data is for the unfit banknote requiring repair, is assigned to the data of the unfit banknote requiring the repair, and the data of the unfit banknote requiring the repair is stored distinguishably from other data.

Then the unfit banknote which is the repair operation target is removed from the unfit banknote storage unit 40 storing unfit banknotes requiring repair and the repair operation is performed at a predetermined timing (A4). After the repair operation is completed, the repaired unfit banknote is re-deposited into the valuable medium processing apparatus 500 again and the imaging unit acquires image data of the repaired unfit banknote (A5). After the image data of the repaired unfit banknote is acquired, as shown in FIG. 19, both the image data of the unfit banknote before repair and the image data of the repaired unfit banknote are displayed on the screen of the operation display unit 600. In this process, the data before the repair corresponding to the data after the repair is searched targeting only the data to which the repair target flag is assigned earlier based on the data such as the denomination, serial number, and the like, and accordingly, the corresponding data can be acquired in a short period of time.

After the operator has verified that the data before and after the repair match each other, the data before the repair and the data after the repair are associated with each other and stored in the memory unit 82, and the repaired unfit banknote is stored in the unfit banknote storage unit 42 in which unfit banknotes that do not require repair are stored (A6). By performing the above-described processes, the image data before repair and the image data after repair and the deposit data can be stored in association with one another. The operator determines whether to store the data before the repair and how the repaired unfit banknote is to be handled. For example, the data before the repair can be discarded, and a storage unit different from the unfit banknote storage units 40 and 42 can be designated as a repaired unfit banknote storage destination.

In the present embodiment, the states of the unfit banknote received by the unfit banknote state receiving unit 92 is classified into the repair-necessary state in which repair of the unfit banknote is necessary and the repair-unnecessary state in which repair of the unfit banknote is not necessary, however, the present invention is not limited to this. For example, it is possible to employ a configuration in which information about other types of states of the unfit banknote is received by the unfit banknote state receiving unit 92 and the unfit banknote deposited into the apparatus body is sorted based on the information on the state of the received unfit banknote and stored in the corresponding unfit banknote storage unit 40 or 42.

Moreover, in the above description, the case where an unfit banknote is deposited into the apparatus body of the valuable medium processing apparatus 500 is explained; however, the present embodiment is not limited to this example. For example, a process similar to the above-described process can be performed even if a valuable medium other than an unfit banknote (specifically, a banknote other than an unfit banknote, a check, a draft, and the like) has been deposited into the valuable medium processing apparatus 500. Specifically, it is possible to employ a configuration in which in a paper sheet handling apparatus including plural storage units, information about a state of a paper sheet is received, and a paper sheet deposited into the apparatus body is sorted based on the information about the state of the received paper sheet and stored in a corresponding storage unit.

Generation of deposit data by the apparatus Next, processes for generating the above-described deposit data will be described in detail. Referring to FIG. 2, the money processing system 1 according to the present embodiment is provided with the completion command receiving unit 820 and the permission command receiving unit 822, respectively. The valuable medium processing apparatus 500 according to the present embodiment is provided with, as shown in FIG. 9, the deposit data generation unit 95 and the banknote information receiving unit 96. When a banknote discharged from the loose banknote handling apparatus 100 is deposited into the apparatus body of the valuable medium processing apparatus 500, an image of the banknote is captured by the imaging unit 16 and image data of the banknote is acquired. In this process, the imaging unit 16 also functions as a reading unit for reading data of the banknote deposited into the apparatus body of the valuable medium processing apparatus 500. In the valuable medium processing apparatus 500 according to the present embodiment, the deposit data generation unit 95 generates deposit data based on the data of the banknote read by the imaging unit 16 that functions as the reading unit. To describe this in detail, the valuable medium processing apparatus 500 is provided with the banknote information receiving unit 96 for receiving information about the banknote deposited by the depositing unit 10 into the apparatus body, specifically the kind of banknote and the value of the banknote, and the deposit data generation unit 95 generates deposit data including data of the banknote read by the imaging unit 16 (specifically, image data of the banknote acquired by the imaging unit 16) and the information received by the banknote information receiving unit 96.

Specifically, when an image of the banknote loaded into the apparatus body of the valuable medium processing apparatus 500 is captured by the imaging unit 16 and transported to the escrow unit 20, as explained above, the image data of the banknote acquired by the imaging unit 16 is displayed on the operation display unit 600, and the operation screen illustrated in FIG. 11 or FIG. 18 is displayed. Then, the operator inputs the kind of banknote (the denomination and the time of issuance) of the banknote via the operation display unit 600 while referring to the image data displayed on the operation display unit 600, the inputted information about the kind of banknote and the value of the banknote is received by the banknote information receiving unit 96. Deposit data including the image data of the banknote and an image voucher illustrated in FIG. 14 is generated by the deposit data generation unit 95. The image voucher includes information such as the date of process, the processing time, the operator ID, the banknote kind of the unfit banknote, and the value of the banknote, and at least a part of the data or the entire data is generated by the deposit data generation unit 95 as the deposit data.

In the money processing system 1 according to the present embodiment, results of the process performed by the loose banknote handling apparatus 100 on the banknote and the deposit data acquired by the valuable medium processing apparatus 500 are stored in the memory unit 808 in association with each other. It is also possible to employ a configuration in which the results of the process performed by the loose banknote handling apparatus 100 on the banknote and the deposit data acquired by the valuable medium processing apparatus 500 are stored in the memory unit 82 of the valuable medium processing apparatus 500 in association with each other instead of using the memory unit 808. In this process, the results of the processing by the loose banknote handling apparatus 100 on the banknote are acquired based on the results of the recognition of the banknote by the recognition unit 102 of the loose banknote handling apparatus 100.

The cause of discharge of the banknote discharged from the loose banknote handling apparatus 100 is displayed on the operation display unit 600. Examples of the cause of discharge of the banknote discharged from the loose banknote handling apparatus 100 include counterfeit notes, unfit banknotes, old version banknotes, transport errors, and the like. Specifically, in the loose banknote handling apparatus 100, banknotes recognized by the recognition unit 102 as counterfeit notes, unfit banknotes, or old version banknotes and banknotes recognized by the recognition unit 102 as having been in the transport error state are not to be stored in the apparatus body of the loose banknote handling apparatus 100 and discharged to the outside of the apparatus body of the loose banknote handling apparatus 100, and these causes of discharge of the banknote discharged from the loose banknote handling apparatus 100 are displayed on the operation display unit 600.

Moreover, in the money processing system 1 according to the present embodiment, a selection can be performed as to whether to immediately deposit the banknote discharged from the loose banknote handling apparatus 100 into the apparatus body of the valuable medium processing apparatus 500 or to deposit such banknote later. More specifically, the money processing system 1 according to the present embodiment is provided with the completion command receiving unit 820 and the permission command receiving unit 822. The completion command receiving unit 820 receives a completion command for one transaction. More specifically, when the operator inputs a completion command of one transaction via the operation display unit 600, the completion command receiving unit 820 receives the completion command. The permission command receiving unit 822 receives a command for controlling whether to permit deposit of the banknote discharged from the loose banknote handling apparatus 100 into the valuable medium processing apparatus 500 after the completion command has been received by the completion command receiving unit 820. More specifically, whether to permit deposit of the banknote discharged from the loose banknote handling apparatus 100 into the valuable medium processing apparatus 500 after one transaction is completed can be input via the operation display unit 600, and if the operator inputs a permission command, the command is received by the permission command receiving unit 822. When the permission command is received by the permission command receiving unit 822, it becomes possible to deposit the banknote discharged from the loose banknote handling apparatus 100 into the valuable medium processing apparatus 500 even after the completion command has been received by the completion command receiving unit 820. With the completion command receiving unit 820 and the permission command receiving unit 822 explained above, whether to immediately deposit the banknote discharged from the loose banknote handling apparatus 100 into the apparatus body of the valuable medium processing apparatus 500 or to deposit it later can be selected according to the status of operation of the money processing system 1 and the degree of congestion of operations in the bank and the like in which the money processing system 1 is installed.

As explained above, in the present embodiment, the money processing system 1 is provided which includes the loose banknote handling apparatus 100, and the valuable medium processing apparatus 500 into which the banknote discharged from the loose banknote handling apparatus 100 is deposited. The valuable medium processing apparatus 500 includes the depositing unit 10 for depositing a banknote into the apparatus body, a reading unit for reading data of the banknote deposited by the depositing unit 10 into the apparatus body (specifically, the imaging unit 16 for capturing an image of the banknote and acquiring image data of the banknote), and the deposit data generation unit 95 for generating deposit data based on the data of the banknote read by the reading unit, and in which results of the processes performed by the loose banknote handling apparatus 100 on the banknote and the deposit data acquired by the valuable medium processing apparatus 500 are stored in the memory unit 808 and the memory unit 82 in association with one another. Moreover, according to the present embodiment, the valuable medium processing apparatus 500 into which the banknote discharged from the loose banknote handling apparatus 100 is deposited is provided. In the valuable medium processing apparatus 500, results of the processes performed by the loose banknote handling apparatus 100 on the banknote and the deposit data generated by the deposit data generation unit 95 are stored in the memory unit 82 in association with one another. As explained above, the results of the processes performed by the loose banknote handling apparatus 100 on the banknote and the deposit data acquired by the valuable medium processing apparatus 500 are stored in the memory unit 808 and the memory unit 82, and accordingly, the banknote discharged from the loose banknote handling apparatus 100 can be strictly managed, and also it can be clearly verified which transaction processed by the loose banknote handling apparatus 100 is on the banknote deposited into the valuable medium processing apparatus 500.

Moreover, in the present embodiment, the depositing unit 10 is provided with the recognition unit 102 for recognizing a banknote. In addition, the results of the processes performed in the loose banknote handling apparatus 100 on the banknote are acquired based on the results of the recognition of the banknote by the recognition unit 102. The valuable medium processing apparatus 500 is provided with the banknote information receiving unit 96 for receiving information about the banknote deposited by the depositing unit 10 into the apparatus body (specifically, the kind of banknote and the value of the banknote), and the deposit data acquired by the valuable medium processing apparatus 500 includes the data of the banknote acquired by the reading unit (specifically, image data of the banknote acquired by the imaging unit 16) and the information received by the banknote information receiving unit 96.

Moreover, in the present embodiment, the cause of discharge of the banknote discharged from the loose banknote handling apparatus 100 is displayed on the operation display unit 600 as explained above. Accordingly, whether the banknote can be deposited in the valuable medium processing apparatus 500 can be determined based on the cause of discharge of the banknote displayed on the operation display unit 600, and accordingly, the banknote to be deposited into the valuable medium processing apparatus 500 can be selected from among banknotes discharged from the loose banknote handling apparatus 100.

Moreover, in the present embodiment, after a transaction completion command is received by the completion command receiving unit 820, the permission command receiving unit 822 receives a command as to whether to permit deposit of the banknote discharged from the loose banknote handling apparatus 100 into the valuable medium processing apparatus 500. With this configuration, selection can be performed whether to immediately deposit the banknote discharged from the loose banknote handling apparatus 100 into the apparatuses body of the valuable medium processing apparatus 500 or whether to deposit the banknote later according to the status of operation of the money processing system 1 and the degree of congestion of operations in the bank and the like in which the money processing system 1 is installed.

In the above description, an example of the loose banknote handling apparatus 100 for processing loose banknotes and the valuable medium processing apparatus 500 into which the banknote discharged from the loose banknote handling apparatus 100 is deposited is explained; however, the valuable media to be processed by the paper sheet handling apparatus according to the present invention are not limited to paper sheets. It is also possible to employ a configuration in which checks, drafts, and the like different from banknotes, for example, are processed as the valuable media. In this configuration also, two paper sheet handling apparatuses including a first paper sheet handling apparatus and a second paper sheet handling apparatus into which paper sheets discharged from the first paper sheet handling apparatus is deposited are used, and results of processes performed by the first paper sheet handling apparatus on the paper sheets and deposit data acquired by the second paper sheet handling apparatus are stored in a memory unit included in the paper sheet handling apparatuses according to the present embodiment in association with one another.

### Flowchart of other processes

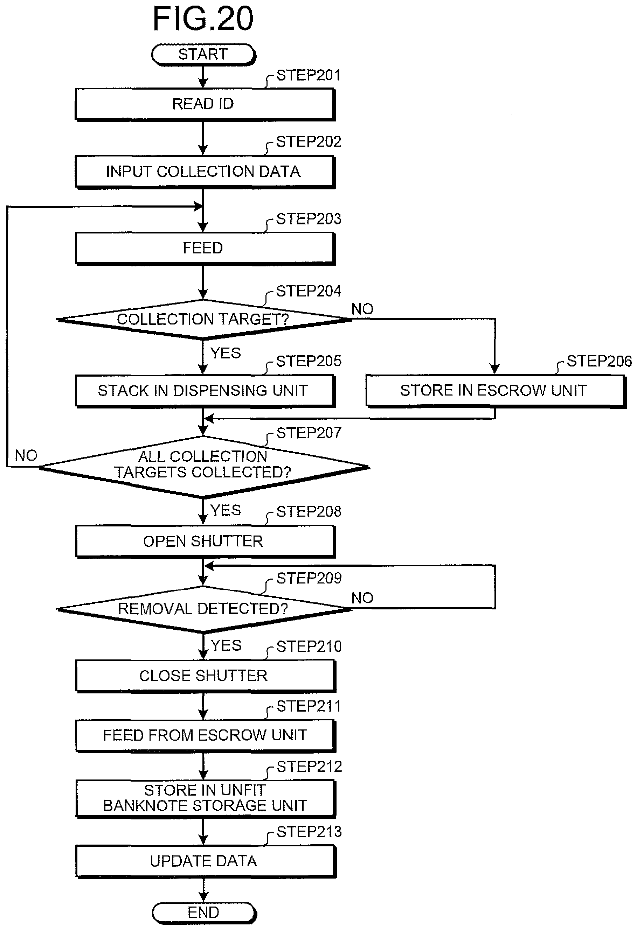

Next, a process for collecting unfit banknotes and old version banknotes from the valuable medium processing apparatus 500 will be explained below with reference to a flowchart illustrated in FIG. 20. In the process for collecting unfit banknotes and old version banknotes from the valuable medium processing apparatus 500, the unfit banknotes and the old version banknotes stored in the tape winding type unfit banknote storage unit 42, of the two unfit banknote storage units 40 and 42 are collected.

At the start of the process, the operator causes the ID card reader 810 to read his/her ID card (STEP 201). The control unit 800 verifies the authority and the like of the operator based on the ID information of the ID card read by the ID card reader 810. Then, the operator inputs the collection data via the operation display unit 600 (STEP 202). The collection data can be the image data of the unfit banknote or the old version banknote stored in the tape winding type unfit banknote storage unit 42, or can be information about the number of the banknotes to be collected by kinds of banknote and information about the number of the banknotes by denominations (e.g., information describing the collection of 30 1,000-yen D notes). After the collection data is inputted, the unfit banknotes and the old version banknotes are fed from the unfit banknote storage unit 42 to the first transporting unit 14a of the transporting unit 14 sheet by sheet (STEP 203). If the unfit banknotes and the old version banknotes fed from the unfit banknote storage unit 42 are collection target notes (YES at STEP 204), then the unfit banknotes and the old version banknotes are transported by the first transporting unit 14a of the transporting unit 14 to the dispensing unit 60 and stacked in the dispensing unit 60 (STEP 205). On the other hand, if the unfit banknotes and the old version banknotes fed from the unfit banknote storage unit 42 are not collection target notes (NO at STEP 204), then the unfit banknotes and the old version banknotes are transported by the first transporting unit 14a of the transporting unit 14 to the escrow unit 20 and stored in the escrow unit 20 (STEP 206). The above-described operation is repeated until all the unfit banknotes and the old version banknotes that are determined to be collection target notes based on the inputted collection data are transported to the dispensing unit 60 (NO at STEP 207). After all the unfit banknotes and the old version banknotes that are collection target notes are collected (i.e., after all the unfit banknotes and the old version banknotes that are collection target notes are transported to the dispensing unit 60 and stacked there) (YES at STEP 207), the shutter 61a of the dispensing unit 60 opens (STEP 208), and in this state, the operator can remove the banknotes to be collected out of the dispensing unit 60. If the removal of the collection banknotes from the dispensing unit 60 has been detected by the removal detection unit 61b of the dispensing unit 60 (YES at STEP 209), the shutter 61a is closed (STEP 210).

After that, the unfit banknotes and the old version banknotes stored in the escrow unit 20 are fed to the first transporting unit 14a of the transporting unit 14 (STEP 211) and stored in the stacker type unfit banknote storage unit 40 or the tape winding type unfit banknote storage unit 42 (STEP 212). Subsequently, after the collection operation is completed, the data of the unfit banknotes and the old version banknotes remaining in the unfit banknote storage units 40 and 42 are updated in the memory unit 808 and the memory unit 82 (STEP 213).

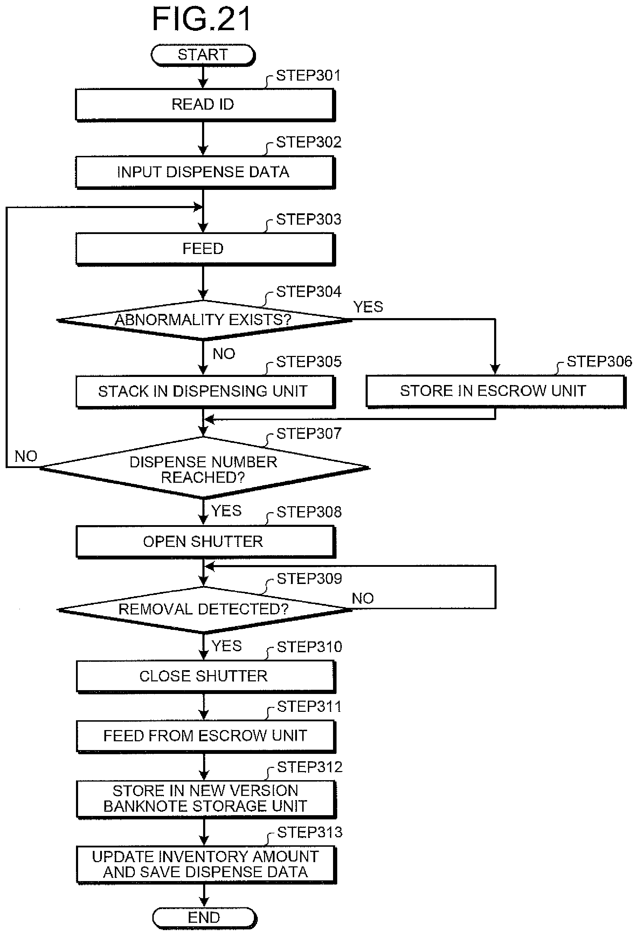

Next, a process for dispensing new banknotes from the valuable medium processing apparatus 500 will be explained with reference to FIG. 21. In the process of dispensing new banknotes from the valuable medium processing apparatus 500, new 10,000-yen, 5,000-yen, 1,000-yen notes and the like stored in the storage unit 50a, 50b, 50c, or 50d of the new-banknote storage unit 50 are dispensed.

At the start of the process, the operator causes the ID card reader 810 to his/her ID card (STEP 301). The control unit 800 verifies the authority and the like of the operator based on the ID information of the ID card read by the ID card reader 810. Then, the operator inputs the dispense data via the operation display unit 600 (STEP 302). The dispense data herein refers to information about the total amount of the banknotes to be dispensed and information about the number of the banknotes to be dispensed by denominations. After the dispense data is inputted, the new banknotes are fed sheet by sheet from the storage units 50a, 50b, 50c, and 50d of the new-banknote storage unit 50 to the second transporting unit 14b of the transporting unit 14 (STEP 303). Then, the denominations of the fed new banknotes are recognized by the simple recognition unit 64. If no abnormality exists in the result of recognition of the new banknotes by the simple recognition unit 64 (NO at STEP 304), then the new banknotes are transported by the second transporting unit 14b of the transporting unit 14 to the dispensing unit 60 to be stacked in the dispensing unit 60 (STEP 305). On the other hand, if an abnormality exists in the results of recognition of the new banknotes by the simple recognition unit 64 (YES at STEP 304), the new banknotes are transported to the escrow unit 20 by the transporting unit 14 and stored in the escrow unit 20 (STEP 306). The above-described operation is repeated until the number of new banknotes stacked in the dispensing unit 60 reaches the number of dispensing banknotes determined based on the inputted dispense data (NO at STEP 307). When the number of banknotes stacked in the dispensing unit 60 reaches the number of dispensing banknotes (YES at STEP 307), the shutter 61a of the dispensing unit 60 opens (STEP 308), and in this state, the operator can remove the banknotes to be dispensed out of the dispensing unit 60. If the removing of the dispensing banknotes from the dispensing unit 60 has been detected by the removal detection unit 61b included in the dispensing unit 60 (YES at STEP 309), the shutter 61a is closed (STEP 310).

After that, the new banknotes stored in the escrow unit 20 are fed to the first transporting unit 14a of the transporting unit 14 (STEP 311) and the fed new banknotes are stored in the storage unit 50a, 50b, 50c, or 50d of the new-banknote storage unit 50 (STEP 312). Subsequently, in the memory unit 808 and the memory unit 82, the inventory amount of the new banknotes stored in the respective storage units 50a, 50b, 50c, and 50d of the new-banknote storage unit 50 is updated and the dispense data are stored in the memory unit 808 and the memory unit 82 (STEP 313).

As explained above, in the present embodiment, the valuable medium processing apparatus 500 is provided which includes the depositing unit 10 for depositing valuable media into the apparatus body, the unfit banknote storage units 40 and 42 for storing the unfit banknotes and the old version banknotes, the first transporting unit 14a for transporting the unfit banknotes and the old version banknotes, among the valuable media deposited by the depositing unit 10 into the apparatus body, to the unfit banknote storage units 40 and 42, the new-banknote storage unit 50 for storing new banknotes, the dispensing unit 60 for dispensing the new banknotes to the outside of the apparatus, and the second transporting unit 14b for transporting the new banknotes stored in the new-banknote storage unit 50 to the dispensing unit 60. According to the valuable medium processing apparatus 500 explained above, the unfit banknotes and the old version banknotes deposited into the apparatus body are stored in the unfit banknote storage unit 40, and the new banknotes stored in the new-banknote storage unit 50 can be dispensed to the outside of the apparatus, and accordingly, the configuration of the valuable medium processing apparatus 500 can be more compact than that in a case where a new banknote dispensing apparatus for dispensing new banknotes is provided separately from the money processing apparatus for storing the unfit banknotes and the old version banknotes, and thus the installation space can be saved.

In the valuable medium processing apparatus 500 according to the present embodiment, the unfit banknote storage units 40 and 42 are not limited to a configuration in which both the unfit banknotes and the old version banknotes are stored therein. That is, it is possible to employ a configuration in which each of the unfit banknote storage units 40 and 42 stores either one of the unfit banknotes and the old version banknotes. It is also possible to employ a configuration in which the stacker type unfit banknote storage unit 40 stores old version banknotes and the tape winding type unfit banknote storage unit 42 stores unfit banknotes, or, the stacker type unfit banknote storage unit 40 stores unfit banknotes and the tape winding type unfit banknote storage unit 42 stores old version banknotes.

In the present embodiment, the new-banknote storage unit 50 is arranged inside the apparatus body of the valuable medium processing apparatus 500 at a location closer to a front portion of the apparatus body (i.e., in the left portion of FIG. 3) than the locations of the unfit banknote storage units 40 and 42. With this configuration, in replenishing new banknotes for dispensing processes into the apparatus body of the valuable medium processing apparatus 500, the new banknotes can be stored in the new-banknote storage unit 50 more speedily and easily by simply opening the door 18 on the front side of the apparatus, compared with a case where the new-banknote storage unit 50 is provided in a rear portion inside the apparatus body.

In the present embodiment, the valuable media deposited by the depositing unit 10 into the apparatus body are temporarily stored in the escrow unit 20 provided inside the apparatus body of the valuable medium processing apparatus 500 above the unfit banknote storage units 40 and 42. Accordingly, the operator can select as to whether the valuable media are stored in the unfit banknote storage units 40 and 42, or returned to the outside of the apparatus when the valuable media are temporarily stored in the escrow unit 20.

In the present embodiment, the specific valuable-securities storage unit 30 for storing specific valuable media is provided, and specific valuable securities (e.g., checks and drafts) among the valuable media deposited by the depositing unit 10 into the apparatus body are transported by the first transporting unit 14a to the specific valuable-securities storage unit 30.

In this configuration, the specific valuable-securities storage unit 30 is arranged inside the apparatus body of the valuable medium processing apparatus 500 above the unfit banknote storage units 40 and 42, and the new-banknote storage unit 50 is arranged in a portion closer to the front portion of the apparatus body compared with the unfit banknote storage units 40 and 42 and the specific valuable-securities storage unit 30. Moreover, the escrow unit 20 for temporarily storing the valuable media deposited by the depositing unit 10 into the apparatus body is arranged inside the apparatus body of the valuable medium processing apparatus 500 above the specific valuable-securities storage unit 30.

In the valuable medium processing apparatus 500 according to the present embodiment, the stacker type storage units, i.e., the specific valuable-securities storage unit 30 and the unfit banknote storage unit 40, are arranged above the tape winding type unfit banknote storage unit 42, and accordingly, manual collection of the specific valuable media, unfit banknotes, and the like from the stacker type storage units, i.e., the specific valuable-securities storage unit 30 and the unfit banknote storage unit 40, can be easily performed.

In the present embodiment, the transport path for the valuable media in the first transporting unit 14a and the transport path for the new banknotes in the second transporting unit 14b are provided independently from each other. With this configuration, the transport path for the new banknotes is separated from the transport path for the valuable media such as unfit banknotes, old version banknotes, and checks, and accordingly, soiling of the transport path for the new banknotes by the valuable media such as unfit banknotes can be prevented, and thus the new banknotes can be dispensed from the dispensing unit 60 in a fresh and clean state.

In the present exemplary embodiment, the unfit banknote storage unit includes the stacker type unfit banknote storage unit 40 for storing the unfit banknotes and/or the old version banknotes in a laminated state, and the tape winding type unfit banknote storage unit 42 in which the unfit banknotes and/or the old version banknotes are wound up by the drum 42a while being sandwiched inside the pair of tapes. The present embodiment is not limited to this example and it is also possible to employ a configuration in which no tape winding type unfit banknote storage unit 42 is provided and the stacker type unfit banknote storage unit 40 in which the unfit banknotes and/or the old version banknotes are stacked in a laminated state only is provided as the unfit banknote storage unit in the valuable medium processing apparatus 500. In the valuable medium processing apparatus 500 with another configuration, it is also possible to employ a configuration in which no stacker type unfit banknote storage unit 40 in which the unfit banknotes and/or the old version banknotes are stacked in a laminated state is provided and the tape winding type unfit banknote storage unit 42 only is provided as the unfit banknote storage unit.

In the present embodiment, banknotes are used as the examples of the process targets, however, the process targets of the present embodiment are not limited to banknotes, and the present embodiment can process commemorative coins and old version coins that are excessively damaged or stained.

### Second embodiment

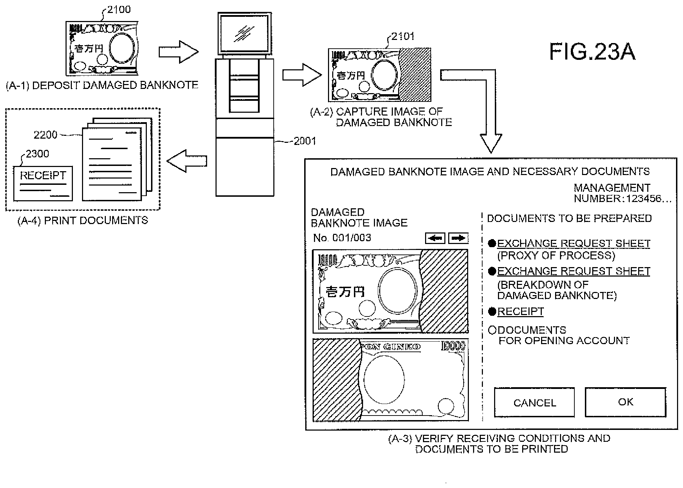

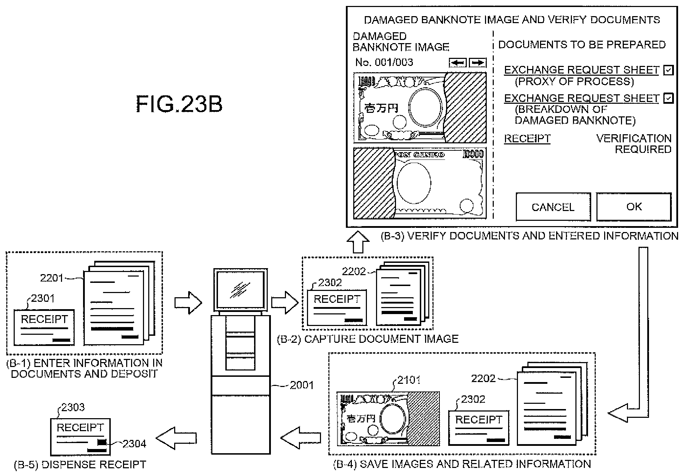

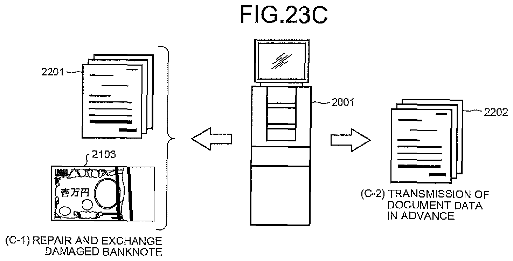

Next, a second embodiment of the present invention will be explained with reference to FIGS. 23Ato 33B. In the present embodiment, a case will be explained where a valuable medium processing apparatus is installed in a bank and the valuable medium processing apparatus is used to receive requests from customers for exchanging damaged money with normal money. If coins are received as damaged money, a process similar to the process performed in receiving damaged notes (damaged banknotes) can be performed, and accordingly, a case of receiving damaged banknotes will be explained below as an example.

To begin with, the difference between the damaged banknotes that are the targets of processes by the valuable medium processing apparatus according to the present embodiment and the above-described unfit banknotes will be explained. In banks, money processing apparatuses for supporting processes on money performed for depositing and dispensing processes are used, and banknotes not appropriate for circulation in the market are processed as unfit banknotes. Specifically, banknotes, which are still have the shape of a banknote and recognized as clearly genuine notes based on a recognition result by the money processing apparatus but determined not suitable for market circulation due to the high degree of damages thereof, are processed as unfit banknotes.

On the other hand, banknotes that cannot be recognized by the money processing apparatus and needs to be requested to the central bank for authentication as to whether they are genuine notes are processed as damaged banknotes. For example, banknotes partially lost and having no shape of a banknote are processed as damaged banknotes. If a banknote is torn into three or more small pieces, this banknote is handled as a damaged banknote needing an authentication process to determine the value thereof because the value varies due to the remaining area. If a banknote cannot be deposited into or transported in the money processing apparatus due to foreign matters such as oil or paste stuck thereto, such banknote is handled as a damaged banknote. In what state the banknotes are received as damaged banknotes and in what state the damaged banknotes are handled as those needing the authentication process are specified according to operations by banks, for example.

Banknotes in various states are processed as damaged banknotes, such as torn or burned banknotes partially lost as a result thereof, banknotes cut by a shredder or the like into pieces, banknotes excessively stained to the extent that determination as to whether they are banknotes cannot be performed, banknotes with oils, pastes, and the like are stuck thereto, and the like, and a partially lost damaged banknote is used as an example in the description below.

Next, a content of a process performed in receiving a request from a customer for exchanging a damaged banknote into normal money by using the valuable medium processing apparatus will be explained. FIGS. 23A to 23C are schematic diagrams illustrating a content of a process performed using a valuable medium processing apparatus 2001. FIG. 23A illustrates operations of the process from receiving of a request from a customer to printing of documents 2200 necessary for proceeding with the process on a damaged banknote 2100 and a receipt 2300. FIG. 23B illustrates operations of the processing from filling of the document 2200 and the receipt 2300 printed in the state illustrated in FIG. 23A and signing and affixing a seal and the like performed thereon to issuing of a receipt 2303. FIG. 23C illustrates an operation of a process for presenting repaired damaged banknotes 2103 and documents 2201 to the central bank after a request from a customer for processing the damaged banknote 2100 is received.

When a customer requests exchange of the partially lost damaged banknote 2100 into a normal banknote at the teller window of a bank, the teller who takes the request deposits the damaged banknote 2100 into the valuable medium processing apparatus 2001 (A-1 in FIG. 23A). In the valuable medium processing apparatus 2001, an image of the deposited damaged banknote 2100 is captured and thus a damaged banknote image 2101 is acquired (A-2 in FIG. 23A). In this process, in the valuable medium processing apparatus 2001, if the denomination can be recognized from the damaged banknote image 2101, a denomination recognition process is performed to identify the denomination of the damaged banknote 2100. On the other hand, if the denomination of the damaged banknote 2100 cannot be correctly recognized within the valuable medium processing apparatus 2001, the teller inputs the information about the denomination of the damaged banknote 2100 to the valuable medium processing apparatus 2001.

When the denomination of the damaged banknote 2100 is identified as explained above, the valuable medium processing apparatus 2001 performs a determination under the receiving condition as to whether to receive the damaged banknote 2100. For example, if the damaged banknote 2100 clearly fails the encashment criteria provided by the central bank (described hereinbelow as the "Bank of Japan" using the case of Japan as the example), then it is determined that the damaged banknote 2100 does not satisfy the receiving condition. According to the encashment criteria by the Bank of Japan, if the remaining area of a banknote is less than 40%, the banknote is regarded as having no value and cannot be exchanged with money. The valuable medium processing apparatus 2001 acquires the entire area of the damaged banknote 2100 assumed if no part of the damaged banknote 2100 is lost and if the damaged banknote 2100 has the shape of a banknote based on the denomination information about the specified the damaged banknote 2100, calculates the remaining area of the damaged banknote 2100 based on the damaged banknote image 2101, and calculates the ratio of these areas. If the calculated ratio obviously fails the encashment criteria by the Bank of Japan, it is determined that the damaged banknote 2100 does not satisfy the receiving condition because even if the damaged banknote 2100 is received, the damaged banknote 2100 is only handled by the Bank of Japan as having no value.

Moreover, the valuable medium processing apparatus 2001 determines whether an authentication process by the Bank of Japan is necessary for the damaged banknote 2100. For example, if the denomination and the authenticity cannot be recognized due to the loss of the feature part of the banknote, if the banknote has been torn, if the banknote is a partially lost banknote, or if the banknotes have been bonded together by using cellophane tapes and the like, the banknote can be received as the damaged banknote 2100, however, if these banknotes cannot be recognized in the apparatus, or if they have been torn into three or more pieces and none of them has an area of 2/3 or greater of the entire area, such banknotes are processed as the damaged banknotes 2100 requiring the authentication process by the Bank of Japan. Accordingly, the valuable medium processing apparatus 2001 automatically determines whether the banknote needs the authentication process by the Bank of Japan based on the damaged banknote image 2101. The result of the determination as to whether the authentication process by the Bank of Japan is necessary is used in selecting documents necessary for processing the damaged banknote 2100. Specifically, if it is determined that the authentication process by the Bank of Japan is necessary, documents necessary for requesting the authentication process by the Bank of Japan are selected.

The result of the determination by the valuable medium processing apparatus 2001 is displayed on the screen of the valuable medium processing apparatus 2001 (A-3). If the damaged banknote 2100 does not satisfy the receiving condition, a predetermined process is performed by the teller who has verified this state. For example, if the damaged banknote 2100 does not satisfy the encashment criteria provided by the Bank of Japan, the teller cancels the receiving process after explaining the reason of the cancellation to the customer and returns the damaged banknote 2100 to the customer.

Whether the damaged banknote 2100 satisfies the receiving condition is automatically determined, and accordingly, the load on the teller for the operation can be reduced. If the damaged banknote 2100 obviously fails the encashment criteria provided by the Bank of Japan, subsequent processes can be omitted because the failure can be recognized at the stage of receiving of the damaged banknote 2100 and thus the process can be suspended at this timing.

On the other hand, if the damaged banknote 2100 satisfies the receiving condition, then the types of documents necessary for receiving the exchange process of the damaged banknote 2100 are displayed on the screen together with the determination result, and accordingly, the teller verifies the displayed information and approves of the request (A-3). In the valuable medium processing apparatus 2001, the documents necessary for proceeding with the process of the damaged banknote 2100 are automatically selected based on the damaged banknote image 2101. For example, if the authentication process by the Bank of Japan is necessary, documents necessary for requesting the authentication are selected, while if the authentication is unnecessary but the exchange process by the Bank of Japan is necessary, then documents necessary for the exchange processing are selected. The teller verifies the type of the documents listed on the screen of the valuable medium processing apparatus 2001, adds documents via the screen if any document not listed therein exists, deletes the document on the screen if any unnecessary document is included in the list, performs necessary operations, and approves printing of the documents. On the screen, a management number of the processing for receiving the damaged banknote 2100 and the acquired damaged banknote image 2101 are displayed. The teller verifies these pieces of information, and if any problem arises for the image quality of the damaged banknote image 2101, performs an operation for acquiring the image again.

After the approval by the teller is obtained, the documents 2200 necessary for receiving the damaged banknote 2100 and the receipt 2300 are printed (A-4). The documents 2200 include an authentication application form, an exchange request sheet, and the like that needs to be presented to the Bank of Japan in requesting the authentication process or the exchange process of the damaged banknote 2100. Moreover, the receipt 2300 is a document issued by the bank which has received the damaged banknote 2100 as a certificate of receiving the damaged banknote 2100. The damaged banknote 2100 is received from the customer but it is not immediately processed, and it is later presented from the bank to the Bank of Japan and then the authentication process or the exchange process by the Bank of Japan is performed. Accordingly, the receipt 2300 is issued by the bank which has received the damaged banknote 2100 to the customer. The receipt 2300 includes a management number assigned after the approval by the teller, and images and information managed within the valuable medium processing apparatus 2001 in the subsequent processing are identified by the management number included in the receipt 2300.

The documents 2200 and the receipt 2300 are printed by using a printer included in the valuable medium processing apparatus 2001 or a printer installed at a location close to the teller window. In this process, among the information to be filled-in to the documents 2200 and the receipt 2300, if any information such as the date or the name of the customer is already known, the documents 2200 and the receipt 2300 are printed in a state in which these pieces of information are included. For example, if the teller has received a driver's license of the customer to use it as an ID card for identifying the customer, an image of the driver's license is captured by depositing the driver's license into the valuable medium processing apparatus 2001. In the valuable medium processing apparatus 2001, information about the customer such as the name, address, and the like is extracted from the image of the driver's license. The valuable medium processing apparatus 2001 prints out the documents 2200 and the receipt 2300 with the information about the customer such as the name, address, and the like being included in the print content. Thus, the documents 2200 and the receipt 2300 are printed in a state in which the minimum operations including signing, affixing a seal and the like by the customer.

As explained above, in receiving the damaged banknote 2100, the types of the necessary documents 2200 are automatically determined and the determined necessary documents are automatically printed, the load on the teller for the operations can be reduced. In addition, the printed documents 2200 include information about the date and the like and it is necessary for the customer to perform the required minimum operations such as filling the documents with information required to be written by hand, such as signing, affixing a seal, and the like, and accordingly, the load on the customer also can be reduced.

If it has been determined to accept the request for processing the damaged banknote 2100, then in the valuable medium processing apparatus 2001, the information and the like about the damaged banknote 2100, the damaged banknote image 2101, the printed documents 2200, and the receipt 2300 are associated with one another and managed by the management numbers. If the driver's license of the customer is received from the customer as the ID, the image of the driver's license is also managed as an ID image.

In receiving a request for processing the damaged banknote 2100, after being deposited in the valuable medium processing apparatus 2001, the damaged banknote 2100 is stored in a predetermined storage unit inside the valuable medium processing apparatus 2001 to be managed there. However, a timing of storing the damaged banknote 2100 can be changed as desired. For example, at the stage of printing the documents 2200 and the receipt 2300, the setting can be performed so that the damaged banknote 2100 is to be dispensed from the valuable medium processing apparatus 2001. In this case, after the customer has filled-in and sealed the documents 2200 and the receipt 2300, the teller deposits the damaged banknote 2100 into the valuable medium processing apparatus 2001 again. After the damaged banknote image 2101 is captured, the damaged banknote 2100 is stored in a predetermined storage unit inside the valuable medium processing apparatus 2001.

After the documents 2200 necessary for receiving the damaged banknote 2100 and the receipt 2300 are printed out by the printer, the customer verifies the contents thereof and performs an operation for filling-in the information, signing, affixing a seal, and the like where necessary. After various pieces of information are added by the customer to documents 2201 and a receipt 2301, the documents 2201 and the receipt 2301 are presented from the customer to the teller and then are deposited by the teller into the valuable medium processing apparatus 2001 again (B-1 in FIG. 23B).

In the valuable medium processing apparatus 2001, images of the documents 2201 and the receipt 2301 filled-in and sealed by the customer are captured, and thus document images 2202 and a receipt image 2302 are acquired (B-2). The valuable medium processing apparatus 2001 reads the management number for the exchange processing included in the receipt image 2302 and recognizes the damaged banknote image 2101 stored corresponding to the management number and the types of the previously printed documents 2200. Then, a process for verifying the documents 2201 and the receipt 2301 presented from the customer is performed. For example, if any omitted document exists in the documents 2201 received from the customer, this state is notified to the teller by displaying information indicating so on the screen. Specifically, if the number of the printed documents 2200 and the number of the documents 2201 received from the customer, if the receipt 2301 has not been deposited, or if nothing is filled-in or no seal is performed in fields of the printed documents 2200 in which the customer should have entered or sealed, this state is notified to the teller to prompt the teller to verify it. In the valuable medium processing apparatus 2001, data of the documents 2200 and the receipt 2300 are managed, and the data includes information for specifying the regions of the respective documents to be filled-in with information and sealed. With this configuration, the valuable medium processing apparatus 2001 can verify a pixel value of the region of the document images 2202 and the receipt image 2302 and determine whether each region has been left blank or not.

If any of documents included in the documents 2201 is omitted, if the receipt 2301 has not been deposited, or if any omission of information or seal exists in the documents, this state is notified on the screen of the valuable medium processing apparatus 2001, and the teller verifies the omission of documents or information or seal based on the information displayed on the screen and performs a correction operation where necessary.

As explained above, in the valuable medium processing apparatus 2001, the number of the documents 2201 and whether no omission exists for the information entered in and seals affixed to the documents 2201 and the receipt 2301 are automatically verified, and accordingly, the load of the verification operation can be reduced and the process of receiving the damaged banknote 2100 can be precisely performed.

If it has been verified that all the documents 2201 and the receipt 2301 have been presented and no omission exists for the information in and seals to be affixed to the documents (B-3), then the damaged banknote image 2101, the document images 2202, and the receipt image 2302 are stored in the valuable medium processing apparatus 2001 in association with one another to be managed by the management numbers (B-4). In this process, if images of the driver's license, the driver's license number and the like, images of the ID card, and information about the ID card have been stored in association with the management numbers, these images and information are to be still managed.

The receipt 2301 deposited into the valuable medium processing apparatus 2001 is dispensed to the outside of the apparatus, and is then presented by the teller to the customer (B-5). On the other hand, each of the documents 2201 are to be stored in a predetermined storage unit inside the valuable medium processing apparatus 2001 to be managed there for use in requesting the authentication process or the exchange process by the Bank of Japan later. However, the documents 2201 can be stored and managed outside the valuable medium processing apparatus 2001 according to the operation by the bank. In this case, the documents 2201 are dispensed to the outside of the apparatus according to the setting.

When the processing for receiving the damaged banknote 2100 is completed and the receipt 2303 is dispensed from the valuable medium processing apparatus 2001 again, a barcode 2304 is printed onto the receipt 2303. Information to be included in the barcode 2304 is managed within the valuable medium processing apparatus 2001 in association with the damaged banknote image 2101 and the like. The barcode 2304 includes information such as a file name for identifying the damaged banknote image 2101 and the like stored inside the valuable medium processing apparatus 2001. In addition, encryption codes generated by using the techniques such as hash function and based on the management number are embedded on the barcode 2304. Specifically, the barcode 2304 of the receipt 2303 includes the uniquely assigned management number and the encryption code generated by using the encryption technique based on the management number, and accordingly, it can be verified that the receipt 2303 is not a counterfeit receipt by determining whether the assigned management number and the management number included in the encryption codes match each other.

When the receipt 2303 is presented by the customer to the bank later, the teller reads the barcode 2304 of the receipt 2303 on a terminal, verifies whether the receipt 2303 is not a counterfeit receipt by referring to the encryption codes, and can refer to the image stored in the valuable medium processing apparatus 2001 and the information associated therewith based on the management number. With this configuration, the status of the process of the damaged banknote 2100 requested by the customer and the contents of the damaged banknote image 2101, the document images 2202, and the like can be easily verified.

For example, when the teller has presented the receipt 2300 printed by the valuable medium processing apparatus 2001 and the damaged banknote 2100 to the customer and prompted the customer to fill in the information and affix seals on them and if the customer takes away the receipt 2300 without performing the subsequent procedures, the barcode 2304 is not printed on the receipt 2300. Thus, if the receipt 2300 in this state is presented to the bank later, the teller can easily recognize that the receipt 2300 is a receipt taken away before the process is completed. Moreover, because the encryption codes generated correspondingly to each management number are included in the barcode 2304, if another receipt is generated by counterfeit by using the receipt 2303 and the barcode 2304 included therein, it can be determined that the receipt is a counterfeit receipt by verifying the management number included in the receipt and the encryption codes of the barcode.

After the exchange processing by the Bank of Japan is performed and the damaged banknote 2100 is exchanged with the money having the equivalent value, the customer may have doubt about the result of exchange by the Bank of Japan in some cases. If the customer desires to have the damaged banknote 2100 received by the bank to be verified again, the customer cannot verify the actual damaged banknote 2100 because the damaged banknote 2100 have already been exchanged with the normal money. Even in such a case, according to the valuable medium processing apparatus 2001, the customer is allowed to verify the damaged banknote image 2101 of the damaged banknote 2100 received by the bank and the document images 2202 of the documents 2201, and accordingly, it is enabled to respond to the customer's demands. Similarly, also for the result of the authentication process by the Bank of Japan, the customer is allowed to perform verification or the like of the damaged banknote later.

After the processing for receiving the damaged banknote 2100 is completed and the damaged banknote 2100 is stored within the valuable medium processing apparatus 2001, the damaged banknote 2100 is removed from the apparatus later. An operation for repairing the damaged banknote 2100 for the lost part is performed according to the provision of the handling procedures provided by the Bank of Japan (C-1 in FIG. 23C). The repaired damaged banknote 2103 is presented to the Bank of Japan together with the stored document 2201 and the Bank of Japan performs the authentication process or the exchange process. The provision provides that the documents 2201 should be transmitted by facsimile before presenting the damaged banknote 2100 to the Bank of Japan, and an operation for transmitting the documents can be easily performed by using the document images 2202 stored in the valuable medium processing apparatus 2001 (C-2). If data transmission between the bank and the Bank of Japan using the Internet is available, the data of the damaged banknote image 2101 and the document images 2202 and the like can be transmitted from the bank to the Bank of Japan. After the damaged banknote 2100 has been repaired, an image of the repaired damaged banknote 2103 is captured, and the image is also managed within the valuable medium processing apparatus 2001 by the management number together with the damaged banknote image 2101, the document images 2202, and the receipt image 2302.

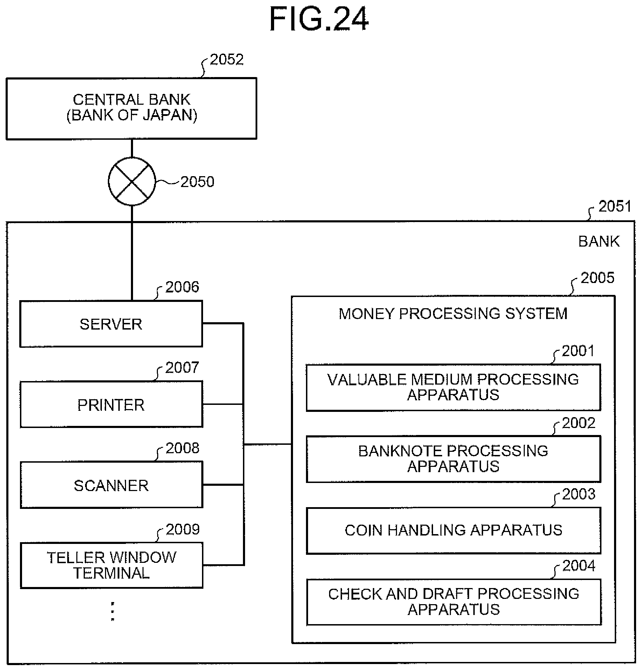

Next, a system including the valuable medium processing apparatus 2001 and installed in the bank will be explained. FIG. 24 is a drawing illustrating a money processing system 2005 installed in a bank 2051. In the bank 2051, a teller window terminal 2009 used by each teller at the teller window in charge, a printer 2007 and a scanner 2008 used at the teller window, the money processing system 2005 for supporting the operation by the teller and installed in the back office of the teller window, and a server 2006 for managing various data within the bank 2051 and for implementing data transmissions among the bank 2051, other banks, and the Bank of Japan 2052 via a network 2050, are communicably connected to one another. The money processing system 2005 is an apparatus also referred to as a "teller machine" in Japan, and includes a banknote handling apparatus 2002 for depositing and dispensing banknotes and bundles of banknotes, a coin handling apparatus 2003 for depositing and dispensing coins and wrapped coins, and a check/draft handling apparatus 2004 for processing checks, drafts, and the like, in addition to the valuable medium processing apparatus 2001 explained in the present embodiment. Functions and operations of the money processing system 2005 and the apparatuses 2002 to 2004 included in the money processing system 2005 will not be explained in detail here because known devices can be used for them. Accordingly, a configuration of the valuable medium processing apparatus 2001 will be explained below.

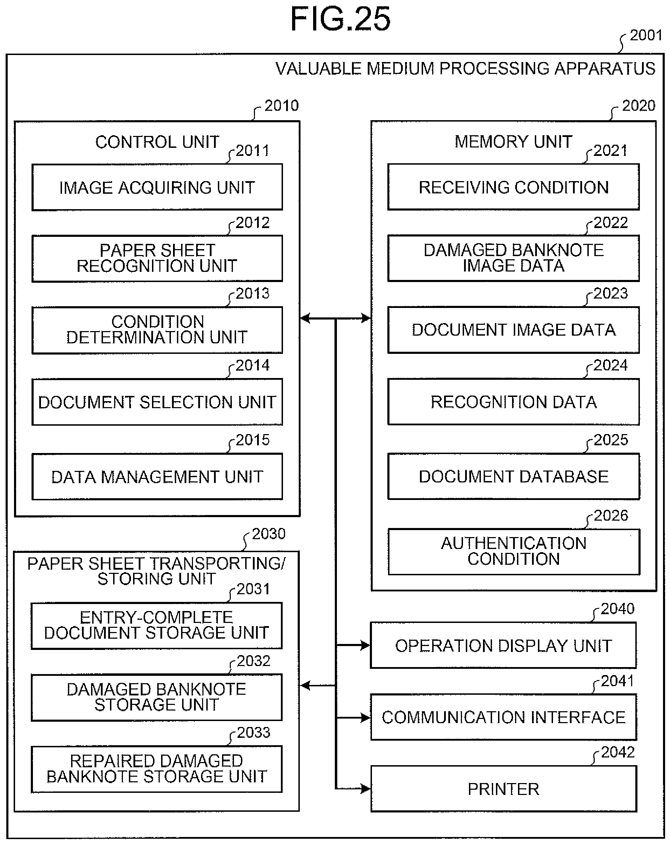

FIG. 25 is a functional block diagram illustrating an outline configuration of the valuable medium processing apparatus 2001. The valuable medium processing apparatus 2001 includes a control unit 2010 for controlling an operation of each component and implementing the process of the damaged banknote 2100 described with reference to FIG. 23, a memory unit 2020 for storing information used by the control unit 2010 and data such as images acquired by the control unit 2010, a paper sheet transporting/storing unit 2030 for transporting and storing paper sheets including the damaged banknote 2100, an operation display unit 2040 for performing an operation for giving instructions to the control unit 2010 and displaying various information, a communication interface 2041 for transmitting and receiving data with the other apparatuses 2002 to 2004, the server 2006, the printer 2007, the scanner 2008, and the teller window terminal 2009, and a printer 2042 for printing the documents 2200 and the receipt 2300 and printing the barcode 2304 onto the receipt 2301.

The paper sheet transporting/storing unit 2030 carries out a transport for acquiring an image of a paper sheet such as the damaged banknote 2100 deposited into a depositing inlet of the valuable medium processing apparatus 2001, the documents 2201, the receipt 2301, and the like, a transport for dispensing the paper sheet from a dispensing outlet after the image is acquired, a transport for storing the paper sheet in a predetermined storage unit, a transport for dispensing the paper sheet stored in the storage unit from the dispensing outlet, and the like. The paper sheet transporting/storing unit 2030 includes an entry-complete document storage unit 2031, a damaged banknote storage unit 2032, and a repaired damaged banknote storage unit 2033. The entry-complete document storage unit 2031 is used to store the documents 2201 having been filled-in and sealed by the customer. The damaged banknote storage unit 2032 is a storage unit for storing the damaged banknote 2100 received from the customer, and the repaired damaged banknote storage unit 2033 is used for storing a repaired damaged banknote which is a damaged banknote removed from the damaged banknote storage unit 2032 and repaired. The damaged banknote 2100 is deposited into the apparatus by using a dedicated carrier sheet according to the degree of the damage. The carrier sheet includes two transparent sheets bonded together in a part thereof, and by depositing the carrier sheet into the apparatus with the damaged banknote 2100 being sandwiched between the sheets, the damaged banknote 2100 can be transported in the same way as normal banknotes. The carrier sheet is the transport support sheet illustrated in FIG. 16 in the first embodiment.

The memory unit 2020 is a memory device constituted by a semiconductor memory, or hard disks, and stores therein a receiving condition 2021 used for determining whether to receive a process of the damaged banknote 2100, damaged banknote image data 2022 including the captured damaged banknote image, captured images of the repaired damaged banknote 2103, and the like, document image data 2023 including the document images 2202, the receipt image 2302, and ID images such as images of the driver's license and the like, recognition data 2024 used for recognizing the denomination and the authenticity of the damaged banknote 2100, a document database 2025 for managing data such as the type of the documents 2200 necessary for receiving a process for exchanging the damaged banknote 2100, information for specifying the regions of the document 2200 in which the customer is to fill in and affix a seal, and the like, and an authentication condition 2026 for determining whether an authentication process for the damaged banknote 2100 by the Bank of Japan 2052 is necessary. The images such as the damaged banknote image 2101, images of the repaired damaged banknote 2103, the document images 2202, the receipt image 2302, and the images of the ID card, and the like that are acquired in the valuable medium processing apparatus 2001 are managed in association with one another by the management numbers issued when the process of the damaged banknote 2100 is received.

Formats for various documents are managed in the document database 2025. The formats include formats for various documents presented to the Bank of Japan 2052 in requesting the authentication process and the exchange process of the damaged banknote 2100 to the Bank of Japan 2052, the receipt 2300 issued by the bank 2051 to the customer, documents for management necessary in the bank 2051, and the like. Each document can be printed by the printer 2007 or 2042 based on these formats. The document database 2025 includes information for specifying the regions of the documents 2200 and the receipt 2300, respectively, in which it is necessary for the customer to fill in with information, affix seals, and the like. With this configuration, it can be verified that no omission of information to be filled-in and seals to be affixed by the customer on the document images 2202 and the receipt image 2302. Moreover, the document database 2025 includes dictionary data describing information that indicates the regions of the documents 2200 and the receipt 2300 in which the customer need to fill in with the information, and information about the types of characters to be used in the filling-in regions and those not to be used in the filling-in regions. With this configuration, if information not to be described has been actually described and if Arabic numeric characters have been used in the region for filling-in with the name of the customer, or if kanji characters or the like have been used in the region for entering the telephone number, it is enabled to prompt the teller to verify the entered information.

In addition, the document database 2025 includes selection conditions for setting which document is to be selected when which condition is satisfied upon receiving the process of the damaged banknote 2100. For example, if a selection has been performed as to whether the normal money exchanged from the damaged banknote 2100 is to be received by account transfer or by cash, dedicated documents are printed according to the result of the selection. For example, it is possible to employ a configuration in which the setting is performed so that solicitation documents are printed if the customer has no account in the bank 2051 and that descriptive documents are printed for a customer who has requested the exchange process for the damaged banknote 2100 for the first time.

In the authentication condition 2026, a condition for determining whether the authentication process of the damaged banknote 2100 by the Bank of Japan 2052 is necessary can be set based on the damaged banknote image 2101. For example, if the denomination or the authenticity cannot be recognized, if the banknote has been torn into three or more pieces and no piece has an area of 2/3 or larger of the entire area is included, if the banknote has been stained or altered by an ink, chemical agents, or the like, if the banknote has been scorched, if the banknote has been laminated, or if the banknote has been contracted or decolorized by washing or the like, the authentication process by the Bank of Japan 2052 is necessary. The authentication condition 2026 is set to determine automatically whether the banknote needs the authentication process based on the damaged banknote image 2101. Specifically, as a result of the recognition process, information such as the number of pieces of the divided banknote, the area of each piece, the color of the banknote, and the like is acquired from the damaged banknote image 2101 of the damaged banknote 2100 transported with being sandwiched in the carrier sheet, for example, and a condition as to which condition should be satisfied by the acquired information for determining that the authentication process is necessary is set as the authentication condition 2026. In addition, the authentication condition 2026 is set so that it is determined that the authentication process is necessary if features such as watermarks and microcharacters, which should be observed in the damaged banknote 2100, are not included in the damaged banknote image 2101.

As the authentication condition 2026, a previously set serial number determination condition can be used. When a serial number can be read from the damaged banknote image 2101, whether the authentication process is necessary can be determined based on the serial number determination condition. For example, it is determined that the authentication is necessary because the damaged banknote 2100 may be a counterfeit note if the character type of the characters constituting the serial number of the damaged banknote 2100, the number of digits thereof, and the like do not match the format of the serial number which should be printed on the banknote of the denomination of the damaged banknote 2100, if the serial number of the damaged banknote 2100 matches any serial number managed as the serial number of a counterfeit note, or if different serial numbers are printed at plural locations of one damaged banknote 2100.

In the receiving condition 2021, which data is to be used for which determination and which process is to be performed can be set. For example, by using the damaged banknote images 2101, the receiving condition 2021 can be set so that if the ratio of the remaining area of the damaged banknote 2100 does not satisfy the exchange condition provided by the Bank of Japan 2052, it is determined that the damaged banknote 2100 does not satisfy the condition and information instructing the teller to return the damaged banknote to the customer is displayed on the operation display unit 2040.

If an ID card image such as an image of the driver's license of the customer has been acquired by the control unit 2010, the receiving condition 2021 that uses the ID card image can be set. Specifically, the receiving condition 2021 can be set so that if the name, address, or the driver's license number read from the ID card image is included in information previously generated as a black list, it is determined that the receiving condition is not satisfied and that an instruction for prompting the teller to perform a predetermined process is given. Moreover, the receiving condition 2021 can be set so that face collation of a face image of the driver's license and face images included in a face image database previously generated as a black list and that a predetermined process such as reporting to the police and the like is performed based on the result of determination by the face collation.

Moreover, a condition can be set by using the receiving condition 2021 so that information acquired by the control unit 2010 is collated with information stored in a customer database managed by the bank 2051, and if the customer who has requested the exchange process of the damaged banknote 2100 has no account in the bank 2051, then the teller is prompted to perform solicitation to the customer for opening an account. Moreover, the receiving condition 2021 can be set so that by referring to a database which manages the history of processes received from the customer thus far, and an instruction is given to prompt the teller to omit detailed descriptions for a customer who has experienced an exchange process of the damaged banknote 2100, that an instruction is given for prompting the teller to explain the details to a customer who requests the exchange process of the damaged banknote 2100 for the first time by using the documents 2200 which are printed out, i.e., so that the response to the customer is changed according to the process history. In addition, the receiving condition 2021 can be set so that if it is known by referring to the process history that the customer has brought in the damaged banknotes 2100 for numerous times, information for attracting the teller's attention is displayed.

The control unit 2010 illustrated in FIG. 25 is provided with an image acquiring unit 2011 for acquiring an image of a paper sheet, a paper sheet recognition unit 2012 for recognizing the type of the paper sheet, a condition determination unit 2013 for determining whether the paper sheet satisfies the condition set in the receiving condition 2021 and the authentication condition 2026 based on the paper sheet image, a document selection unit 2014 for selecting necessary documents to receive a process for the paper sheet, and a data management unit 2015 for managing data of the received paper sheet.

The image acquiring unit 2011 that include a line sensor has a function for acquiring images of the damaged banknote 2100, the documents 2201, and the receipt 2301 deposited via the depositing inlet of the valuable medium processing apparatus 2001 and transported by the paper sheet transporting/storing unit 2030. The image acquiring unit 2011 also includes a function for acquiring an ID card image when an ID card such as the driver's license and the like has been deposited.

The paper sheet recognition unit 2012 includes a function for recognizing the type and the like of the paper sheet by comparing the feature of the paper sheet extracted from the paper sheet image acquired by the image acquiring unit 2011 and the recognition data 2024 stored in the memory unit 2020. Specifically, the paper sheet recognition unit 2012 performs authenticity recognition and denomination recognition of the damaged banknote 2100 based on the damaged banknote image 2101 of the damaged banknote 2100. The paper sheet recognition unit 2012 also has a function for identifying the type of the documents 2201 based on the document images 2202 of the documents 2201.

Moreover, the paper sheet recognition unit 2012 has a function for acquiring denomination information by using the operation display unit 2040 if the denomination of the damaged banknote 2100 has not been identified by the denomination recognition. Specifically, the damaged banknote image 2101 and information for instructing an input of the denomination of the damaged banknote 2100 because of the failure of the denomination recognition are displayed on the operation display unit 2040. After the teller has verified the display on the operation display unit 2040 and inputted the denomination, the paper sheet recognition unit 2012 uses the inputted denomination as the denomination information for the damaged banknote 2100.

The paper sheet recognition unit 2012 can also be set so that even when the denomination of the damaged banknote has been identified by the denomination recognition, the damaged banknote image 2101 and the recognition result are displayed on the operation display unit 2040 to prompt the teller to verify the recognition result. In this case, if the recognition result is approved by the teller, the recognition result is used as the denomination information for the damaged banknote 2100. On the other hand, if the recognition result has not been approved and corrected by the teller, the denomination set by the correction is used as the denomination information for the damaged banknote 2100.

In the present embodiment, the configuration is described in which the paper sheet recognition unit 2012 performs the recognition process, however, the present embodiment is not limited to this and it is also possible to employ a configuration in which the denomination recognition is not performed by the paper sheet recognition unit 2012, for example. In this configuration, instead of performing the denomination recognition by the paper sheet recognition unit 2012, the denomination information is input by using the operation display unit 2040. Whether the paper sheet recognition unit 2012 is to perform the denomination recognition during the process of the damaged banknote 2100 can be changed according to the setting. In FIG. 25, the image acquiring unit 2011 and the paper sheet recognition unit 2012 are independently provided, however, the present embodiment is not limited to this. That is, it is also possible to employ a configuration in which the image acquiring unit 2011 and the paper sheet recognition unit 2012 are integrally provided.

The condition determination unit 2013 has a function for determining whether the conditions set in the receiving condition 2021 are satisfied. Various conditions can be set as the receiving condition 2021. The condition determination unit 2013 acquires necessary data and determines whether the data satisfies the determination condition according to the setting, and performs a predetermined process such as display of information on the operation display unit 2040 and the like based on the determination result.

In addition, the condition determination unit 2013 includes a function for determining whether the authentication process of the damaged banknote 2100 by the Bank of Japan 2052 is necessary based on the authentication condition 2026. The determination is performed by using the damaged banknote image 2101. The result of the determination as to whether the authentication process is necessary is inputted to the document selection unit 2014. If it is determined that the authentication process is necessary, the document selection unit 2014 selects necessary documents to request the Bank of Japan 2052 to perform the authentication process.

The condition determination unit 2013 also includes a function for performing a determination based on the document images 2202 and the receipt image 2302 after the documents 2201 and the receipt 2301 in which the customer has fully filled-in and affixed necessary seals are deposited into the valuable medium processing apparatus 2001. First, whether all the documents 2201 and the receipt 2301 that need to be re-deposited again, among the previously printed documents 2200 and the receipt 2300, have been re-deposited is determined. Specifically, the condition determination unit 2013 recognizes the types of the previously printed documents 2200 from the management numbers included in the receipt 2301, and verifies whether necessary documents 2201 except the descriptive documents and the like for the customer among the printed documents 2200 have been deposited again. If any document is omitted for the documents 2201, this omission is notified to the teller via the operation display unit 2040.

Further, the condition determination unit 2013 refers to the document database 2025 of the memory unit 2020 based on the types of the documents 2201 recognized by the paper sheet recognition unit 2012 and recognizes regions of the documents 2201 and the receipt 2301 in which the customer is required to fill in with information and affix seals. The condition determination unit 2013 determines whether characters or seals exist in these regions on the document images 2202 and the receipt image 2302, and if any entry or seal has been omitted, this omission is notified to the teller via the operation display unit 2040.

The document selection unit 2014 includes a function for selecting documents necessary for receiving and proceeding with the process of the damaged banknote 2100 performed if it has been determined that the damaged banknote 2100 satisfies the receiving condition 2021. Information about which condition should be satisfied to select which documents has been set in the document database 2025. The document selection unit 2014 selects the documents to be printed by referring to this setting.

The document selection unit 2014 also includes a function for controlling the printer 2042 to print the selected documents. As well as the documents 2200 including the authentication application form and the exchange request sheet necessary for requesting the Bank of Japan 2052 to perform the authentication process and the exchange process and the receipt 2300 issued by the bank 2051 to the customer, the document selection unit 2014 prints descriptive documents describing the exchange criteria provided by the Bank of Japan 2052, documents for soliciting the customer having no account in the bank 2051 to open an account, and the like where necessary. The documents 2200 and the receipt 2300 are printed by the printer 2042 included in the valuable medium processing apparatus 2001. The setting can also be set so that data are transmitted from the valuable medium processing apparatus 2001 to the printer 2007 illustrated in FIG. 24 via the communication interface 2041 and the documents 2200 and the receipt 2300 can be printed by the printer 2007 installed at a location close to the teller window.

The data management unit 2015 includes a function for managing data such as the damaged banknote image 2101, the document images 2202, and the receipt image 2302 captured by the image acquiring unit 2011 by mutually associating them by the management numbers. These pieces of image data are managed within the memory unit 2020 as the damaged banknote image data 2022 and the document image data 2023.

In addition, the data management unit 2015 manages the results of the recognition by the paper sheet recognition unit 2012, results of the determination by the condition determination unit 2013, and the results of the selection by the document selection unit 2014, ID card images of the driver's license, and the like in association with one another. Which data is to be stored until what time can be changed according to the setting.

The data management unit 2015 also includes a function for controlling a facsimile machine (not illustrated) via the communication interface 2041 and transmitting the document images 2202 having been stored in the memory unit 2020 as the document image data 2023 to a predetermined transmission destination such as the Bank of Japan and the like at a predetermined timing. The data to be transmitted, the transmission timing, and the transmission destination can be changed according to the setting.

Further, the data management unit 2015 includes a function for generating the barcode 2304 to be printed on the receipt 2303 to be issued to the customer. The data management unit 2015 generates a two-dimensional barcode in which the management number uniquely assigned to each receiving process to identify the damaged banknote image 2101 and the document images 2202 corresponding to the receipt 2303 and encryption codes generated by using encryption techniques based on the generated management number are embedded.

The operation display unit 2040 illustrated in FIG. 25 includes a touch panel type liquid crystal display, for example, and is used for receiving various information inputted by the teller and displaying various instructions and information output from the control unit 2010 and giving and notifying the instructions and the information to the teller.

The communication interface 2041 is used for transmitting data between the valuable medium processing apparatus 2001 and an external apparatus. The printer 2042 is used for printing the documents 2200 and the receipt 2300 and for printing the barcode 2304 generated by the data management unit 2015 on the receipt 2301.

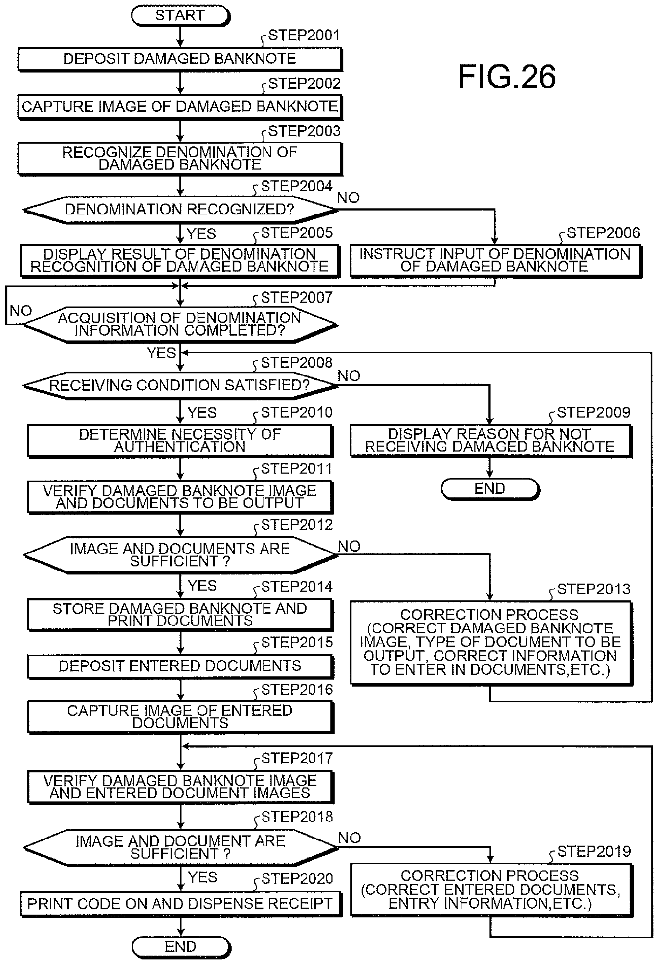

Next, a flow of the process of the damaged banknote 2100 performed by the valuable medium processing apparatus 2001 will be explained in detail. FIG. 26 is a flowchart illustrating a flow of a process for receiving the damaged banknote 2100. First, when the customer brings in the damaged banknote 2100 to the bank 2051 and requests the exchange of the damaged banknote 2100 into normal money at the teller window, the teller who has received the request deposits the damaged banknote 2100 brought by the customer into the valuable medium processing apparatus 2001 (STEP 2001). In the valuable medium processing apparatus 2001, an image of the deposited damaged banknote 2100 is acquired by the image acquiring unit 2011 (STEP 2002). The acquired damaged banknote images 2101 is stored in the memory unit 2020 as the damaged banknote image data 2022.

In this process, the teller requests the customer to present an ID card for verifying the identification of the customer, such as a driver's license, an insurance card, or the like. It is assumed in the following description that the customer has presented the driver's license. An image of the driver's license presented by the customer is captured after obtaining permission from the customer and is used for extracting information about the customer. In a process for capturing the image of the driver's license, it is also possible to employ a configuration in which the driver's license is deposited into the valuable medium processing apparatus 2001 to capture its image by using the image acquiring unit 2011 or a configuration in which the scanner 2008 communicably connected to the valuable medium processing apparatus 2001 is used. For example, the scanner 2008 installed at the teller window is used to capture an image of the driver's license presented by the customer, then the captured image is transmitted to the valuable medium processing apparatus 2001, and thus the driver's license can be quickly returned to the customer. Thus, captured driver's license image is stored in the memory unit 2020 as a part of the document image data 2023.

Then, the paper sheet recognition unit 2012 performs the denomination recognition of the damaged banknote 2100 by using the damaged banknote image 2101 captured by the image acquiring unit 2011 and the recognition data 2024 stored in the memory unit 2020 (STEP 2003). If the denomination has been recognized (YES at STEP 2004), the result of the denomination recognition is displayed on the operation display unit 2040 (STEP 2005) and information prompting the teller to verify the denomination recognition result is displayed on the operation display unit 2040. On the other hand, if the denomination of the damaged banknote 2100 has not been recognized (NO at STEP 2004), the damaged banknote image 2101 and information for prompting the teller to input the denomination information about the damaged banknote 2100 are displayed on the operation display unit 2040 (STEP 2006). If the teller has inputted the approval of the denomination recognition result or the denomination information (YES at STEP 2007), then the denomination information approved or inputted by the teller is used as the denomination information acquired by the paper sheet recognition unit 2012 in the subsequent process.

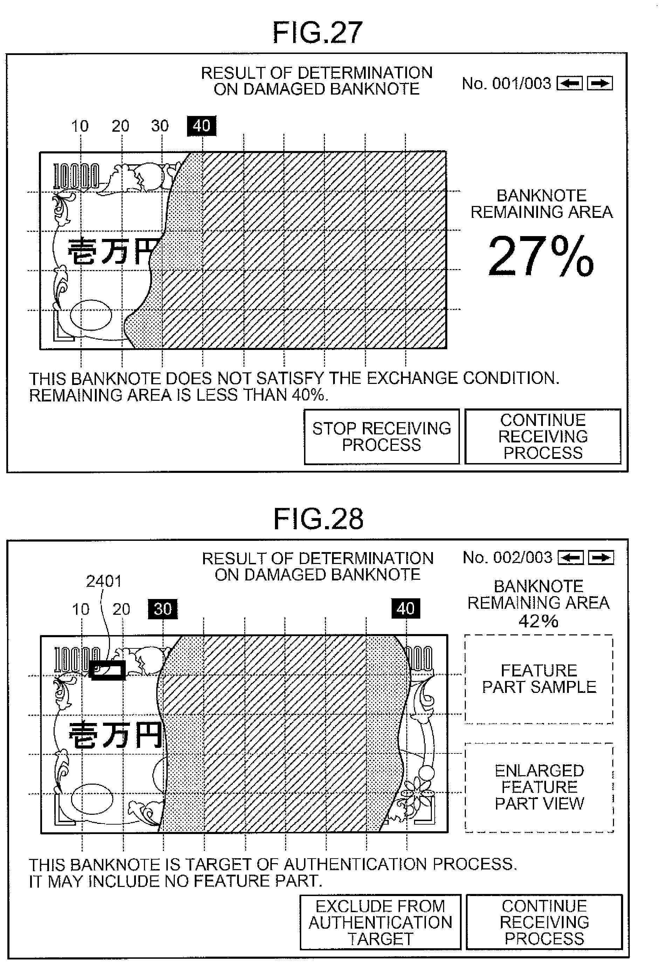

Then, the condition determination unit 2013 reads the receiving condition 2021 from the memory unit 2020 and determines whether the damaged banknote 2100 satisfies the receiving condition 2021 based on the damaged banknote image 2101. If the receiving condition 2021 is not satisfied (NO at STEP 2008), then the reason why the damaged banknote 2100 cannot be received is displayed on the operation display unit 2040 (STEP 2009). FIG. 27 illustrates an example of the screen displayed on the operation display unit 2040 in this case.

FIG. 27 illustrates an example of the screen displayed if the area of the damaged banknote 2100 does not satisfy the exchange condition provided by the Bank of Japan 2052. As illustrated in the drawing, the operation display unit 2040 displays the damaged banknote image 2101, the ratio of the remaining area (the area of the damaged banknote 2100) to the entire banknote required by the condition stored in the condition determination unit 2013, and the information describing that the ratio does not satisfy the exchange condition. On the screen, grid-like support lines and the numerical figures indicating the ratio are displayed on the screen so that the ratio of the remaining area of the damaged banknote images 2101 can be visually verified. For the rectangular grids, grids that do not include the damaged banknote 2100 at all and grids including a part of the damaged banknote 2100 therein are distinguishably displayed. If plural damaged banknotes 2100 have been deposited into the valuable medium processing apparatus 2001, a button for switching the display of the determination result is displayed in the upper right portion of the screen, and by operating on the button, the damaged banknote 2100 of which the determination result is to be displayed can be switched. In FIG. 27, an example is illustrated in which three damaged banknotes 2100, among the plural deposited damaged banknote 2100, have been determined not to satisfy the receiving condition and the determination result of the first damaged banknote 2100 among the three notes is displayed.

The threshold value for determining that the damaged banknote 2100 cannot be received can be set in the receiving condition 2021 stored in the memory unit 2020. For example, if the exchange criterion provided by the Bank of Japan 2052 is 40% of the entire banknote area, then the threshold value is set at 30% so that the result of the determination can become obvious if the damaged banknote 2100 does not satisfy the condition. The setting performed so that in the bank 2051, the receiving process is stopped only if it is determined by the valuable medium processing apparatus 2001 that the ratio is less than 30% and that if it is determined that the ratio of the remaining area is less than 40% but equal to or greater than 30%, the final determination is left to the authentication process by the Bank of Japan 2052.

If the teller having verified the display on the screen illustrated in FIG. 27 operates the button for cancelling the receiving processing on the screen, then the process stops. It is also possible to employ a configuration in which if it is determined that the receiving process is continued for the authentication process by the Bank of Japan 2052, the teller operates the receiving process continue button not to cancel the receiving process to continue it. For example, if the customer desires the authentication by the Bank of Japan 2052, the teller operates the receiving process continue button to continue the process.

If it is determined that the damaged banknote 2100 satisfies all conditions in the receiving condition 2021 (YES at STEP 2008 in FIG. 26), and if an instruction has been given by the teller for continuing the receiving process although it has been determined that conditions in the receiving condition 2021 are not satisfied, then the condition determination unit 2013 performs a processing for determining whether the authentication by the Bank of Japan 2052 is necessary based on the authentication condition 2026 (STEP 2010).

Various techniques are used in banknotes to prevent forgery. In the determination based on the authentication condition 2026, whether the feature included in banknotes of each denomination is included is verified on the damaged banknote image 2101 based on the denomination information acquired by the paper sheet recognition unit 2012, for example. If no such feature is observed on the damaged banknote image 2101, it is determined that the authentication is necessary because the damaged banknote 2100 may be a counterfeit note. The result of the determination by the authentication condition 2026 can be verified on the operation display unit 2040. FIG. 28 illustrates an example of the screen displayed if it is determined that the damaged banknote 2100 does not satisfy the authentication condition 2026. Referring to FIG. 28, if it is determined that the damaged banknote 2100 may possibly be a counterfeit note, the damaged banknote image 2101 is displayed on the left side, and a region location 2401 in which the feature of the banknote should have been observed on the image is indicated. Although not illustrated in the display of FIG. 28, a sample of the feature portion that should have been observed in the region location 2401 and a magnified view of the region location 2401 actually acquired in the damaged banknote image 2101 are displayed. For example, if the teller has determined that the authentication is not necessary because the damaged banknote 2100 is a genuine note by verifying the image of the feature part displayed on the screen, then the teller operates the button for instructing exclusion from authentication targets and change the determination so as not to perform the authentication. In addition, if it is determined that the authentication is necessary based on the serial number determination condition, similarly to the above-described example, the serial number image obtained from the damaged banknote image 2101 can be also verified on the screen. When the teller operates the receiving process continue button, the process advances to the next process.

After the results of the determinations under the receiving condition 2021 and the authentication condition 2026 are obtained, the document selection unit 2014 selects the necessary documents 2200 based on the obtained determination results. The documents selected by the document selection unit 2014 and the damaged banknote image 2101 are displayed on the operation display unit 2040 and the teller verifies the displayed information (STEP 2011 in FIG. 26).

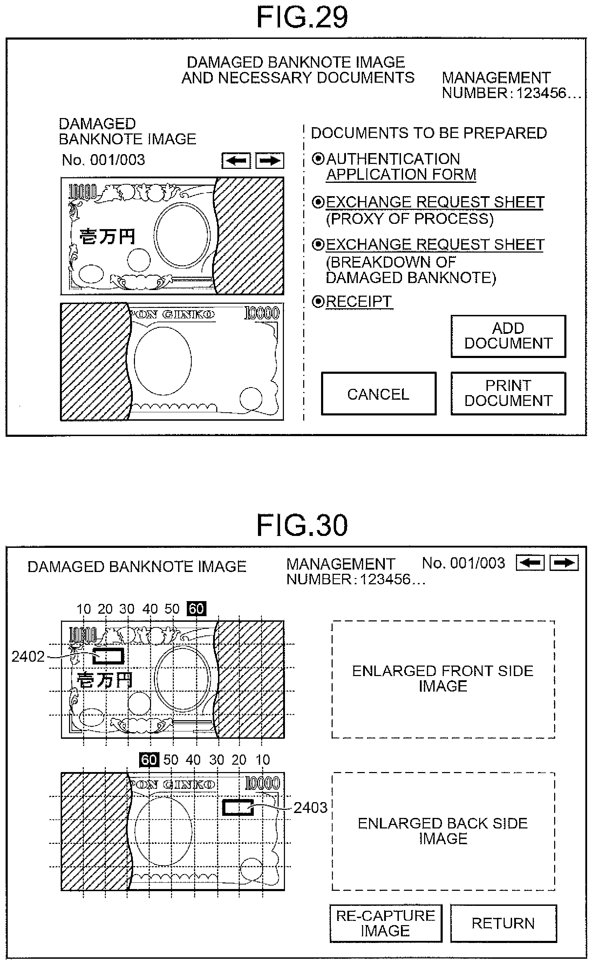

FIG. 29 illustrates an example of the screen displayed on the operation display unit 2040 during the verification process. As illustrated in FIG. 29, the images of the front side and the back side of the damaged banknote 2100 captured as the damaged banknote images 2101 are displayed on the screen. Moreover, on the screen, the documents 2200 automatically selected by the document selection unit 2014 are displayed as a list. The management number assigned to the process for receiving the damaged banknote 2100 is displayed in the upper portion of the screen. FIG. 29 illustrates an example of a case where three damaged banknotes, the damaged banknote 2100 of Nos. 001 to 003, have been determined to satisfy the receiving condition 2021 as illustrated in the upper-left portion of the screen, and these are the documents 2200 as the documents to be processed where it is determined that the authentication application form and the exchange request sheet (the proxy of process and the breakdown of damaged banknotes) are necessary. If the plural damaged banknotes 2100 are to be processed and if one or more damaged banknote 2100 satisfying the authentication condition 2026 are included in the process target damaged banknotes 2100, then the document selection unit 2014 selects the authentication application form.

When the teller touches the screen at the damaged banknote image 2101, the screen shifts to a screen for verifying the damaged banknote image 2101 illustrated in FIG. 30. FIG. 30 illustrates an example of the screen displayed in verifying the damaged banknote images 2101. On this screen, the damaged banknote images 2101 of the front side and the back side are displayed in the left portion, and in the right portion of the screen, enlarged images showing rectangular regions 2402 and 2403 designated on the images 2101 are displayed. When the rectangular regions 2402 and 2403 are designated on the damaged banknote image 2101 displayed in the left portion, an enlarged image of the designated region is displayed in the right portion. If any region that the teller desires to verify on the damaged banknote image 2101 exists, the teller can verify the details of the region by enlarging the image on the screen. If it is determined that the image quality is insufficient (NO at STEP 2012 in FIG. 26), then a process for capturing the image of the damaged banknote 2100 can be performed again by operating an image recapture button on the screen illustrated in FIG. 30 (STEP 2013). The screen returns to the screen illustrated in FIG. 29 when the return button is operated on the screen.

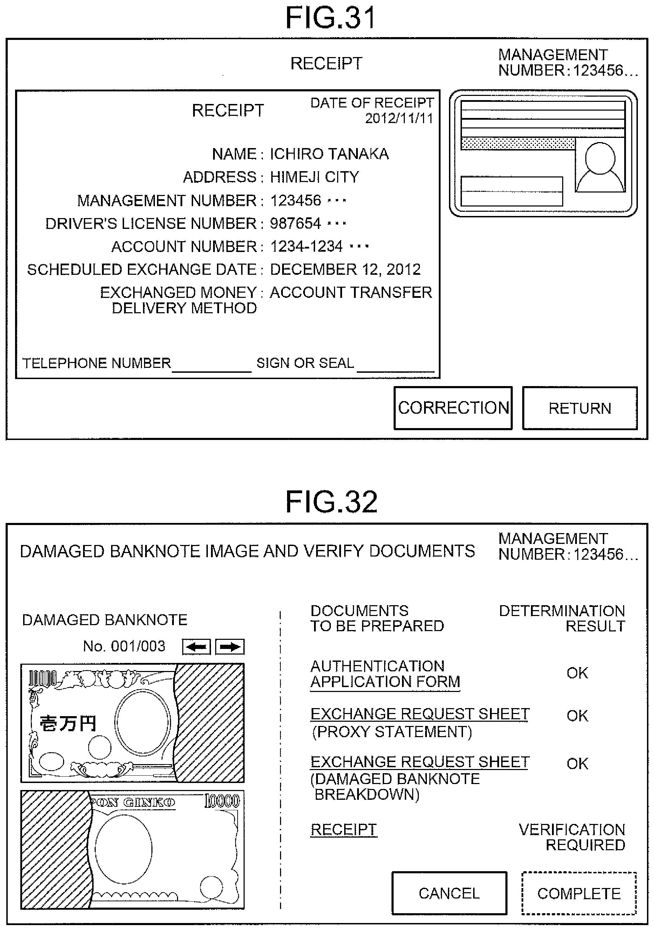

By touching the screen illustrated in FIG. 29 in the right portion corresponding to the underlined document name, the screen shifts to the screen for verifying the documents 2200. By touching the screen illustrated in FIG. 29 in the portion corresponding to the receipt, the screen shifts to a screen illustrated in FIG. 31. FIG. 31 illustrates an example of the screen displayed in verifying a content to be printed in the receipt 2300. On this screen, the content to be printed in the receipt 2300 is displayed in the left portion and information used for the content to be printed in the receipt 2300 is displayed in the right portion. In the example illustrated in FIG. 31, the image of the driver's license is displayed in the right portion of the screen. In the left portion of the screen, an image of the receipt 2300 is displayed, which is generated by combining the image of a blank receipt included in the document database 2025 stored in the memory unit 2020 with the name, address, and the driver's license number extracted from the driver's license image by the data management unit 2015. The image of the receipt 2300 also includes the date and the management number as well as the information extracted from the driver's license. In the case of a customer having an account in the bank 2051, the image of the receipt 2300 includes the account number obtained by referring to a database separately managed within the bank 2051.

The document having the same content as that of the image displayed on the document verification screen shown in FIG. 31 is printed by the printer 2007 or 2042. The teller compares the content to be printed in the receipt 2300 and the content included in the driver's license image to verify whether any error is included in the contents. If any correction is necessary (NO at STEP 2012 in FIG. 26), the teller operates a correction button on the screen and corrects the content of the receipt 2300 (STEP 2013). When the teller operates the return button on the screen, the screen returns to the screen illustrated in FIG. 29.

In FIG. 31, the example of the receipt 2300 is explained, however, other documents such as the authentication application form and the exchange request sheet can be similarly verified for the content of the documents 2200 to be printed out by referring to the verification screen. For other documents 2200, similarly to the case of the receipt 2300, document images are displayed in the state in which information that can be entered into the documents 2200 at this stage, such as the date, are displayed in a composite manner. However, the content of the information to be automatically inputted to the documents 2200 and the receipt 2300 can be changed according to the setting. If the date should be entered by the customer, the setting can be performed so that the date is not included in the composite image, for example.

On the verification screen illustrated in FIG. 29, the documents selected by the document selection unit 2014 only are displayed. The example illustrated in FIG. 29 is, for example, a case where the customer has an account in the bank 2051 as illustrated in FIG. 31. In contrast, in the case of a customer not having an account in the bank 2051, the document selection unit 2014 automatically selects the documents for soliciting the customer to open an account, and the solicitation document is added to the list of documents displayed in the right portion of the screen illustrated in FIG. 29.

After verifying the types of the documents to be printed on the verification screen illustrated in FIG. 29, the teller, where necessary (NO at STEP 2012), can cancel the automatically selected documents, operate an add document button to select documents to be printed from among the documents displayed as a list and add the selected document to the list of documents (STEP 2013). When the teller operates a print document button on the verification screen illustrated in FIG. 29 after completing the verification of the damaged banknote image 2101, the types of the documents to be printed, and the information included in the documents, the documents 2200 and the receipt 2300 are printed by the printer 2007 or 2042 (STEP 2014 in FIG. 26).

After it has been determined that the damaged banknote 2100 satisfies the receiving condition 2021 as explained above and the documents 2200 and the receipt 2300 necessary for the receiving have been printed, an operation performed by the teller and the customer for preparation of the documents is started. Specifically, the teller presents the printed documents 2200 and the receipt 2300 to the customer at the teller window and explains the contents thereof. The customer verifies the contents of the documents 2200 and the receipt 2300 and performs an operation for entering information, signing, affixing a seal, and the like on the documents 2200 where necessary. When the operation by the customer is completed, the documents 2201 and the receipt 2301 for which the entry of the information and the affixing a seal and the like are completed are presented to the teller again.

The teller deposits the documents 2201 and the receipt 2301 including information entered therein and the seals affixed by the customer into the valuable medium processing apparatus 2001 again (STEP 2015). In the valuable medium processing apparatus 2001, the image acquiring unit 2011 captures images of the deposited documents 2201 and the receipt 2301 (STEP 2016). The captured images of the documents 2201 and the receipt 2301 are stored in the memory unit 2020 as a part of the document image data 2023. Then the condition determination unit 2013 performs a process for verifying that all needed information exists in the documents 2201 and the receipt 2301 (STEP 2017). Specifically, the condition determination unit 2013 determines whether the documents 2201 and the receipt 2301 have been deposited, and determines whether no omission of information to be entered or the seals to be affixed exists on the acquired document images 2202 and the receipt image 2302. The determination result is displayed on the operation display unit 2040.

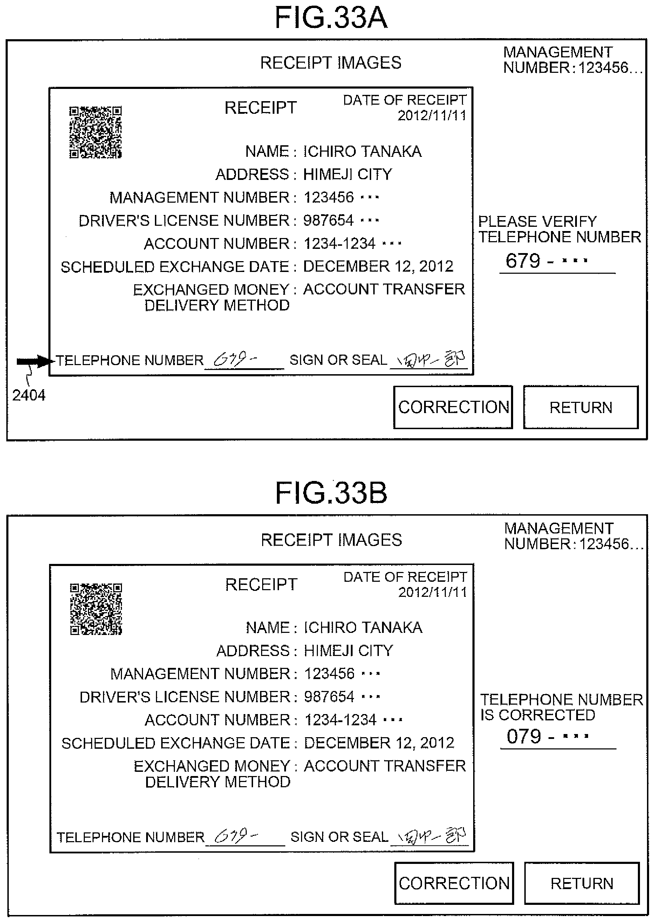

FIG. 32 illustrates an example of the screen of the determination result displayed on the operation display unit 2040. Referring to FIG. 32, in the left portion of the screen, the damaged banknote image 2101 having been previously acquired and stored in the memory unit 2020 as the damaged banknote image data 2022 is displayed. In the right portion of the screen, the determination results for the document images 2202 and the receipt image 2302 for which the customer has already entered the information are displayed. When the teller touches the screen at the portions corresponding to the damaged banknote image or the underlined document name, the teller can verify the content thereof on a separate screen. In the example illustrated in FIG. 32, the authentication application form and the exchange request sheet are determined to be good but the receipt 2301 has been determined to be insufficient. Accordingly, a message "verification required" is displayed on the screen as the determination result for the receipt 2301, and a complete button in the lower portion of the screen is displayed in a grayed out and disabled state. When the teller touches the screen at the portion for the receipt after verifying the screen, the screen shifts to a screen illustrated in FIGS. 33A.

FIGS. 33A and 33B are drawings illustrating an example of the separate screen for verifying the determination result. On this screen, a mark 2404 such as an arrow is displayed to identify the region that is the cause of the determination, e.g., the determination condition is not satisfied, and the reason for the determination is displayed in the right portion of the screen. FIG. 33A illustrates an example of the screen displayed for verification determined necessary as a result of character recognition, in which the numerical characters entered by the customer as the telephone number are not a numerical character string not included in previously set dictionary data of telephone numbers. As explained above, in the valuable medium processing apparatus 2001, the setting can be performed so that if the result of character recognition is not appropriate, or if character recognition cannot be performed, it is determined that the determination condition is not satisfied. If the teller determines that the receipt 2301 is inappropriate after verifying the display on the screen illustrated in FIG. 33A (NO at STEP 2018 in FIG. 26), a process for correcting the result of the character recognition on the telephone number is performed by operating a correction button (STEP 2019). When the correction process is performed, the result of the correction is displayed on the screen as illustrated in FIG. 33B.

The setting can be performed so that in performing character recognition of the telephone number on the receipt image 2302, the obtained result is managed by the management number together with the damaged banknote image 2101 and the like. On the screens illustrated in FIGS. 33A and 33B, an image generated by combining the receipt image 2302 with two-dimensional barcode is displayed. The barcode 2304 is generated by the data management unit 2015 and include the management number and encryption codes generated based on the management number, and when the receiving of the exchange processing for the damaged banknote 2100 is completed, the barcode 2304 is printed on the receipt 2301 as displayed on the screen.

When the correction of the documents 2201 and the receipt 2301 is performed where necessary and all the determination conditions are satisfied, all the determination results displayed on the screen illustrated in FIG. 32 becomes "OK", and the receiving complete button is enabled. When the teller operates the receiving complete button on the screen (YES at STEP 2018), the barcode 2304 is printed by the printer 2042 on the receipt 2301 and the receipt 2301 is dispensed from the valuable medium processing apparatus 2001 (STEP 2020 in FIG. 26). The dispensed receipt 2303 is presented by the teller to the customer.

The damaged banknote 2100 is stored in the damaged banknote storage unit 2032 of the valuable medium processing apparatus 2001 at STEP 2014 of the process illustrated in FIG. 26; however, a different setting can be performed by which the damaged banknote 2100 is dispensed to the outside of the apparatus at STEP 2014, then is deposited into the valuable medium processing apparatus 2001 again at STEP 2015, and then is stored in the damaged banknote storage unit 2032 at STEP 2020. Moreover, the documents 2201 can be stored in a predetermined entry-complete document storage unit 2031 at STEP 2020, or alternatively, the documents 2201 can be dispensed to the outside of the apparatus together with the receipt 2303 according to the setting. In dispensing the documents 2201 from the valuable medium processing apparatus 2001, the dispensed documents 2201 are separately managed within the bank 2051.

The configuration in which all the processes are performed by the valuable medium processing apparatus 2001 is described with reference to FIG. 26; however, the processes performed at the teller window by using the documents 2200 and the receipt 2300 printed at STEP 2014 (STEPS 2015 to 2020) can also be performed by using the teller window terminal 2009, the scanner 2008, and the printer 2007 installed at the teller window. Specifically, the entry-complete documents 2201 and the receipt 2301 received from the customer are scanned by using the scanner 2008 (STEP 2015), then images obtained by the scanner 2008 are transmitted to the valuable medium processing apparatus 2001 (STEP 2016), the subsequent processes such as the determination are performed within the valuable medium processing apparatus 2001, while the operations such as displaying, verifying, correcting the obtained results (STEPS 2017 to 2019) can be performed by using the teller window terminal 2009. In this case, the receipt 2301 is set into the printer 2042 after the teller has performed the operation for completing the receiving, and thus the barcode 2304 is printed on the receipt 2301 (STEP 2020). As explained above, in the valuable medium processing apparatus 2001, the processes can also be performed by using the scanner 2008, the printer 2007, and the teller window terminal 2009 installed near the teller window instead of using the image acquiring unit 2011, the operation display unit 2040, and the printer 2042.

In the present embodiment, the configuration is described in which the valuable medium processing apparatus 2001 is implemented as an independent apparatus, however, alternatively, the valuable medium processing apparatus 2001 can also be implemented as one of operation modes of the banknote handling apparatus 2002 or the check/draft handling apparatus 2004. Specifically, a configuration can also be employed in which the banknote handling apparatus 2002 has the configuration similar to that illustrated in FIG. 25 is used for depositing and dispensing processes in a normal operation mode, and if the operation mode is changed to a damaged banknote processing mode, the banknote handling apparatus 2002 operates as the valuable medium processing apparatus 2001 according to the present embodiment, for example.

In the present embodiment, the processes are performed within one bank, however, the information acquired during the processes can be shared with other banks. For example, the setting for the receiving condition 2021 and the authentication condition 2026 can also be performed so that if it is determined that the damaged banknote 2100 is likely to be a counterfeit note according to the information such as the serial number obtained from the damaged banknote image 2101, the information such as the serial number is transmitted to other banks. If the damaged banknote 2100 is possibly a counterfeit note, then plural similar counterfeit notes may exist. Some banks perform an operation for returning the damaged banknote 2100 to the customer if the damaged banknote 2100 is possibly a counterfeit note, i.e., that banks do not accept such a note. Accordingly, similar counterfeit notes may be brought in to plural banks or damaged banknotes returned from a bank may be brought in to other banks in some cases. In order to prevent these acts, information acquired in other banks in the past operations, the information such as the serial number of the damaged banknote 2100 that may possibly be a counterfeit note, is shared among banks.

In the present embodiment, the configuration is explained in which the valuable medium processing apparatus 2001 is installed behind the teller window, however, the present embodiment is not limited to this, and the valuable medium processing apparatus 2001 may also be installed at the teller window or the like. The installation location of the apparatus can be appropriately changed depending on the operation of each bank.

In the present embodiment, damaged banknotes are the processing targets, however, each of the above processes can be applied also to processes of other valuable media. If it is requested by a customer to exchange old version banknote (old version notes), old version coins, commemorative coins, and the like, an effect similar to that of the present embodiment can be achieved by performing the processes explained above in the present embodiment.

The receiving condition 2021 and the authentication condition 2026 described in the present embodiment are mere examples and the setting for these conditions can be changed according to the operations of each bank. For example, the serial number determination condition explained as the authentication condition 2026 in the present embodiment can also be used as the receiving condition 2021.

As explained above, according to the present embodiment, the bank 2051 that has received a request from the customer to exchange the damaged banknote 2100 with normal money can perform the receiving process at the teller window by using the valuable medium processing apparatus 2001. The valuable medium processing apparatus 2001 performs the determination on the receiving condition 2021 for the damaged banknote 2100, and if the damaged banknote 2100 obviously fails the exchange condition provided by the central bank, automatically determines this state and notifies it to the teller to prompt the teller to perform predetermined processes. Moreover, because the documents 2200 necessary for receiving the damaged banknote 2100 are automatically selected and output by the printer 2007 or 2042, the teller is not required to prepare for the processes by verifying the necessary documents 2200, and accordingly, the load on the teller for the processes can be reduced. The documents 2200 are printed in a state in which the information acquired from the ID card such as the driver's license received from the customer is included therein. The customer is required to perform the least operations including signing and affixing a seal, etc., and thereby the load on the customer for the operations can be reduced.

Moreover, in the valuable medium processing apparatus 2001, whether all the documents 2201 completely filled-in and sealed by the customer have been presented and whether no omission of entry or seals is included in each of the documents 2201 are automatically verified, and accordingly, the load on the teller for the verification operations can be reduced, and also lacking of necessary documents, and omission of entry or seals can be prevented, and thus the processes can be precisely performed.

In the valuable medium processing apparatus 2001, the damaged banknote image 2101 of the received damaged banknote 2100, the document images 2202 of the documents 2201 prepared for the exchange process of the damaged banknote 2100, and the receipt image 2302 of the receipt 2301 issued to the customer can be stored and managed on the memory unit 2020 in association with one another. Because the information for specifying the data of the damaged banknote 2100 is printed on the receipt 2303 to be finally issued to the customer as the barcode 2304, the damaged banknote image 2101, the document images 2202, and the like can be easily verified by reading the barcode 2304. Moreover, because the damaged banknote 2100, the documents 2201, and the receipt 2301 are stored as images, the information can be easily and precisely verified by displaying the images if the customer desires to verify any content later.

In the barcode 2304 printed on the receipt 2303, the encryption codes based on the management number are included to prevent forgery of the receipt 2303, and accordingly, the security for the receipt 2303 can be ensured.

### Third embodiment

Next, a third embodiment of the present invention will be explained with reference to the drawings. In the present embodiment, details of the transport support sheet used in processing valuable media and processes on valuable media such as checks and drafts for use in the valuable medium processing apparatus 500 illustrated in FIG. 1 will be explained.

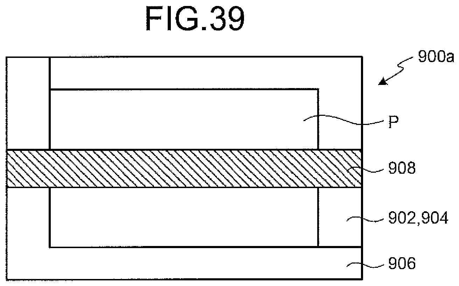

FIG. 39 illustrates another example of the transport support sheet described in the first embodiment with reference to FIGS. 16 and 17. In the transport support sheet 900a illustrated in FIG. 39, simple transparent films are used as the pair of sheets 902 and 904, and an IR cut film 908 (indicated as a diagonally shaded region in FIG. 39) is attached to either one of the sheets of the pair of sheets 902 and 904 so as to extend in the lateral direction. In the transport support sheet 900a illustrated in FIG. 39, the IR cut film 908 is provided only in a location that can be detected by the transport control sensor provided in the transporting unit 14. When the transport support sheet 900a illustrated in FIG. 39 is used, the transport control sensor provided in the transporting unit 14 can detect the IR cut film 908, and therefore troubles such as errors in branching between transport paths or jams that may occur while transporting the unfit banknote sandwiched in the transport support sheet 900a can be avoided.

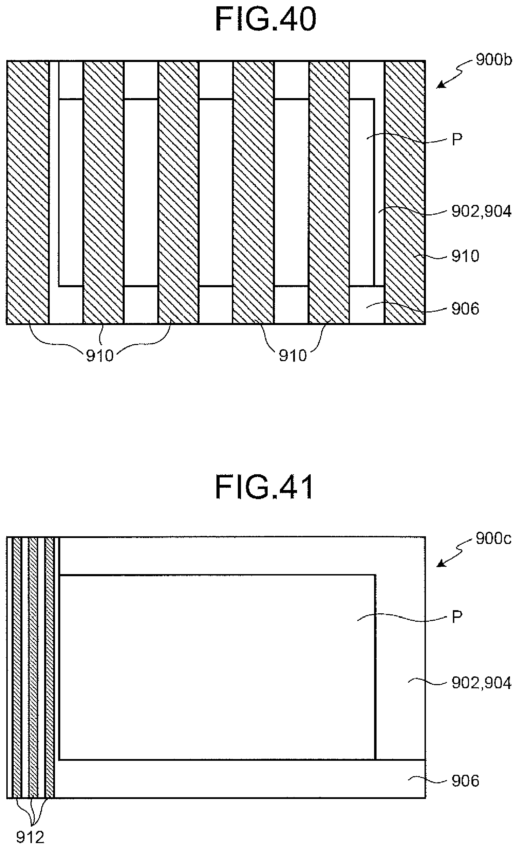

A another example of the transport support sheet will be explained with reference to FIGS. 40 and 41. In the transport support sheet 900b illustrated in FIG. 40, simple transparent films are used as the pair of sheets 902 and 904, and an IR cut film 910 (indicated as a diagonally shaded region in FIG. 40) is attached to either one of the sheets of the pair of sheets 902 and 904 so as to form a longitudinal pattern. In the transport support sheet 900c illustrated in FIG. 41, simple transparent films are used as the pair of sheets 902 and 904, and an IR cut film 912 (indicated as a diagonally shaded region in FIG. 41) is attached to either one of the sheets of the pair of sheets 902 and 904 in a leading portion of the attachment area 906 so as to form a longitudinal pattern. If the transport support sheet 900b and 900c illustrated in FIGS. 40 and 41 are used, by detecting the IR cut film 910 or 912 by using the transport control sensor provided in the transporting unit 14, troubles such as errors in branching between transport paths or jams that may occur while transporting the unfit banknote sandwiched in the transport support sheet 900b and 900c performed by using the transporting unit 14 can be overcome because the transport control sensor detects the IR cut film 910 or 912.

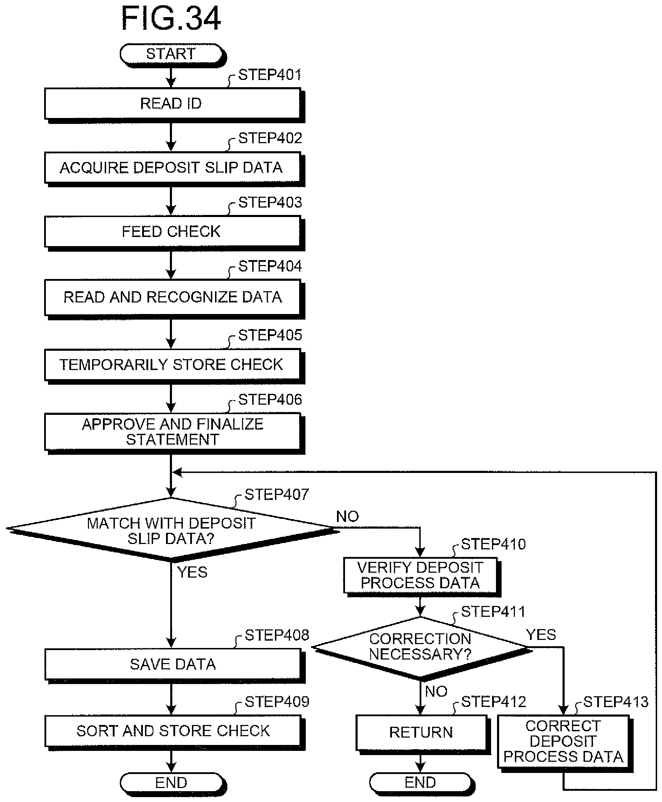

Next, an example of storing a check in the valuable medium processing apparatus 500 illustrated in FIG. 3 will be explained with reference to a flowchart illustrated in FIG. 34.

At the start of the process, the operator causes the ID card reader 810 to read his/her ID card (STEP 401). The control unit 800 verifies the authority and the like of the operator based on the ID information of the ID card read by the ID card reader 810. Then, the operator manually inputs data included in the deposit slip via the operation display unit 600 (STEP 402). Specifically, the operator inputs bank information included in the check (information indicating that which branch of which bank has drawn the check) and amount information, etc., via the operation display unit 600. Then, the operator deposits the check into the depositing unit 10, the feeding mechanism 12 feeds the check sheet by sheet into the apparatus body of the valuable medium processing apparatus 500 (STEP 403), and then the fed check is transported by the first transporting unit 14a of the transporting unit 14 inside the apparatus body. Then, an image of the check is captured by the imaging unit 16 to acquire image data of the check. The bank information and the amount information about the check are read and recognized based on the image data of the check (STEP 404). Then, the check is transported to the escrow unit 20 and temporarily stored in the escrow unit 20 (STEP 405).

After the check is stored in the escrow unit 20, the image data of the check and data of the check such as the bank information and the amount information are displayed on the operation display unit 600. The operator refers to the image data of the check and the data of the check such as the bank information and the amount information displayed on the operation display unit 600 and performs an approval operation for the check. If the check is approved, the statement of the check is finalized (STEP 406). Subsequently, the finalized statement of the check is collated with the deposit slip data to determine whether the finalized statement of the check matches the deposit slip data (STEP 407). If the finalized statement of the check matches the deposit slip data as a result of the collation (YES at STEP 407), information about the statement of the check is stored in the memory unit 808 of the money processing system 1 or the memory unit 82 of the valuable medium processing apparatus 500 (STEP 408). The check temporarily stored in the escrow unit 20 is transported by the first transporting unit 14a of the transporting unit 14 sheet by sheet and sorted and stored in the storage unit 30a, 30b, or 30c of the specific valuable-securities storage unit 30 (STEP 409).

On the other hand, if the finalized statement of the check does not match the deposit slip data as a result of the determination by collation, then the data of depositing process of the check is verified (STEP 410). The deposit process data of the check is verified by referring to the deposit process data of the check displayed on the operation display unit 600. If the deposit process data does not need to be corrected (NO at STEP 411), the check temporarily stored in the escrow unit 20 is determined not suitable for storage in the storage unit 30a, 30b, or 30c of the specific valuable-securities storage unit 30, and the check is returned to the outside of the apparatus after being transported by the first transporting unit 14a of the transporting unit 14 to the dispensing unit 60 (STEP 412). On the other hand, if the deposit process data of the check needs to be corrected (YES at STEP 411), the operator corrects the deposit process data via the operation display unit 600 (STEP 413), and the corrected deposit process data is displayed on the operation display unit 600. Thus, the operation for storing the check into the valuable medium processing apparatus 500 is completed.

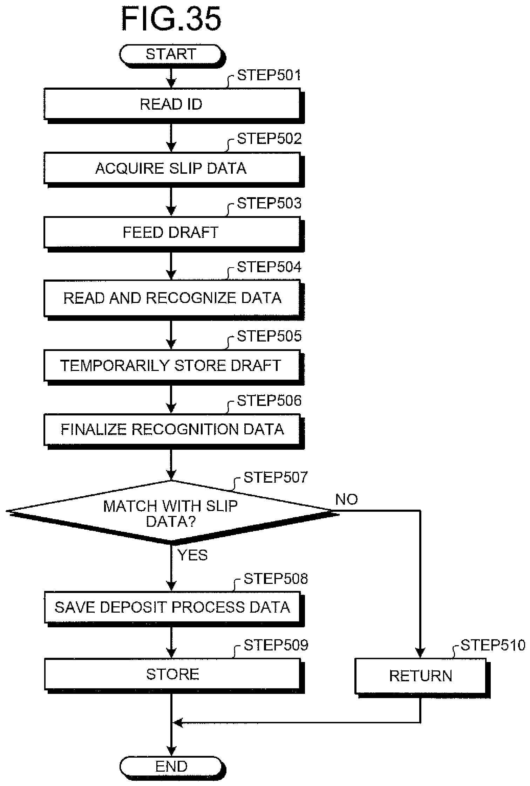

Next, an example of storing a draft in the valuable medium processing apparatus 500 illustrated in FIG. 3 will be explained with reference to a flowchart illustrated in FIG. 35.

At the start of the process, the operator causes the ID card reader 810 to read his/her ID card (STEP 501). The control unit 800 verifies the authority and the like of the operator based on the ID information of the ID card read by the ID card reader 810. Then, the operator manually inputs data included in the slip via the operation display unit 600 (STEP 502). Specifically, the operator inputs amount information and the like about the draft via the operation display unit 600. Then the operator deposits the draft into the depositing unit 10, the feeding mechanism 12 feeds the draft sheet by sheet into the apparatus body of the valuable medium processing apparatus 500 (STEP 503), and then the fed draft is transported by the first transporting unit 14a of the transporting unit 14 inside the apparatus body. Then, an image of the draft is captured by the imaging unit 16 to acquire image data of the draft. The amount information about the draft is read and recognized based on the image data of the draft (STEP 504). Then, the draft is transported to the escrow unit 20 and temporarily stored in the escrow unit 20 (STEP 505).

After the draft is stored in the escrow unit 20, the image data of the draft and data of the draft such as the amount information are displayed on the operation display unit 600. The operator refers to the image data of the draft and the data of the draft such as the amount information displayed on the operation display unit 600 and finalizes the recognition data of the draft (STEP 506). Subsequently, the finalized recognition data of the draft is collated with the slip data to determine whether the finalized recognition data of the draft matches the slip data (STEP 507). If the finalized recognition data of the draft matches the data on the slip as a result of the collation (YES at STEP 507), the deposit process data of the draft is stored in the memory unit 808 of the money processing system 1 or the memory unit 82 of the valuable medium processing apparatus 500 (STEP 508). The draft temporarily stored in the escrow unit 20 is transported by the first transporting unit 14a of the transporting unit 14, sheet by sheet, and sorted to be stored in the storage unit 30a, 30b, or 30c of the specific valuable-securities storage unit 30 (STEP 509).

On the other hand, if the finalized recognition data of the draft does not match the slip data as a result of the determination by collation, then the draft temporarily stored in the escrow unit 20 is determined not suitable for storage in the valuable medium processing apparatus 500, and the draft is returned to the outside of the apparatus after being transported by the first transporting unit 14a of the transporting unit 14 to the dispensing unit 60 (STEP 510). Thus, the operation for storing the draft into the valuable medium processing apparatus 500 is completed.

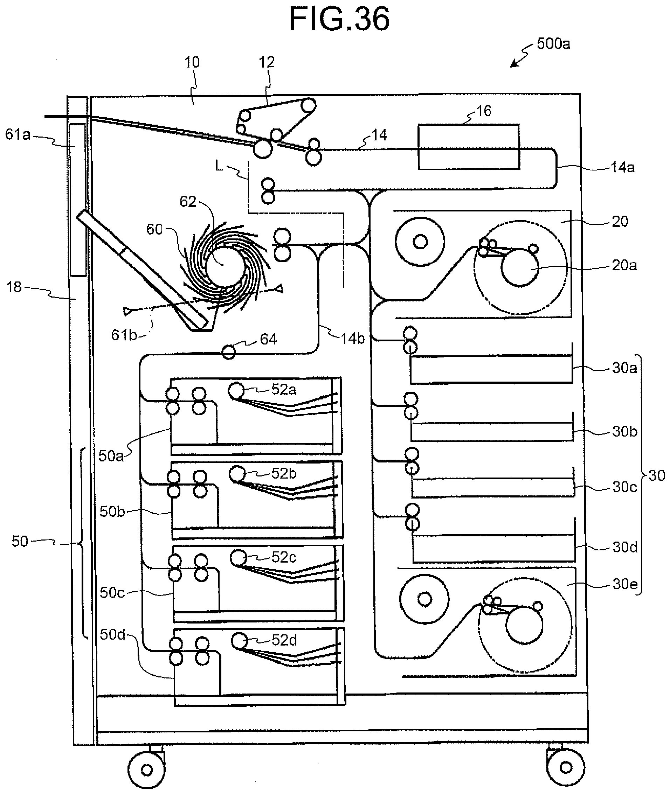

The valuable medium processing apparatus according to the first embodiment and the present embodiment is not limited to the configuration illustrated in FIG. 3. FIGS. 36 to 38 respectively illustrate an exemplary internal configuration of various valuable medium processing apparatuses according to modifications.

The unfit banknote storage units provided in the valuable medium processing apparatus 500 illustrated in FIG. 3 are not provided in a valuable medium processing apparatus 500a according to the modification illustrated in FIG. 36. The valuable medium processing apparatus 500a has a configuration in which only a specific valuable-securities storage unit and a new-banknote storage unit are provided inside the apparatus body as the storage units. More specifically, in the valuable medium processing apparatus 500a illustrated in FIG. 36, the unfit banknote storage units 40 and 42 provided in the valuable medium processing apparatus 500 illustrated in FIG. 3 are substituted with a fourth storage unit 30d for storing checks and the like (a stacker type storage unit) and a fifth storage unit 30e (a tape winding type storage unit), respectively. That is, the specific valuable-securities storage unit 30 includes the fourth storage unit 30d and the fifth storage unit 30e in addition to the first, second, third storage units 30a, 30b, and 30c.

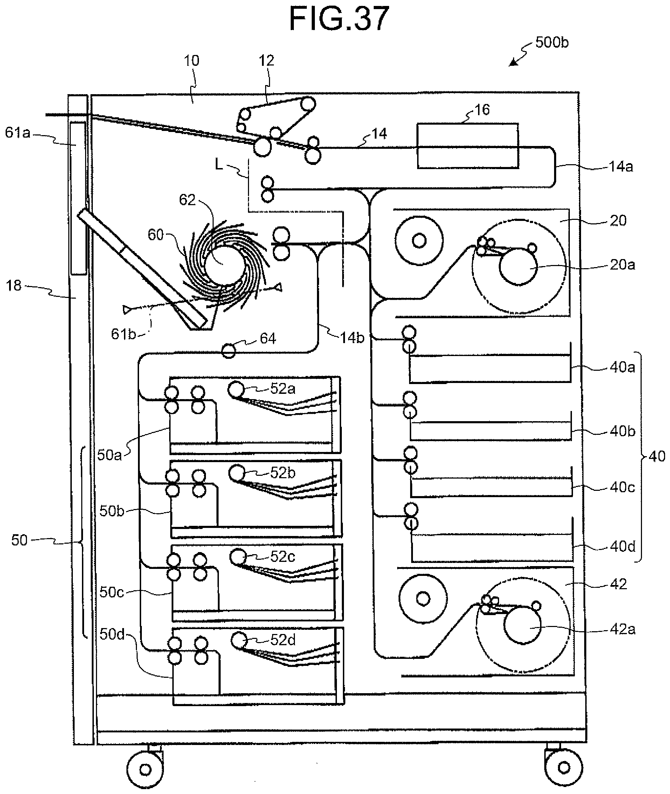

The specific valuable-securities storage unit provided in the valuable medium processing apparatus 500 illustrated in FIG. 3 is not provided in a valuable medium processing apparatus 500b according to another modification illustrated in FIG. 37. The valuable medium processing apparatus 500b has a configuration in which only unfit banknote storage units and a new-banknote storage unit are provided inside the apparatus body as the storage units. More specifically, in the valuable medium processing apparatus 500b illustrated in FIG. 37, the respective storage units 30a, 30b, and 30c of the specific valuable-securities storage unit 30 of the valuable medium processing apparatus 500 illustrated in FIG. 3 are substituted with a first storage unit 40a, a second storage unit 40b, and a third storage unit 40c for storing unfit banknotes or old version banknotes (each being a stacker type storage unit). That is, the unfit banknote storage unit 40 includes the first to the third storage units 40a to 40c in addition to the storage unit 40d (the fourth storage unit 40d) provided in the original configuration of the valuable medium processing apparatus 500 illustrated in FIG. 3.

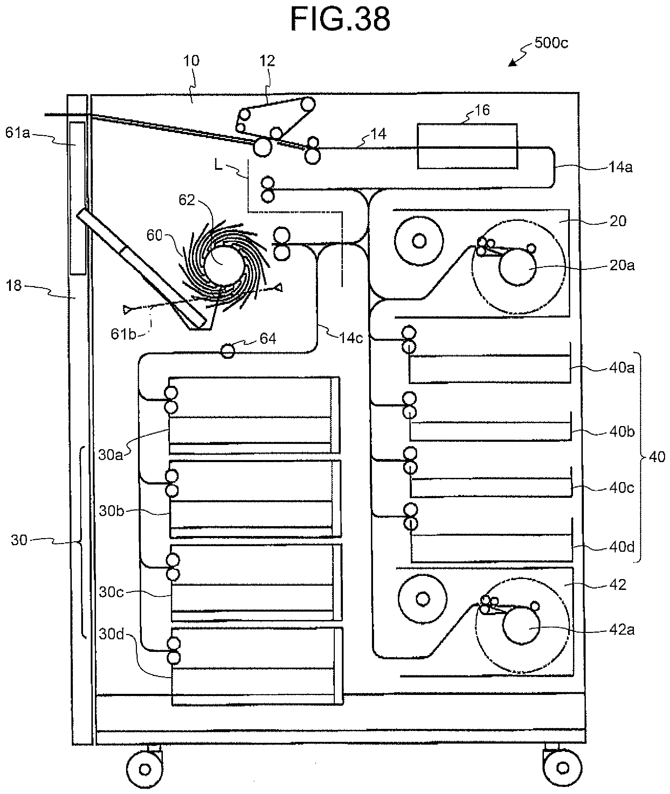

The new-banknote storage unit provided in the valuable medium processing apparatus 500 illustrated in FIG. 3 is not provided in a valuable medium processing apparatus 500c according to yet another modification illustrated in FIG. 38. The valuable medium processing apparatus 500c has a configuration in which only unfit banknote storage units and a specific valuable-securities storage unit are provided inside the apparatus body as the storage units. More specifically, in the valuable medium processing apparatus 500c illustrated in FIG. 38, the respective storage units 50a, 50b, 50c, and 50d of the new-banknote storage unit 50 of the valuable medium processing apparatus 500 illustrated in FIG. 3 are substituted with the first storage unit 30a, the second storage unit 30b, the third storage unit 30c, and the fourth storage unit 30d (each being a stacker type storage unit). That is, the specific valuable-securities storage unit 30 includes the first to the fourth storage units 30a to 30d. Moreover, in the valuable medium processing apparatus 500c illustrated in FIG. 38, the respective storage units 30a, 30b, and 30c of the specific valuable-securities storage unit 30 of the valuable medium processing apparatus 500 illustrated in FIG. 3 are substituted with the first storage unit 40a, the second storage unit 40b, and the third storage unit 40c for storing unfit banknotes or old version banknotes (each being a stacker type storage unit). Moreover, the unfit banknote storage unit 40 includes the first to third storage units 40a to 40c in addition to the storage unit 40d (the fourth storage unit 40d) provided in the original configuration of the valuable medium processing apparatus 500 illustrated in FIG. 3. Referring to FIG. 38, in the valuable medium processing apparatus 500c, the specific valuable-securities storage unit 30 is arranged inside the apparatus body at a location closer to the front of the apparatus body than the unfit banknote storage unit 40. Moreover, the second transporting unit 14b provided in the valuable medium processing apparatus 500 illustrated in FIG. 3 is not provided in the valuable medium processing apparatus 500c illustrated in FIG. 38, and instead, the transporting unit 14 for transporting the valuable medium inside the apparatus body includes the first transporting unit 14a for transporting unfit banknotes and old version banknotes among valuable media deposited by the depositing unit 10 into the apparatus body to the unfit banknote storage units 40, and a specific valuable-securities transporting unit 14c for transporting specific valuable-securities (checks, drafts, and the like) among valuable media deposited by the depositing unit 10 into the apparatus body to the specific valuable-securities storage unit 30.

With this configuration, according to the modification as illustrated in FIG. 38, the valuable medium processing apparatus 500c is provided which includes the depositing unit 10 for depositing valuable media into the apparatus body, the unfit banknote storage units 40 and 42 for storing the unfit banknotes and the old version banknotes, the specific valuable-securities storage unit 30 for storing specific valuable securities, the first transporting unit 14a for transporting the unfit banknotes and the old version banknotes among valuable media deposited by the depositing unit 10 into the apparatus body to the unfit banknote storage units 40 and 42, and the specific valuable-securities transporting unit 14c for transporting specific valuable-securities (checks, drafts, and the like) among valuable media deposited by the depositing unit 10 into the apparatus body to the specific valuable-securities storage unit 30. According to the valuable medium processing apparatus 500c having the above-described configuration, the unfit banknotes and the old version banknotes deposited into the apparatus body can be stored in the unfit banknote storage unit 40 and also the specific valuable securities deposited into the apparatus body can be stored in the specific valuable-securities storage unit 30, and accordingly, the configuration of the valuable medium processing apparatus 500c can be more compact than that in a case where a specific valuable securities depositing machine for depositing specific valuable securities is provided separately from a money processing apparatus for storing the unfit banknotes and the old version banknotes, and thus the installation space can be saved.

In the valuable medium processing apparatus 500c illustrated in FIG. 38, the unfit banknote storage units 40 and 42 are not limited to storage units for storing both the unfit banknotes and the old version banknotes. It is also possible in the valuable medium processing apparatus 500c to employ another configuration in which the unfit banknote storage units 40 and 42 respectively store either of the unfit banknotes or the old version banknotes. It is also possible in the valuable medium processing apparatus 500c to employ yet another configuration in which the stacker type unfit banknote storage unit 40 stores old version banknotes and the tape winding type unfit banknote storage unit 42 stores unfit banknotes.

### Fourth embodiment

Next, a fourth embodiment of the present invention will be explained. In the present embodiment, the collection process performed by the valuable medium processing apparatus 500 of the first embodiment will be explained in detail.

In the loose banknote handling apparatus 100, the banknotes are processed based on results of the recognition such as denomination recognition, fitness recognition, and the like by the recognition unit 102. Accordingly, the unfit banknote stored in the loose banknote handling apparatus 100 are the unfit banknotes that can be recognized by the recognition unit 102, i.e., mechanically receivable unfit banknotes. Specifically, unfit banknotes of which the kind of banknote (classification for identifying the types of the denomination and the version (new or old)) has been recognized by the recognition unit 102 but not suitable for market circulation due to the high degree of damages or stains thereof are stored in the loose banknote handling apparatus 100. On the other hand, unfit banknotes of which the kind of banknote and the like cannot be recognized by the recognition unit 102 due to the excessively high damages or stains, i.e., the unfit banknotes, which cannot be processed in a money processing apparatus, are discharged from the loose banknote handling apparatus 100 to be processed by the valuable medium processing apparatus 500 as explained above in the first embodiment. The collection of valuable media processed by and stored in the valuable medium processing apparatus 500 as explained above will be explained in detail below.

In the valuable medium processing apparatus 500, if an unfit banknote is newly deposited therein, whether the unfit banknote satisfies the previously set collection condition is determined, and if the collection condition are satisfied and the unfit banknotes are determined to be collected, this state is notified to the operator. This process is performed by the control unit 800 of the money processing system 1 or the control unit 80 of the valuable medium processing apparatus 500 after the operation for depositing the unfit banknote into the valuable medium processing apparatus 500 of the first embodiment illustrated in FIG. 10. This process will be explained below.

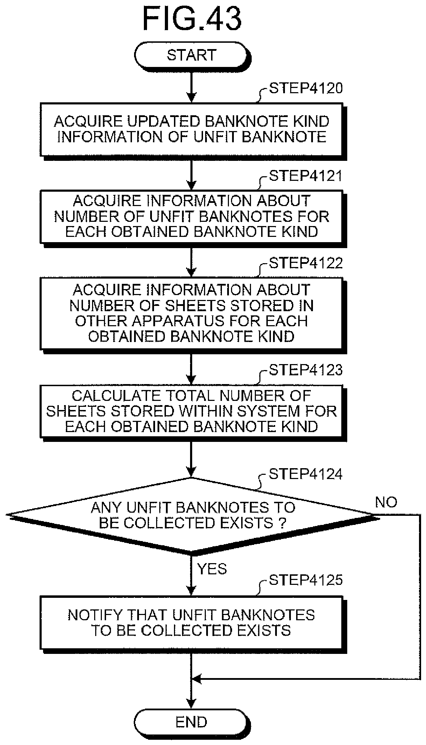

FIG. 43 is a flowchart illustrating an outline of a flow of the process for determining whether the collection condition is satisfied. After the deposit data of the unfit banknote has been finalized as illustrated in FIG. 10 and the finalized data are stored in the memory unit 808 of the money processing system 1 or the memory unit 82 of the valuable medium processing apparatus 500, the process illustrated in FIG. 43 is started. At the start of the process, information about the banknote kind of the unfit banknote newly deposited into the valuable medium processing apparatus 500 is acquired from the deposit data finalized by the process of depositing the unfit banknote into the valuable medium processing apparatus 500 (STEP 4120). Subsequently, data of the number of each kind of banknotes is acquired. Specifically, every time an unfit banknote is newly deposited into the valuable medium processing apparatus 500, the number of the deposited unfit banknotes are cumulatively added, and the data of the number of each kind of banknotes of the stored banknotes is loaded from the memory unit 808 and the memory unit 82 (STEP 4121). By performing this operation, the number of each kind of banknotes updated by the process of deposit to the valuable medium processing apparatus 500 is determined. The data of the number of sheets acquired by this process is data of the number of the unfit banknote in the repair unnecessary state described below. Specifically, the total number of the unfit banknotes having been already repaired for tear or the like and unfit banknotes that do not need repair is acquired as latest information about the collectable unfit banknotes.

Then, for the unfit banknotes of each kind of banknotes for which the information about the number of sheets has been updated in the valuable medium processing apparatus 500, information about the number of the unfit banknotes stored in the loose banknote handling apparatus 100 is acquired (STEP 4122). Subsequently, the total number of the unfit banknotes collectable from the valuable medium processing apparatus 500 and the unfit banknotes stored in the loose banknote handling apparatus 100 is calculated for each kind of banknotes (STEP 4123). Specifically, the total number of unfit banknotes collectable from the respective apparatuses included in the money processing system 1 is calculated by denominations.

Then, whether any collectable unfit banknote exists is determined (STEP 4124). The situation in which a collectable unfit banknote exists includes a case where the total number of unfit banknotes of the same kind stored in the entire money processing system 1 has reached a predetermined number previously set as the collection condition. Also, the situation includes a case where the time of storage, which is time period from when the first unfit banknote is stored in the money processing system 1, has reached a predetermined time previously set as the collection condition.

Specifically, if the collection condition has been set so that if the number of unfit banknotes of 10,000-yen E notes has reached 100 sheets, then the unfit banknotes are to be collected, it is determined that the collection condition is satisfied and the unfit banknotes are collectable if the total number of the 10,000-yen E notes stored in the valuable medium processing apparatus 500 and the number of 10,000-yen E notes stored in the loose banknote handling apparatus 100 has reached 100 sheets. Moreover, if the setting is set so that the unfit banknotes of 10,000-yen C notes are collected when the number of these banknotes has reached 50 sheets, the unfit banknotes are not collected while the total number has not reached 50 sheets yet. But, if one year is previously set as the time of storage that is time period from the start of storage of the first 10,000-yen C note in the collection condition and the time has elapsed one year, it is determined that the collection condition is satisfied and these unfit banknotes are collectable. The number of sheets and the time period used as the determination criteria can be set by denominations. Accordingly, for a kind of banknote of which the number of banknotes circulated among the market is small, the number of sheets used as the criterion can be set to be smaller than those for other kinds of banknote and the time period used as the criterion can be set longer than those for other kinds of banknote.

If any unfit banknote exists that satisfies the collection condition and thus determined collectable as a result of the determination (YES at STEP 4124), this result is notified to the operator by displaying information indicating so on the operation display unit 600 or by outputting predetermined sound (STEP 4125). On the other hand, if no collectable unfit banknote exists (NO at STEP 4124), the process ends. For the number of sheets to be stored, the number of sheets to be stored saved in the memory unit 808 and the memory unit 82 is updated based on the number of unfit banknotes remaining in the apparatus after the unfit banknotes are collected. If the unfit banknotes have not been collected, the currently recorded information about the number of sheets is maintained. For the starting point of calculation of the time period for the collection, because the unfit banknotes may not be collected in some cases although the operator has verified that the predetermined time period has elapsed, the starting point is updated to the date of actual collection if the unfit banknotes are collected, and on the other hand, if the unfit banknotes have not been collected, the starting point is updated to the date of the notification after the notification is finished due to elapse of predetermined time or by performing a predetermined operation.

In the present embodiment, the case is described in which unfit banknotes are deposited into the valuable medium processing apparatus 500 and the number of stored unfit banknotes is updated, however, the present embodiment is not limited to this, and the similar process can be performed when the number of unfit banknotes stored in the loose banknote handling apparatus 100 has been updated. In the present embodiment, the case is described in which the number of sheets is determined for the collectable unfit banknotes in the repair-unnecessary state originally not needing repair or formerly needing repair but then repaired to become collectable, however, the present embodiment is not limited to this. It is also possible to employ a configuration in which it is determined whether the total number of unfit banknotes including the repair-necessary state unfit banknotes has reached a predetermined number of sheets, and the determination result and information describing that the unfit banknotes would become collectable by repairing the repair-necessary state unfit banknotes are notified, for example.

The method of notifying the information about the collection of unfit banknotes is not limited to the above-described method. For example, another configuration can be employed in which the total number of currently stored unfit banknotes is always displayed on the screen of the operation display unit 600, and when a predetermined total number of sheets is reached, information describing that collectable unfit banknotes exist and describing the storage location of the collection target unfit banknotes, and the like, is displayed. Alternatively, information describing that only information to be notified exists is displayed in a corner of the screen while any other process is being performed and if the operator has performed a predetermined operation after verifying the information, information about the collectable unfit banknotes is displayed. It is also possible to employ a configuration of the display method in which information about the banknote kind of the unfit banknotes that have become collectable only is displayed or in which information about the number of each kind of banknotes is displayed. Further, a configuration can be employed in which the information is notified to the operator by displaying the same on the operation display unit 600, or alternatively, the information can be transmitted to a computer terminal or a mobile terminal of supervisors or the like to notify the information.

In the present embodiment, the numbers of sheets of unfit banknotes in both the valuable medium processing apparatus 500 and the loose banknote handling apparatus 100 are added together and the determination is performed based on the total number of the unfit banknotes, however, alternatively, the determination can also be performed based on the number of the unfit banknotes stored in either one of the valuable medium processing apparatus 500 and the loose banknote handling apparatus 100. Each of the above-described setting items can be arbitrarily set.

It is also possible, in the collection of the unfit banknotes, to set a priority order for apparatuses from which the unfit banknotes are to be collected. It is also possible to employ an exemplary configuration in which collection from the valuable medium processing apparatus 500 is prioritized, and only if the number of collectable unfit banknotes stored in the valuable medium processing apparatus 500 is less than a predetermined number of sheets previously set as the collection condition, the unfit banknotes in the number of sheets equivalent to the difference from the predetermined number of sheets are collected from the loose banknote handling apparatus 100. In this case, the process performed by the loose banknote handling apparatus 100 illustrated in FIG. 43 (STEPS 4122 and 4123) may be performed only if the unfit banknotes are to be collected from the loose banknote handling apparatus 100.

Specifically, if a predetermined number of unfit banknotes can be collected from the prioritized valuable medium processing apparatus 500, the process can be completed within a shorter time by omitting the processes performed by the loose banknote handling apparatus 100. Moreover, because the priority order can be arbitrarily set, the setting can be performed so as to prioritize the collection of the unfit banknotes from the loose banknote handling apparatus 100 to the collection from the valuable medium processing apparatus 500, for example. Specifically, in this case, the number of sheets of unfit banknotes stored in the loose banknote handling apparatus 100 and collectable therefrom is previously verified, and only when the number of the unfit banknotes is less than a predetermined number of sheets set as the collection condition, the number of the unfit banknotes stored in the valuable medium processing apparatus 500 and collectable therefrom is verified and the unfit banknotes are collected if the total number thereof satisfies the collection condition. By performing the above-described setting, if it is desired to allow only a least possible number of unfit banknotes to remain in the loose banknote handling apparatus 100 after the collection, for example, the unfit banknotes stored in the loose banknote handling apparatus 100 can be preferentially collected.

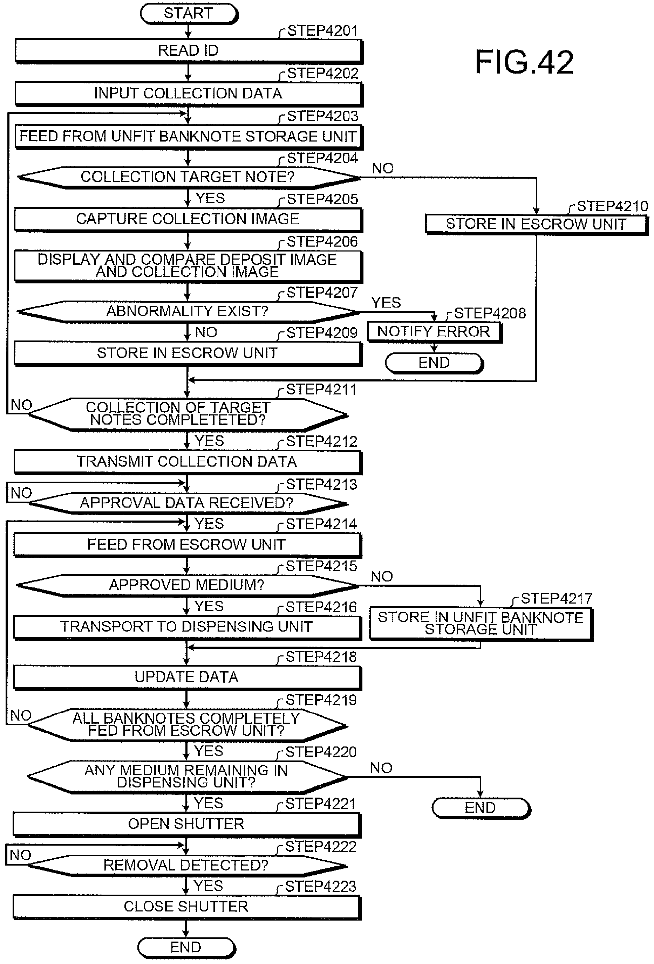

Next, a flow of the collection process for collecting unfit banknotes and old version banknotes from the valuable medium processing apparatus 500 will be explained with reference to a flowchart of FIG. 42. In the process for collecting the unfit banknotes and the old version banknotes from the valuable medium processing apparatus 500, the unfit banknotes and the old version banknotes stored in the tape winding type unfit banknote storage unit 42, of the two unfit banknote storage units 40 and 42, are collected, and this process will be explained below later.

At the start of the process, the operator causes the ID card reader 810 to read his/her ID card (STEP 4201). The control unit 800 verifies the authority and the like of the operator based on the ID information of the ID card read by the ID card reader 810. Then, the operator manually inputs collection data via the operation display unit 600 (STEP 4202). The collection data can be image data of the unfit banknotes and the old version banknotes stored in the tape winding type unfit banknote storage unit 42, or alternatively, the collection data can be information about the number of the banknotes to be collected or the number of sheets thereof by denominations (e.g., information describing the collection of 30 sheets of 1,000-yen D notes). The acquisition of image data and the input of the values for the collection data will be explained in detail below later.

After the collection data are input, the unfit banknotes and the old version banknotes are fed sheet by sheet from the unfit banknote storage unit 42 to the first transporting unit 14a of the transporting unit 14 (STEP 4203). If the unfit banknotes and the old version banknotes fed from the unfit banknote storage unit 42 are collection target banknotes (YES at STEP 4204), the imaging unit 16 acquires image data (collection images) of the collection target unfit banknotes and the old version banknotes (STEP 4205). Then, the image data acquired in the depositing process (deposit images) illustrated in FIG. 10 and the collection target image data are displayed for comparison (STEP 4206). Subsequently, whether any abnormality exists in the comparison result is determined (STEP 4207). If any abnormality exists (YES at STEP 4207), the abnormality is notified as an error (STEP 4208). On the other hand, if no abnormality exists (NO at STEP 4207), the unfit banknotes and the old version banknotes to be collected are stored in the escrow unit 20 (STEP 4209).

The steps from the acquisition of the collection images of the collection target unfit banknotes to the determination as to whether any abnormality exists performed by comparing the collection images with the deposit images (STEPS 4205 to 4208) are performed to verify that the collection target unfit banknotes and old version banknotes are to be actually collected. The banknotes stored in the tape winding type unfit banknote storage unit 42 are managed based on the order the banknotes were stored. Accordingly, if a jam or the like has occurred and thus the banknotes having been actually fed from the unfit banknote storage unit 42 do not match the managed data, the collection target banknotes cannot be precisely dispensed. To prevent this, the deposit images, which are the images of the banknotes to be fed from the unfit banknote storage unit 42, and the collection images, which are the images of the actually fed banknotes, are compared to verify that they match one another. These determination steps are automatically performed by using an image matching technique, however, alternatively, the determination steps can be performed by visual verification by the operator. If the images do not match one another and thus it is determined that an error exists, and the error has been notified (STEP 4208), another process for maintaining integrity among them by verifying the deposit images and the banknotes stored in the unfit banknote storage unit 42 is performed.

If the unfit banknotes and the old version banknotes fed from the unfit banknote storage unit 42 are not collection target notes (NO at STEP 4204), these banknotes are stored in the escrow unit 20 (STEP 4210). Then whether all the collection target banknotes have been collected is determined (STEP 4211). If all the collection target banknotes have not been collected yet (NO at STEP 4211), the process returns to STEP 4203 and a next operation for feeding the unfit banknotes and the old version banknotes is performed. On the other hand, if all the collection target banknotes have been collected (YES at STEP 4211), the collection data is transmitted to a computer terminal or a mobile terminal of a manager to obtain approval of the manager for the collection of the banknotes (STEP 4212). Subsequently, whether a result of request for approval of the manager has been obtained is determined (STEP 4213), and the process is suspended until the result of request of approval is obtained (NO at STEP 4213).

If the result of request of approval of the manager is obtained (YES at STEP 4213), a banknote moving process for feeding the banknotes from the escrow unit 20 is started (STEP 4214). If the collection process has been approved by the manager, the banknotes stored in the escrow unit 20 are classified into approved media including collection process target banknotes and non-approved media including collection process non-target banknotes. On the other hand, if the collection process has not been approved by the manager, all the banknotes stored in the escrow unit 20 are classified as non-approved media.

When the banknotes are fed from the escrow unit 20, whether the banknotes are approved media is determined (STEP 4215). If the banknotes are approved media (YES at STEP 4215), the banknotes are transported to the dispensing unit 60 to be stacked there (STEP 4216). On the other hand, if the banknotes are not approved media and are non-approved media (NO at STEP 4215), the banknotes are transported to the unfit banknote storage unit 42 to be stored there (STEP 4217). In this process, in the memory unit 808 and the memory unit 82, the data of the unfit banknotes and the old version banknotes stored in the unfit banknote storage unit 42 are updated (STEP 4218). The process for transporting the approved media to the dispensing unit 60 and returning the non-approved media to the unfit banknote storage unit 42 is repeated until all the banknotes stored in the escrow unit 20 are fed (NO at STEP 4219).

If all the banknotes have been fed from the escrow unit 20 (YES at STEP 4219), whether any collection target medium exists in the dispensing unit 60 is determined (STEP 4220). In this process, if the manager has previously approved the collection process, the collection target banknotes are stacked in the dispensing unit 60, and if the collection process has not been approved, no collection target banknote exists in the dispensing unit 60. If no such medium exists in the dispensing unit 60 (NO at STEP 4220), the banknotes stored in the escrow unit 20 are returned to the unfit banknote storage unit 42 and the process ends in this state, and accordingly, the unfit banknotes are not collected.

On the other hand, if any collection target banknote exists in the dispensing unit 60 (YES at STEP 4220), the shutter 61a provided in the dispensing unit 60 is opened (STEP 4221), and it becomes possible to remove the collection banknotes from the dispensing unit 60. If the operator has collected the unfit banknotes from the dispensing unit 60 and if this state is detected by the removal detection unit 61b included in the dispensing unit 60 (YES at STEP 4222), the shutter 61a is closed (STEP 4223).

As explained above, according to the present embodiment, in collecting unfit banknotes, the unfit banknotes are determined to be collectable if either of the collection condition as to whether a predetermined number of sheets has been reached and whether a predetermined time period has elapsed is satisfied, and the result of this determination can be notified. Moreover, the determination criteria including the number of sheets and the time period can be set by kinds of banknotes. Accordingly, the timing of collecting unfit banknotes can be flexibly set according to the circulation in the market and operations of banks and the like using the money processing system 1. If any collectable unfit banknote exists, this state is automatically determined and notified, and accordingly, it is not required to verify whether any collectable unfit banknote exists. For the banknote kind of banknotes with a small circulation in the market, the notification is performed when a predetermined time period has elapsed even if the predetermined number of sheets is reached, and accordingly, it can be examined whether to collect such banknotes or not. In this case, even if it has been determined not to collect the banknotes, the notification is performed when a predetermined time period has elapsed again from the date of notification set as the starting point, and accordingly, the threat of forgetting about the unfit banknotes stored inside the apparatus and leaving the unfit banknotes uncollected can be prevented.

### INDUSTRIAL APPLICABILITY

As explained above, the present invention is useful for use in financial institutions in efficiently processing valuable media including damaged valuable media.

### EXPLANATIONS OF LETTERS OR NUMERALS

- 1, 2005: Money processing system
- 10: Depositing unit
- 12, 52a to 52d: Feeding mechanism
- 14: Transporting unit
- 16: Imaging unit
- 20: Escrow unit
- 20a, 42a: Drum
- 30: Specific valuable-securities storage unit
- 40, 42: Unfit banknote storage unit
- 50: New version banknote storage unit
- 60: Dispensing unit
- 61a: Shutter
- 61b: Extraction detection unit
- 64: Simple recognition unit
- 80, 800, 2010: Control unit
- 82, 808, 2020: Memory unit
- 84, 802: Communication unit
- 85: Banknote kind receiving unit
- 86: Value receiving unit
- 87: Output unit
- 88: Calculation unit
- 89: Determination unit
- 90: Selection unit
- 92: Unfit banknote state receiving unit
- 93: Setting unit
- 95: Deposit data generation unit
- 96: Banknote information receiving unit
- 100: Loose banknote handling apparatus
- 102: Recognition unit
- 200: Banknote bundle handling apparatus
- 300: Loose coin handling apparatus
- 400: Coin package handling apparatus
- 500, 500a to 500c, 2001: Valuable medium processing apparatus
- 600, 2040: Operation display unit
- 700, 2007, 2042: Printer
- 810: ID card reader
- 820: Completion command receiving unit
- 822: Permission command receiving unit
- 900, 900a to 900c: Transport support sheets
- 902, 904: Pair of sheets
- 906: Attachment area
- 908, 910, 912: IR cut film
- 1000: Medium positioning device
- 1001: Stage
- 2002: Banknote handling apparatus
- 2003: Coin handling apparatus
- 2004: Check/draft handling apparatus
- 2006: Server
- 2008: Scanner
- 2009: Teller window terminal
- 2011: Image acquiring unit
- 2012: Paper sheet recognition unit
- 2013: Condition determination unit
- 2014: Document selection unit
- 2015: Data management unit
- 2030: Paper sheet transporting/storing unit
- 2031: Entry-complete document storage unit
- 2032: Damaged banknote storage unit
- 2033: Repaired damaged banknote storage unit
- 2041: Communication interface
- 2050: Network
- 2100, 2103: Damaged banknote
- 2200,2201: Documents
- 2300, 2302, 2303: Receipt

## Claims

1. A banknote processing apparatus (500) comprising:
a depositing unit (10) configured to deposit a banknote being an unfit banknote or an old version banknote into the banknote processing apparatus (500);
an imaging unit (16) configured to capture an image of the unfit banknote deposited from the depositing unit (10);
a memory unit (82) configured to store therein the image data;
a banknote state receiving unit (92) configured to receive information on a state of the unfit banknote, wherein the state of the unfit banknote includes a repair-necessary state in which repair of the unfit banknote is required and a repair-unnecessary state in which repair of the unfit banknote is not required; and
a plurality of storage units (40, 42) for storing unfit banknotes and old banknotes, the storage units (40, 42) including a stacker type storage unit (40) and a tape winding type storage unit (42), wherein
if the imaging unit (16) detects that the unfit banknote is sandwiched and held in a pair of sheets (902 and 904) constituting a transport support sheet (900), based on the captured image of the unfit banknote, information describing that the unfit banknote is in the repair-necessary state is received by the banknote state receiving unit (92), and
if the state of the unfit banknote is the repair-necessary state, the unfit banknote is stored in the stacker type storage unit (40),
if no transport support sheet (900) holds the banknote deposited from the depositing unit (10), the repair-unnecessary state indicating that the deposited banknote does not need repair is received by the banknote state receiving unit (92), and
if the state of the unfit banknote is the repair-unnecessary state, the unfit banknote is stored in the tape winding type storage unit (42).

2. The banknote processing apparatus (500) according to Claim 1, wherein the repair-necessary banknote is a torn or partially lost banknote.

3. The banknote processing apparatus (500) according to Claim 1 further comprising:
a banknote kind receiving unit (85) configured to receive, when receiving from the depositing unit (10) a banknote that is rejected from another apparatus, input of a kind of the banknote; and
a control unit (80) configured to manage the number of banknotes stored in the plurality of storage unit (40, 42) based on the input received by the banknote kind receiving unit (85) for each kind, determine whether the number of banknotes stored in the plurality of storage unit (40, 42) for each kind satisfies a collection condition previously set as a condition for collecting the banknotes from the banknote processing apparatus (500), and when there are the banknotes that satisfy the collection condition, notify that the banknotes satisfying the collection condition exists.

4. The banknote processing apparatus (500) according to Claim 3, wherein the number of banknotes of each kind to be collected from the banknote processing apparatus (500) is set in the collection condition.

5. The banknote processing apparatus (500) according to Claim 3, further comprising
a communication unit (84) configured to receive the number of banknotes for each kind, the banknotes having been rejected from another apparatus and stored in an external apparatus,
wherein, the control unit (80) is configured to determine whether the banknotes satisfy the collection condition based on a total number including the number of banknotes stored in the plurality storage unit (40, 42) and the number of banknotes received by the communication unit (84) .

6. The banknote processing apparatus (500) according to Claim 1, wherein
the depositing unit (10) is configured to deposit a banknote sandwiched in a transport support sheet (900), the imaging unit (16) is configured to capture an image of the banknote sandwiched in the transport support sheet (900) .

7. The banknote processing apparatus (500) according to Claim 1, further comprising:
a control unit (80) configured to control components of the banknote processing apparatus (500);
a banknote kind receiving unit (85) configured to receive a denomination and a time of issuance of the unfit banknote captured by the image unit (6);
a value receiving unit (86) configured to receive the value of the unfit banknote captured by the image unit (6);
an output unit (87) configured to output support information for supporting an operator in performing a process of determining the value of the unfit banknote captured by the image unit (6);
a calculation unit (88) connected to the control unit (80) and configured to calculate a ratio of the valid or invalid area of the unfit banknote in the image data of the unfit banknote acquired by the imaging unit (16) to the entire area of an undamaged banknote.

## Patentansprüche

1. Banknotenverarbeitungsvorrichtung (500) mit:
einer Einlegungseinheit (10), die konfiguriert ist, um eine Banknote, die eine ungeeignete Banknote oder eine alte Version einer Banknote ist, in die Banknotenverarbeitungsvorrichtung (500) einzulegen;
einer Bildgebungseinheit (16), die konfiguriert ist, um ein Bild der von der Einlegungseinheit (10) eingelegten, ungeeigneten Banknote aufzunehmen;
einer Speichereinheit (82), die konfiguriert ist, um die Bilddaten darin zu speichern;
einer Banknotenzustands-Empfangseinheit (92), die konfiguriert ist, um Informationen über einen Zustand der ungeeigneten Banknote zu empfangen, wobei der Zustand der ungeeigneten Banknote einen reparaturbedürftigen Zustand, in dem eine Reparatur der ungeeigneten Banknote erforderlich ist, und einen nicht-reparaturbedürftigen Zustand umfasst, in dem eine Reparatur der ungeeigneten Banknote nicht erforderlich ist; und
einer Vielzahl von Lagereinheiten (40, 42) zum Lagern von ungeeigneten Banknoten und alten Banknoten, wobei die Lagereinheiten (40, 42) eine Lagereinheit (40) vom Stapeltyp und eine Lagereinheit (42) vom Bandwickeltyp umfassen, wobei
wenn die Bildgebungseinheit (16) basierend auf dem aufgenommenen Bild der ungeeigneten Banknote erkennt, dass die ungeeignete Banknote eingeklemmt und in einem Paar Blätter (902 und 904) gehalten wird, die einen Transportträgerbogen (900) bilden, Informationen, die beschreiben, dass die ungeeignete Banknote sich im reparaturbedürftigen Zustand befindet, von der Banknotenzustands-Empfangseinheit (92) empfangen werden, und
wenn der Zustand der ungeeigneten Banknote der reparaturbedürftige Zustand ist, die ungeeignete Banknote in der Stapel-Lagereinheit (40) aufbewahrt wird,
wenn kein Transportträgerbogen (900) die von der Einlegungseinheit (10) eingelegte Banknote hält, der nicht-reparaturbedürftige Zustand, der angibt, dass die eingelegte Banknote keine Reparatur benötigt, von der Banknotenzustands-Empfangseinheit (92) empfangen wird, und
wenn der Zustand der ungeeigneten Banknote der nicht-reparaturbedürftige Zustand ist, die ungeeignete Banknote in der Speichereinheit (42) vom Bandwickeltyp gespeichert wird.

2. Banknotenverarbeitungsvorrichtung (500) nach Anspruch 1, wobei die reparaturbedürftige Banknote eine zerrissene oder teilweise verlorene Banknote ist.

3. Banknotenverarbeitungsvorrichtung (500) nach Anspruch 1, ferner mit:
einer Banknotenart-Empfangseinheit (85), die so konfiguriert ist, dass sie beim Empfangen einer Banknote, die von einer anderen Vorrichtung zurückgewiesen wird, von der Einlegungseinheit (10) eine Eingabe einer Art der Banknote empfängt; und
einer Steuereinheit (80), die dazu konfiguriert ist, die Anzahl von Banknoten, die in den mehreren Speichereinheiten (40, 42) gespeichert sind, basierend auf der von der Banknotenart-Empfangseinheit (85) empfangenen Eingabe für jede Art zu verwalten, zu bestimmen, ob die Anzahl von gespeicherten Banknoten, die in der Vielzahl von Speichereinheiten (40, 42) für jede Art gespeichert sind, eine Sammelbedingung erfüllt, die zuvor als eine Bedingung zum Sammeln der Banknoten von der Banknotenverarbeitungsvorrichtung (500) eingestellt wurde, und, wenn Banknoten vorhanden sind, die die Sammelbedingung erfüllen, zu melden, dass die Banknoten, die die Sammelbedingung erfüllen, vorhanden sind.

4. Banknotenverarbeitungsvorrichtung (500) nach Anspruch 3, wobei die Anzahl von Banknoten jeder Art, die von der Banknotenverarbeitungsvorrichtung (500) gesammelt werden sollen, in der Sammelbedingung eingestellt wird.

5. Banknotenverarbeitungsvorrichtung (500) nach Anspruch 3, ferner mit:
einer Kommunikationseinheit (84), die konfiguriert ist, um die Anzahl von Banknoten für jede Art zu empfangen, wobei die Banknoten von einem anderen Gerät zurückgewiesen und in einem externen Gerät gespeichert wurden,
wobei die Steuereinheit (80) konfiguriert ist, um zu bestimmen, ob die Banknoten die Sammelbedingung erfüllen, basierend auf einer Gesamtzahl einschließlich der Anzahl von Banknoten, die in der Vielzahl von Speichereinheiten (40, 42) gespeichert sind, und der Anzahl von Banknoten, die von der Kommunikationseinheit (84) empfangen werden.

6. Banknotenverarbeitungsvorrichtung (500) nach Anspruch 1, wobei
die Einlegungseinheit (10) konfiguriert ist, um eine Banknote einzulegen, die in einem Transportträgerbogen (900) eingeschlossen ist,
die Bildgebungseinheit (16) konfiguriert ist, um ein Bild der Banknote aufzunehmen, die in dem Transportträgerbogen (900) eingeschlossen ist.

7. Banknotenverarbeitungsvorrichtung (500) nach Anspruch 1, ferner mit:
einer Steuereinheit (80), die konfiguriert ist, um Komponenten der Banknotenverarbeitungsvorrichtung (500) zu steuern;
einer Banknotenart-Empfangseinheit (85), die so konfiguriert ist, dass sie einen Nennwert und einen Ausgabezeitpunkt der von der Bildeinheit (6) erfassten, ungeeigneten Banknote empfängt;
einer Wertempfangseinheit (86), die so konfiguriert ist, dass sie den von der Bildeinheit (6) erfassten Wert der ungeeigneten Banknote empfängt;
einer Ausgabeeinheit (87), die so konfiguriert ist, dass sie Unterstützungsinformationen ausgibt, um eine Bedienungsperson bei der Durchführung eines Prozesses zum Bestimmen des Wertes der von der Bildeinheit (6) erfassten, ungeeigneten Banknote zu unterstützen;
einer Berechnungseinheit (88), die mit der Steuereinheit (80) verbunden ist und konfiguriert ist, um ein Verhältnis der gültigen oder ungültigen Fläche der ungeeigneten Banknote in den von der Bildgebungseinheit (16) erfassten Bilddaten der ungeeigneten Banknote zu der gesamten Fläche einer unbeschädigten Banknote zu berechnen.

## Revendications

1. Appareil de traitement de billets de banque (500) comprenant :
une unité de dépôt (10) configurée pour déposer un billet de banque étant un billet de banque impropre ou un billet de banque d'ancienne version dans l'appareil de traitement de billets de banque (500) ;
une unité d'imagerie (16) configurée pour capturer une image du billet de banque impropre déposé depuis l'unité de dépôt (10) ;
une unité de mémoire (82) configurée pour y stocker les données d'image ;
une unité de réception d'état de billet de banque (92) configurée pour recevoir des informations sur un état du billet de banque impropre, dans lequel l'état du billet de banque impropre comprend un état de réparation nécessaire dans lequel la réparation du billet de banque impropre est requise et un état de réparation inutile dans lequel la réparation du billet impropre n'est pas requise ; et
une pluralité d'unités de stockage (40, 42) pour stocker des billets de banque impropres et des billets de banque anciens, les unités de stockage (40, 42) comprenant une unité de stockage de type empileur (40) et une unité de stockage de type à enroulement de bande (42), dans lequel
si l'unité d'imagerie (16) détecte que le billet impropre est pris en sandwich et maintenu dans une paire de feuilles (902 et 904) constituant une feuille de support de transport (900), sur la base de l'image capturée du billet impropre, des informations décrivant que le billet impropre est dans l'état de réparation nécessaire sont reçues par l'unité de réception d'état de billets de banque (92), et
si l'état du billet de banque impropre est l'état de réparation nécessaire, le billet de banque impropre est stocké dans l'unité de stockage de type empileur (40),
si aucune feuille de support de transport (900) ne contient le billet de banque déposé depuis l'unité de dépôt (10), l'état de réparation inutile indiquant que le billet de banque déposé n'a pas besoin de réparation est reçu par l'unité de réception d'état de billet de banque (92), et
si l'état du le billet de banque impropre est l'état de réparation inutile, le billet de banque impropre est stocké dans l'unité de stockage de type à enroulement de bande (42).

2. Appareil de traitement de billets de banque (500) selon la revendication 1, dans lequel le billet de banque nécessitant la réparation est un billet de banque déchiré ou partiellement perdu.

3. Appareil de traitement de billets de banque (500) selon la revendication 1, comprenant en outre :
une unité de réception de type de billet de banque (85) configurée pour recevoir, lors de la réception à partir de l'unité de dépôt (10) d'un billet de banque qui est rejeté d'un autre appareil, une entrée d'un type du billet de banque ; et
une unité de commande (80) configurée pour gérer le nombre de billets stockés dans la pluralité d'unités de stockage (40, 42) sur la base de l'entrée reçue par l'unité de réception de type de billet (85) pour chaque type, déterminer si le nombre de billets stockées dans la pluralité d'unités de stockage (40, 42) pour chaque type satisfait à une condition de collecte préalablement définie comme condition de collecte des billets à partir de l'appareil de traitement de billets (500), et lorsqu'il y a les billets qui satisfont à la condition de collecte, notifier que les billets satisfaisant la condition de collecte existent.

4. Appareil de traitement de billets de banque (500) selon la revendication 3, dans lequel le nombre de billets de banque de chaque type à collecter à partir de l'appareil de traitement de billets de banque (500) est défini dans la condition de collecte.

5. Appareil de traitement de billets (500) selon la revendication 3, comprenant en outre
une unité de communication (84) configurée pour recevoir le nombre de billets de chaque type, les billets ayant été rejetés d'un autre appareil et stockés dans un appareil externe,
dans lequel, l'unité de commande (80) est configurée pour déterminer si les billets satisfont à la condition de collecte sur la base d'un nombre total comprenant le nombre de billets stockés dans la pluralité d'unités de stockage de (40, 42) et le nombre de billets reçus par l'unité de communication (84).

6. Appareil de traitement de billets de banque (500) selon la revendication 1, dans lequel
l'unité de dépôt (10) est configurée pour déposer un billet de banque pris en sandwich dans une feuille de support de transport (900), l'unité d'imagerie (16) est configurée pour capturer une image du billet pris en sandwich dans la feuille de support de transport (900).

7. Appareil de traitement de billets de banque (500) selon la revendication 1, comprenant en outre :
une unité de commande (80) configurée pour commander des composants de l'appareil de traitement de billets de banque (500) ;
une unité de réception de type de billet de banque (85) configurée pour recevoir une dénomination et un temps d'émission du billet de banque impropre capturé par l'unité d'image (6) ;
une unité de réception de valeur (86) configurée pour recevoir la valeur du billet de banque impropre capturée par l'unité d'image (6) ;
une unité de sortie (87) configurée pour sortir des informations d'assistance pour assister un opérateur dans l'exécution d'un processus de détermination de la valeur du billet de banque impropre capturé par l'unité d'image (6) ;
une unité de calcul (88) connectée à l'unité de commande (80) et configurée pour calculer un rapport de la zone valide ou invalide du billet de banque impropre dans les données d'image du billet de banque impropre acquises par l'unité d'imagerie (16) par rapport à la zone entière d'un billet de banque non endommagé.
